(19) Europäisches Patentamt
European Patent Office
Office européen des brevets

(11) EP 2 053 091 A1

(12) **EUROPEAN PATENT APPLICATION**
published in accordance with Art. 153(4) EPC

(43) Date of publication:
**29.04.2009 Bulletin 2009/18**

(21) Application number: **07791796.1**

(22) Date of filing: **26.07.2007**

(51) Int Cl.:
***C08L 67/04*** *(2006.01)* ***C08K 3/34*** *(2006.01)*
***C08K 5/315*** *(2006.01)* ***C08K 5/51*** *(2006.01)*
***C08K 5/527*** *(2006.01)* ***C08L 67/02*** *(2006.01)*
***C08L 101/16*** *(2006.01)*

(86) International application number:
**PCT/JP2007/065116**

(87) International publication number:
**WO 2008/013316 (31.01.2008 Gazette 2008/05)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **28.07.2006 JP 2006206184**

(71) Applicants:
- **TEIJIN LIMITED**
  **Osaka-shi, Osaka 541-0054 (JP)**
- **Teijin Chemicals, Ltd.**
  **Chiyoda-ku**
  **Tokyo 100-0013 (JP)**

(72) Inventors:
- **TOYOHARA, Kiyotsuna**
  **Iwakuni-shi**
  **Yamaguchi 740-0014 (JP)**
- **MATSUDA, Takaaki**
  **Iwakuni-shi**
  **Yamaguchi 740-0014 (JP)**
- **INO, Keiichiro**
  **Tokyo 100-0013 (JP)**
- **MATSUNO, Yuichi**
  **Tokyo 100-0013 (JP)**
- **KONDO, Fumitaka**
  **Tokyo 100-0013 (JP)**
- **ODA, Jitsuo**
  **Tokyo 100-0013 (JP)**

(74) Representative: **Hallybone, Huw George**
**Carpmaels & Ransford**
**43-45 Bloomsbury Square**
**London WC1A 2RA (GB)**

(54) **RESIN COMPOSITION, METHOD FOR PRODUCING THE SAME AND MOLDED ARTICLE**

(57) To provide a resin composition having high heat resistance with a high melting point and excellent melt stability and hydrolysis resistance, a molded article of the resin composition and a method of manufacturing the resin composition; the resin composition comprises an aromatic polyester (component A) having a butylene terephthalate skeleton as the main constituent unit and polylactic acid (component B) having a melting point of 190˚C or higher.



Printed by Jouve, 75001 PARIS (FR)

## Description

TECHNICAL FIELD

The present invention relates to a resin composition which comprises an aromatic polyester (component A) and polylactic acid (component B) and has excellent heat resistance and hydrolysis resistance. The present invention also relates to a molded article made of the resin composition. The present invention further relates to the manufacturing method of the resin composition.

BACKGROUND ART

Bio-based polymers are attracting attention from the viewpoints of resource conservation and environmental protection. Use of polylactic acid having high stiffness in particular is expected to be expanding because L-lactic acid which is a raw material of the polylactic acid is now mass-produced at a low cost by a fermentation process.

However, as compared with a polymer which is obtained from an oil resource, the polylactic acid still has problems with its physical properties to be solved for its practical application. The improvement of its heat resistance and chemical resistance in particular is desired. The polylactic acid is generally polylactic acid obtained from L-lactic acid as the main raw material. In contrast to this, stereocomplex polylactic acid obtained from D-lactic acid as one of its raw materials is attracting attention (refer to non-patent document 1).

The stereocomplex polylactic acid is a crystalline resin having a much higher melting point than that of conventional poly(L-lactic acid). However, a technology for forming stereocomplex crystals at a high reproducibility is not completed yet.

Meanwhile, polybutylene terephthalate (may be abbreviated as PBT hereinafter) as an engineering plastic is easily molded, has excellent mechanical strength, heat resistance, chemical resistance and aroma retention property and is used in various molded articles.

However, since plastic materials including PBT are resins manufactured from oil, they consume oil resources. When they are scrapped after use, they increase the amount of garbage and are hardly decomposed in the natural environment. Therefore, even when they are buried, they remain in the ground semipermanently. When they are burnt, they increase the amount of carbon dioxide in the air, accelerating global warming. Further, the scrapped plastics directly exert bad influences on ecosystems, such as impairing scenery and destroying the living environments of subcelestial and marine creatures.

Plastic materials which are obtained from non-oil resources, can be reduced in volume and easily made fine particles when they are scrapped, and eco-friendly such as biodegradable are desired from the viewpoints of the resource conservation and environmental protection of recent years.

Under the above situation, attempts are being made to develop a resin material which is obtained by mixing a bio-based polymer with another resin and has the characteristic properties of both of them. For example, there is proposed a structural material comprising a mixture of polyethylene terephthalate and an aliphatic polyester (patent document 1). According to this proposal, the ester bond contained in the thermoplastic polyester can be decomposed by thermally decomposing or decomposing by adding a solvent the aliphatic polyester contained in the structural material, and the structural material can be easily scrapped after use. However, as a resin composition obtained by mixing an aromatic polyester with an aliphatic polyester has low heat stability at the time of melt molding and extremely low moldability, it is difficult to put it to practical use as an engineering plastic.

It is therefore proposed to obtain a resin composition having excellent moldability by using PBT having excellent moldability as the aromatic polyester. For example, it is proposed that 15 wt% or less of PBT should be contained in a resin composition comprising polylactic acid and PBT having a high melting point to improve its moldability and that the resin composition should be molded under conditions under which PBT does not melt to improve the heat deformation temperature of its molded article so as to improve the moldability (patent document 2).

There is disclosed a method of improving moldability by adding polyacetal in addition to polylactic acid and PBT (patent document 3). However, in this method, the heat resistance may degrade due to a reduction in glass transition temperature.

As described above, in the proposals made up till now, poly(L-lactic acid) or poly(D-lactic acid) (may be referred to as "lactic acid homopolymer" hereinafter) which is stably produced has been mainly studied as the polylactic acid. However, a composition comprising PBT and stereocomplex polylactic acid which is expected to have improved heat resistance but hardly forms a stereocomplex phase always stably is not proposed yet. A composition comprising PBT and polylactic acid which fully forms stereocomplex crystals is not disclosed yet.

(Non-patent Document 1) Macromolecules 1987, 20, 904-906
(Patent Document 1) JP-A 8-104797

(Patent Document 2) JP-A 2006-36818
(Patent Document 3) JP-A 2003-342459

DISCLOSURE OF THE INVENTION

It is an object of the present invention to provide a resin composition which comprises polylactic acid as a bio-based polymer and has a small environmental load. It is another object of the present invention to provide a resin composition which has excellent heat resistance with a high melting point. It is still another object of the present invention to provide a resin composition which is excellent in melt stability and hydrolysis resistance. It is a further object of the present invention to provide a molded article which is excellent in mechanical strength, hydrolysis resistance and chemical resistance.

The inventors of the present invention have found that when stereocomplex polylactic acid which contains a stereocomplex phase and has a high melting point is used as polylactic acid in a resin composition comprising the polylactic acid and PBT, a resin composition having excellent melt stability and hydrolysis resistance is obtained. The present invention has been accomplished based on this finding.

That is, the present invention is a resin composition which comprises an aromatic polyester having a butylene terephthalate skeleton as the main constituent unit (component A) and polylactic acid having a melting point of 190˚C or higher (component B). The present invention is also a molded article made of the resin composition. Further, the present invention is a method of manufacturing a resin composition by mixing together an aromatic polyester having a butylene terephthalate skeleton (component A) as the main constituent unit and polylactic acid having a melting point of 190˚C or higher(component B).

BEST MODE FOR CARRYING OUT THE INVENTION

The present invention will be described in detail hereinunder.

(polylactic acid: component B)

The resin composition of the present invention comprises polylactic acid (component B). The content of the component B is preferably 5 to 95 parts by weight, more preferably 10 to 90 parts by weight, much more preferably 20 to 80 parts by weight based on 100 parts by weight of the total of the components A and B. When the content of the component B falls within this range, a resin composition having excellent heat resistance and hydrolysis resistance is obtained.

The polylactic acid is polylactic acid having a melting point of 190˚C or higher. The polylactic acid is preferably so-called "stereocomplex polylactic acid" containing a stereocomplex. This stereocomplex polylactic acid is formed from poly(L-lactic acid) and poly(D-lactic acid). The poly(L-lactic acid) contains an L-lactic acid unit represented by the following formula as the main component. The poly(D-lactic acid) contains a D-lactic acid unit represented by the following formula as the main component.

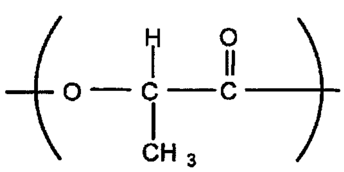

The poly(L-lactic acid) contains preferably 90 to 100 mol%, more preferably 95 to 100 mol%, 99 to 100 mol% of the L-lactic acid unit to achieve a high melting point and 95 to 99 mol% of the L-lactic acid unit to obtain a high stereo crystal rate. The other units are a D-lactic acid unit and a copolymerizable component unit except lactic acid. The total content of the other units is preferably 0 to 10 ml%, more preferably 0 to 5 mol%, much more preferably 0 to 1 mol%.

The poly(D-lactic acid) contains preferably 90 to 100 ml%, more preferably 95 to 100 ml%, 99 to 100 mol% of the L-lactic acid unit to achieve a high melting point and 95 to 99 mol% of the L-lactic acid unit to obtain a high stereo crystal rate. The other units are an L-lactic acid unit and a copolymerizable component unit except lactic acid. The total content of the other units is 0 to 10 mol%, preferably 0 to 5 mol%, more preferably 0 to 1 mol%.

Examples of the copolymerizable component include units derived from dicarboxylic acids, polyhydric alcohols, hydroxycarboxylic acids and lactones having a functional group capable of forming two or more ester bonds, and units derived from polyesters, polyethers and polycarbonates comprising these constituent components.

The above dicarboxylic acids include succinic acid, adipic acid, azelaic acid, sebacic acid, terephthalic acid and isophthalic acid. The above polyhydric alcohols include aliphatic polyhydric alcohols such as ethylene glycol, propylene glycol, butanediol, pentanediol, hexanediol, octanediol, glycerin, sorbitan, neopentyl glycol, diethylene glycol, triethylene glycol, polyethylene glycol and polypropylene glycol, and aromatic polyhydric alcohols such as ethylene oxide adducts of a bisphenol. The above hydroxycarboxylic acids include glycolic acid and hydroxybutyric acid. The above lactones include glycolide, ε-caprolactone glycolide, ε-caprolactone, β-propiolactone, δ-butyrolactone, β- or γ-butyrolactone, pivalolactone and δ-valerolactone.

The stereocomplex polylactic acid is a mixture of poly(L-lactic acid) and poly(D-lactic acid). The weight average molecular weights of the poly (L-lactic acid) and the poly(D-lactic acid) are preferably 100,000 to 500,000, more preferably 150,000 to 350,000.

The poly(L-lactic acid) and the poly(D-lactic acid) can be manufactured by a conventionally known method. For example, they can be manufactured by heating L- or D-lactide in the presence of a metal catalyst and ring-opening polymerizing it. They can also be manufactured by crystallizing polylactic acid having a low molecular weight which contains a metal catalyst and heating and solid-phase polymerizing it under reduced pressure or in an inert gas stream. Further, they can be manufactured by a direct polymerization process in which lactic acid is dehydrated and condensed in the presence or absence of an organic solvent.

A polymerization reaction can be carried out in a conventionally known reactor such as a vertical reactor or horizontal reactor having a high-viscosity agitation blade such as helical ribbon blade. They may be used alone or in combination. A batch reactor, continuous reactor and semibatch reactor may be used alone or in combination.

An alcohol may be used as a polymerization initiator. The alcohol is preferably a nonvolatile alcohol which does not impede the polymerization of the polylactic acid, such as decanol, dodecanol, tetradecanol, hexadecanol or octadecanol.

In the solid-phase polymerization, a lactic acid polyester having a relatively low molecular weight obtained by the above ring-opening polymerization or the direct polymerization of lactic acid is used as a prepolymer. It is preferred from the viewpoint of the prevention of fusion that the prepolymer should be crystallized at a temperature equal to or higher than its glass transition temperature (Tg) and lower than its melting point (Tm) in advance. The crystallized prepolymer is charged into a fixed vertical or horizontal reactor or rotary reactor (such as rotary kiln) whose vessel rotates, such as tumbler or kiln, to be heated at a temperature equal to or higher than the glass transition temperature (Tg) of the prepolymer and lower than its melting point (Tm). The polymerization temperature may be raised stepwise along with the proceeding of polymerization. The reduction of the inside pressure of the above reactor and the circulation of the heated inert gas stream are preferably both carried out in order to efficiently remove water generated during the solid-phase polymerization.

It is preferred that the metal catalyst used at the time of polymerizing the polylactic acid should be inactivated with a deactivator. Examples of the deactivator include organic ligands consisting of chelate ligands which have an imino group and can coordinate to the metal catalyst, low oxidation number phosphoric acids having an acid number of 5 or less, metaphosphoric acid-based compounds and acidic salts of these acids, monohydric and polyhydric alcohols, partial esters and whole esters of a polyalkylene glycol, and phosphono-substituted lower aliphatic carboxylic acid derivatives.

The above low oxidation number phosphoric acids having a small acid number of 5 or less include dihydride oxophosphoric acid (I), dihydride tetraoxodiphosphoric acid (II,II), hydride trioxophosphoric acid (III), dihydride pentaoxodiphosphoric acid (III), hydride pentaoxodiphosphoric acid (II, IV), dodecaoxohexaphosphorus (III) III, hydride octaoxotriphosphoric acid (III, IV, IV), octaoxotriphosphoric acid (IV, III, IV), hydride hexaoxodiphosphoric acid (III, V), hexaoxodiphosphoric acid (IV), decaoxotetraphosphoric acid (IV), hendecaoxotetraphosphoric acid (VI) and enneaoxotriphosphoric acid (V, IV, IV).

The above metaphosphoric acid-based compounds include orthophosphoric acids represented by the formula $xH_2O \cdot yP_2O_5$ and satisfying x/y = 3, polyphosphoric acids called "diphosphoric acid, triphosphoric acid, tetraphosphoric acid and pentaphosphoric acid" according to the degree of condensation and satisfying 2 > x/y > 1 and mixtures thereof. Metaphosphoric acids represented by the formula $xH_2O.yP_2O_5$ and satisfying x/y = 1, especially trimetaphosphoric acid and tetrametaphosphoric acid, and ultraphosphoric acids having a net-like structure with part of the phosphorus pentaoxide structure and satisfying 1 > x/y > 0 are also included. The metaphosphoric acid-based compounds also include cyclic metaphosphoric acids in which 3 to 200 phosphoric acid units are condensed, ultra-region metaphosphoric acids having a solid net-like structure, and alkali metal salts, alkali earth metal salts and onium salts thereof. Out of these, cyclic sodium metaphosphate, ultra-region sodium metaphosphate and dihexylphosphonoethyl acetate (may be abbreviated as DHPA hereinafter) of a phosphono-substituted lower aliphatic carboxylic acid derivative are advantageously used.

The weight ratio of the poly(L-lactic acid) to the poly(D-lactic acid) in the sterecomplex polylactic acid is 90:10 to 10:90. The weight ratio is preferably 75:25 to 25: 75, more preferably 60:40 to 40:60, much more preferably a range as close to 50:50 as possible.

The weight average molecular weight of the stereocomplex polylactic acid is preferably 100,000 to 500,000.

It is more preferably 100,000 to 300,000. The weight average molecular weight is a weight average molecular weight in terms of standard polystyrene measured by gel permeation chromatography (GPC) using chloroform as an eluent.

The sterecomplex polylactic acid can be manufactured by making the poly (L-lactic acid) and the poly (D-lactic acid) coexistent and mixing them together in a predetermined weight ratio.

The above mixing may be carried out in the presence of a solvent. The solvent is not particularly limited if it dissolves the poly(L-lactic acid) and the poly(D-lactic acid). Preferred examples of the solvent include chloroform, methylene chloride, dichloroethane, tetrachloroethane, phenol, tetrahydrofuran, N-methylpyrrolidone, N,N-dimethylformamide, butyrolactone, trioxane and hexafluoroisopropanol which may be used alone or in combination of two or more.

The poly(L-lactic acid) and the poly(D-lactic acid) may be mixed together in the absence of a solvent. That is, predetermined amounts of the poly(L-lactic acid) and the poly (D-lactic acid) are mixed together and then melt kneaded together, or one of them is molten and the other is added to and kneaded with the molten one.

Alternatively, stereoblock polylactic acid in which a poly(L-lactic acid) segment and a poly(D-lactic acid) segment are bonded together may also be advantageously used.

This stereoblock polylactic acid is a block polymer in which the poly(L-lactic acid) segment and the poly(D-lactic acid) segment are bonded together in the molecule. This block polymer can be manufactured, for example, by sequential ring-opening polymerization, by polymerizingpoly(L-lacticacid) and poly (D-lactic acid) and then bonding them together by a chain exchange reaction or with a chain extender, by polymerizing poly(L-lactic acid) and poly(D-lactic acid), blending them together and solid-phase polymerizing the blend to extend the chain, or manufactured from racemilactide using a stereoselective ring-opening polymerization catalyst. A stereoblock polymer having a high melting point obtained by sequential ring-opening polymerization and a polymer obtained by solid-phase polymerization are preferably used.

The stereo crystal rate (S) of the polylactic acid (component B) is represented by the following equation (1) defined from its crystal melting peak when measured by DSC. The polylactic acid (component B) preferably has a stereo crystal rate (S) of 80 % or more. That is, in the polylactic acid (component B), the stereocomplex phase is preferably formed fully. The stereo crystal rate (S) is a parameter indicative of the proportion of the stereocomplex polylactic acid crystal formed finally in the heat treatment step.

$$S\ (\%) = [(\Delta Hms/\Delta Hms^0)/(\Delta Hmh/\Delta Hmh^0 + \Delta Hms/\Delta Hms^0)] \qquad (i)$$

$\Delta Hms^0$ = 203.4 J/g, $\Delta Hmh^0$ = 142 J/G, ΔHms represents the melting enthalpy of the melting point of the stereocomplex and ΔHmh represents the melting enthalpy of the homocrystal.

The carboxyl group concentration of the polylactic acid (component B) is 15 eq/ton or less. It is preferably 10 eq/ton or less, more preferably 2 eq/ton or less. When the carboxyl group concentration falls within this range, a resin composition having excellent melting stability and moist heat resistance can be obtained.

The carboxyl group concentration can be controlled by a terminal capping agent and an amidation agent. Examples of the terminal capping agent include monocarbodiimides, dicarbodiimides, polycarbodiimides, oxazolines and epoxy compounds. Examples of the amidation agent include alcohols and amines.

The polylactic acid (component B) has crystallinity, and its stereo crystallization ratio (Cr) measured by XRD is preferably 50 to 100 %, more preferably 60 to 95 %, much more preferably 65 to 90 %.

The stereo crystallization ratio (Cr) is represented by the following equation (2) defined from the intensity rate of diffraction peaks when measured by XRD.

$$Cr\ (\%) = \Sigma I_{SCi}/(\Sigma I_{SCi} + I_{HM}) \times 100 \qquad (2)$$

$\Sigma I_{SCi} = I_{SC1} + I_{SC2} + I_{SC3}$ is the total of integral intensities of diffraction peaks derived from the stereocomplex crystal, $I_{SCi}$ (i = 1 to 3) is the integral intensity of a diffraction peak at 2θ = 12.0˚, 20.7˚ or 24.0˚, and $I_{HM}$ is the integral intensity of a diffraction peak derived from the homocrystal.

The melting point of the polylactic acid (component B) is preferably 195 to 250˚C, more preferably 200 to 220˚C. The melting enthalpy is 20 J/g or more, preferably 30 J/g or more.

The polylactic acid (component B) has a crystallinity ($D_{cry}$) represented by the following equation (3) from the melting enthalpy when measured by DSC of preferably 5 to 60 %, more preferably 7 to 50 %, much more preferably 10 to 50 %.

$$D_{cry} = \{(\Delta Hms/\Delta Hms^0) + (\Delta Hmh/\Delta Hmh^0)\} \times 100\ \% \qquad (3)$$

($\Delta Hms^0$ = 203.4 J/g, $\Delta Hmh^0$ = 142 J/G, $\Delta Hms$ represents the melting enthalpy of the melting point of the stereocomplex, and $\Delta Hmh$ represents the melting enthalpy of the homocrystal.)

The lactide content of the polylactic acid (component B) is preferably 0 to 700 ppm by weight, more preferably 0 to 500 ppm by weight, much more preferably 0 to 200 ppm by weight, particularly preferably 0 to 100 ppm by weight.

When the polylactic acid (component B) has a lactide content within the above range, the stability at the time of melting of the resin composition of the present invention is improved and a molded article can be produced efficiently at a short cycle. Further, the hydrolysis resistance and low gas property of the molded article can be improved.

The lactide content can be reduced to the above range by carrying out conventionally known lactide reduction methods alone or in combination in any stage from the polymerization of the poly(L-lactic acid) and the poly(D-lactic acid) till the end of the manufacture of the polylactic acid (component B).

Preferably, the polylactic acid (component B) has a stereo crystallization ratio (Cr) of 50 % or more, a stereo crystal rate (S) of 80 % or more, a carboxyl group concentration of 10 eq/ton or less and a lactide content of 0 to 700 ppm by weight.

Preferably, the polylactic acid (component B) has a stereo crystallization ratio (Cr) of 50 % or more, a stereo crystal rate (S) of 80 % or more, a carboxyl group concentration of 10 eq/ton or less and a lactide content of 0 to 700 ppm by weight. The resin composition comprising this polylactic acid is excellent in heat resistance, hydrolysis resistance, short cycle moldability and low gas property.

More preferably, the polylactic acid (component B) has a stereo crystallization ratio (Cr) of 50 % or more, a stereo crystal rate (S) of 95 % or more, a carboxyl group concentration of 10 eq/ton or less and a lactide content of 0 to 400 ppm by weight.

(phosphoric acid metal salt)

Preferably, the polylactic acid (component B) contains a phosphoric acid metal salt represented by the following formula to promote the formation of the stereocomplex phase stably and fully. The content of the phosphoric acid metal salt in the polylactic acid (component B) is preferably 10 ppm to 2 wt%, more preferably 50 ppm to 0.5 wt%, much more preferably 100 ppm to 0.3 wt%. When the content of the phosphoric acid metal salt is too low, its effect of improving the stereo crystal rate becomes small and when the content is too high, it deteriorates the resin itself disadvantageously.

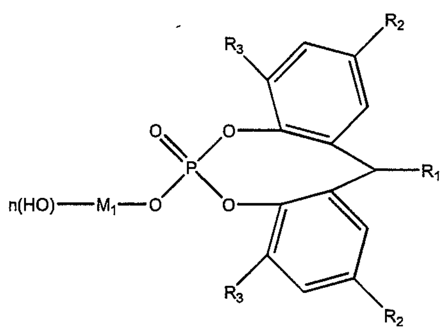

In the above formula, $R_1$ is a hydrogen atom or alkyl group having 1 to 4 carbon atoms. Examples of the alkyl group having 1 to 4 carbon atoms include methyl group, ethyl group, propyl group and butyl group.

$R_2$ and $R_3$ are the same or different and each a hydrogen atom or alkyl group having 1 to 12 carbon atoms. Examples of the alkyl group having 1 to 12 carbon atoms include methyl group, ethyl group, propyl group, butyl group, pentyl group, hexyl group and octyl group.

$M_1$ is an alkali metal atom, alkali earth metal atom, zinc atom or aluminum atom. Examples of the alkali metal atom include lithium, sodium and potassium. Examples of the alkali earth metal atom include magnesium, calcium and strontium. $M_1$ is preferably sodium, potassium, aluminum, magnesium or calcium, out of which calcium, sodium and aluminum are preferred.

N is 0 when $M_1$ is an alkali metal atom, alkali earth metal atom or zinc atom and 1 or 2 when $M_1$ is an aluminum atom.

(block forming agent: component C)

Preferably, the polylactic acid (component B) contains a block forming agent. The content of the block forming agent is preferably 0.001 to 5 parts by weight, more preferably 0.01 to 3 parts by weight based on 100 parts by weight of the polylactic acid (component B). When the content of the block forming agent exceeds this range, it is fairly possible that the color of the resin deteriorates or plasticization occurs disadvantageously. When the content is lower than 0.001 part by weight, the effect of the block forming agent is rarely seen and its industrial significance is small. When the phosphoric acid metal salt and the block forming agent (component C) are used in combination, the formation of the stereocomplex phase of the polylactic acid (component B) can be promoted more effectively.

The block forming agent is preferably a compound having at least one group selected from the group consisting of carbodiimide group, epoxy group, oxazoline group, oxazine group, isocyanate group and ketene group (may be referred to as "specific functional group" hereinafter) in the molecule.

The specific functional group of the block forming agent reacts with the terminal of the molecule of the polylactic acid (component B) to connect some poly(L-lactic acid) units and some poly(D-lactic acid) units so as to form blocked polylactic acid, thereby promoting the formation of the stereocomplex phase. As the block forming agent, a carbodiimide compound having a carbodiimide group as the specific functional group is preferred from the viewpoint of its influence upon the color, thermal decomposition and hydrolysis resistance of the resin composition.

Examples of the carbodiimide compound include mono-and poly-carbodiimide compounds such as dicyclohexylcarbodiimide, diisopropylcarbodiimide, diisobutylcarbodiimide, dioctylcarbodiimide, octyldecylcarbodiimide, di-t-butylcarbodiimide, dibenzylcarbodiimide, diphenylcarbodiimide, N-octadecyl-N'-phenylcarbodiimide, N-benzyl-N'-phenylcarbodiimide, N-benzyl-N'-tolylcarbodiimide, di-o-toluylcarbodiimide, d-p-toluylcarbodiimide, bis(p-aminophenyl)carbodiimide, bis(p-chlorophenyl)carbodiimide, bis(o-chlorophenyl)carbodiimide, bis(o-ethylphenyl)carbodiimide, bis(p-ethylphenyl)carbodiimide, bis(o-isopropylphenyl)carbodiimide, bis(p-isopropylphenyl)carbodiimide, bis(o-isobutylphenyl) carbodiimide, bis(p-isobutylphenyl)carbodiimide, bis(2,5-dichlorophenyl)carbodiimide, bis(2,6-dimethylphenyl)carbodiimide, bis(2,6-diethylphenyl)carbodiimide, bis(2-ethyl-6-isopropylphenyl)carbodiimide, bis(2-butyl-6-isopropylphenyl) carbodiimide, bis(2,6-diisopropylphenyl)carbodiimide, bis(2,6-di-t-butylphenyl)carbodiimide, bis(2,4,6-trimethylphenyl) carbodiimide, bis(2,4,6-triisopropylphenyl)carbodiimide, bis(2,4,6-tributylphenyl)carbodiimide, dißnaphthylcarbodiimide, N-tolyl-N'-cyclohexylcarbodiimide, N-tolyl-N'-phenylcarbodiimide, p-phenylenebis(o-toluylcarbodiimide), p-phenylenebis(cyclohexylcarbodiimide), p-phenylenebis(p-chlorophenylcarbodiimide), 2,6,2',6'-tetraisopropyldiphenylcarbodiimide, hexamethylenebis(cyclohexylcarbodiimide), ethylenebis(phenylcarbodiimide) and ethylenebis(cyclohexylcarbodiimide).

Out of these, bis(2,6-diisopropylphenyl)carbodiimide and 2,6,2',6'-tetraisopropyldiphenylcarbodiimide are preferred from the viewpoints of reactivity and stability. Dicyclohexylcarbodiimide and bis (2,6-diisopropylphenyl) carbodiimide which are available industrially may be advantageously used. Further, commercially available polycarbodiimide compounds may be advantageously used because they do not need to be synthesized. The commercially available polycarbodiimide compounds include Carbodilite LA-1 and HMV-8CA which are marketed by Nisshinbo Industries, Inc.

Glycidyl ether compounds, glycidyl ester compounds, glycidyl amine compounds, glycidyl imide compounds, glycidyl amide compounds and alicyclic epoxy compounds may be preferably used as the epoxy compound. A resin composition and a molded article having excellent mechanical properties, moldability, heat resistance and durability can be obtained by mixing the epoxy compound.

The above glycidyl ether compounds include stearyl glcyidyl ether, pheny glycidyl ether, ethylene oxide lauryl alcohol glycidyl ether, ethylene glycol diglycidyl ether, polyethylene glycol diglycidyl ether, polypropylene glycol diglycidyl ether, neopentylene glycol diglycidyl ether, polytetramethylene glycol diglycidyl ether, glycerol triglycidyl ether, trimethylolpropane triglycidyl ether, pentaerythritol tetraglycidyl ether, and bisphenol A diglycidyl ether type epoxy resins obtained by a condensation reaction between a bisphenol such as bis(4-hydroxyphenyl)methane and epichlorohydrin.

The above glycidyl ester compounds include glycidyl benzoate, glycidyl stearate, glycidyl barsatate, diglycidyl terephthalate, diglycidyl phthalate, diglycidyl cyclohexanedicarboxylate, diglycidyl adipate, diglycidyl succinate, diglycidyl dodecadionate and tetraglycidyl pyromellitate. Out of these, glycidyl benzoate and glycidyl barsatate are preferred.

The above glycidyl amine compounds include tetraglycidylamine diphenylmethane, triglycidyl-p-aminophenol, diglycidyl aniline, diglycidyl toluidine, tetraglycidyl metaxylenediamine and triglycidyl isocyanurate.

The above glycidyl imide and glycidyl amide compounds include N-glycidylphthalimide, N-glycidyl-4,5-dimethylphthalimide, N-glycidyl-3,6-dimethylphthalimide, N-glycidylsuccinimide, N-glycidyl-1,2,3,4-tetrahydrophthalimide, N-glycidylmaleinimide, N-glycidylbenzamide and N-glycidylstearylamide. Out of these, N-glycidylphthalimide is preferred.

The above alicyclic epoxy compounds include 3,4-epoxycyclohexyl-3,4-cyclohexylcarboxylate, bis(3,4-epoxycyclohexylmethyl)adipate, vinylcyclohexenediepoxide, N-methyl-4,5-epoxycyclohexane-1,2-dicarboxylic acid imide and N-phenyl-4,5-epoxycylohexane-1,2-dicarboxylic acid imide. The other epoxy compounds include epoxy modified fatty acid glycerides such as epoxylated soy oil, epoxylated linseed oil and epoxylated whale oil, phenol novolak type epoxy resin and cresol novolak type epoxy resin.

Examples of the oxazoline compound include 2-methoxy-2-oxazoline, 2-butoxy-2-oxazoline, 2-stearyloxy-2-oxazoline, 2-cyclohexyloxy-2-oxazoline 2-allyloxy-2-oxazoline, 2-benzyloxy-2-oxazoline, 2-p-phenylphenoxy-2-oxazoline, 2-methyl-2-oxazoline, 2-cyclohexyl-2-oxazoline, 2-methallyl-2-oxazoline, 2-crotyl-2-oxazoline, 2-phenyl-2-oxazoline, 2-o-ethylphenyl-2-oxazoline, 2-o-propylphenyl-2-oxazoline, 2-p-phenylphenyl-2-oxazoline, 2,2'-bis(2-oxazoline), 2,2'-bis(4-methyl-2-oxazoline), 2,2'-bis(4-butyl-2-oxazoline), 2,2'-m-phenylenebis(2-oxazoline), 2,2'-p-phenylenebis(4-methyl-2-oxazoline), 2,2'-p-phenylenebis(4,4'-methyl-2-oxazoline), 2,2'-ethylenebis(2-oxazoline), 2,2'-tetramethylenebis(2-oxazoline), 2,2'-hexamethylenebis(2-oxazoline), 2,2'-ethylenebis(4-methyl-2-oxazoline), 2,2'-tetramethylenebis (4,4'-dimethyl-2-oxazoline), 2,2'-cyclohexylenebis(2-oxazoline) and 2,2'-diphenylenebis(4-methyl-2-oxazoline). Polyoxazoline compounds comprising the above compound as a monomer unit are also included.

Examples of the oxazine compound include 2-methoxy-5,6-dihydro-4H-1,3-oxazine, 2-hexyloxy-5,6-dihydro-4H-1,3-oxazine, 2-decyloxy-5,6-dihydro-4H-1,3-oxazine, 2-cyclohexyloxy-5,6-dihydro-4H-1,3-oxazine, 2-allyloxy-5,6-dihydro-4H-1,3-oxazine and 2-crotyloxy-5,6-dihydro-4H-1,3-oxazine. Further, 2,2'-bis(5,6-dihydro-4H-1,3-oxazine), 2,2'-methylenebis(5,6-dihydro-4H-1,3-oxazine), 2,2'-ethylenebis(5,6-dihydro-4H-1,3-oxazine), 2,2'-hexamethylenebis (5,6-dihydro-4H-1,3-oxazine), 2,2'-p-phenylenebis(5,6-dihydro-4H-1,3-oxazine) and 2,2'-P,P'-diphenylenebis(5,6-dihydro-4H-1,3-oxazine) are also included. Further, polyoxazine compounds comprising the above compound as a monomer unit may also be used. Out of the above oxazoline compounds and oxazine compounds, 2,2'-m-phenylenebis(2-oxazoline) and 2,2'-p-phenylenebis(2-oxazoline) are preferred.

Examples of the isocyanate compound include aromatic, aliphatic and alicyclic isocyanate compounds and mixtures thereof.

Examples of the monoisocyanate compound include phenyl isocyanate, tolyl isocyanate, dimethylphenyl isocyanate, cyclohexyl isocyanate, butyl isocyanate and naphthyl isocyanate.

Examples of the diisocyanate include 4,4'-diphenylmethane diisocyanate, 4,4'-diphenyldimethylmethane diisocyanate, 1,3-phenylenediisocyanate, 1,4-phenylenediisocyanate, 2,4-tolylenediisocyanate, 2,6-tolylenediisocyanate, mixture of 2,4-tolylenediisocyanate and 2,6-tolylenediisocyanate, cyclohexane-4,4'-diisocyanate, xylylene diisocyanate, isophorone diisocyanate, dicyclohexylmethane-4,4'-diisocyanate, methylcyclohexane diisocyanate, tetramethylxylylene diisocyanate and 2,6-diisopropylphenyl-1,4-diisocyanate. Out of these isocyanate compounds, aromatic isocyanates such as 4,4' -diphenylmethane diisocyanate and phenyl isocyanate are preferred.

The ketene compound may be an aromatic, aliphatic or alicyclic ketene compound or a mixture thereof. Examples of the ketene compound include diphenyl ketene, bis(2,6-di-t-butylphenyl)ketene, bis (2,6-di-isopropylphenyl) ketene and dicyclohexyl ketene. Out of these ketene compounds, aromatic ketenes such as diphenyl ketene, bis(2,6-di-t-butylphenyl)ketene and bis(2,6-di-isopropylphenyl)ketene are preferred.

(aromatic polyester: component A)

The resin composition of the present invention comprises an aromatic polyester (component A). The content of the component A is preferably 5 to 95 parts by weight, more preferably 10 to 80 parts by weight, much more preferably 20 to 70 parts by weight, particularly preferably 20 to 50 parts by weight based on 100 parts by weight of the total of the components A and B.

The aromatic polyester (component A) contains a butylenes terephthalate skeleton as the main constituent unit. The butylene terephthalate skeleton is represented by the following formula.

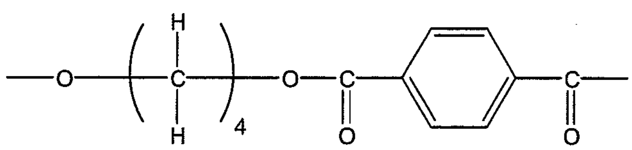

The word "main" means that the molar fraction of the butylene terephthalate skeleton in the aromatic polyester is 50 mol% or more. The molar fraction of the butylene terephthalate skeleton is preferably 70 % or more, more preferably 85 % or more, much more preferably 95 % or more from the viewpoint of improving moldability.

The aromatic polyester may contain a copolymerizable component besides the butylene terephthalate skeleton. The copolymerizable component is a hydroxycarboxylic acid, dicarboxylic acid or diol.

Examples of the hydroxycarboxylic acid include glycolic acid, D-lactic acid, L-lactic acid, 3-hydroxypropionic acid, 4-hydroxybutanoic acid, 3-hydroxybutanoic acid, 6-hydroxycaproic acid, hydroxybenzoic acid and hydroxynaphthalene carboxylic acid.

Examples of the dicarboxylic acid include aromatic dicarboxylic acids such as isophthalic acid, naphthalene dicarboxylic acid, diphenoxyethane carboxylic acid, diphenylether dicarboxylic acid and diphenylsulfone dicarboxylic

acid, alicyclic dicarboxylic acids such as hexahydroterephthalic acid and hexahydroisophthalic acid, aliphatic dicarboxylic acids such as succinic acid, adipic acid, sebacic acid and azelaic acid, and bifunctional carboxylic acids such as p-β-hydroxyethoxybenzoic acid and ε-oxybenzoic acid.

Examples of the diol include trimethylene glycol, tetramethylene glycol, hexamethylene glycol, decamethylene glycol, neopentyl glycol, diethylene glycol, 1,1-cyclohexanedimethanol, 1,4-cyclohexanedimethanol, 2,2-bis(4'-β-hydroxyphenyl)propane and bis(4'-β-hydroxyethoxyphenyl)sulfonic acid.

The intrinsic viscosity of the aromatic polyester (component A) is preferably 0.5 to 2.0, more preferably 0.7 to 1.8, much more preferably 0.8 to 1.5.

The carboxyl group concentration of the aromatic polyester (component A) is preferably 60 eq/ton or less. The carboxyl group concentration can be controlled by the use of a moist heat resistance improving agent or solid-phase polymerization.

(ester exchange inhibitor: component D)

The resin composition of the present invention preferably contains an ester exchange inhibitor (component D). The content of the ester exchange inhibitor (component D) is preferably 0.01 to 5 parts by weight, more preferably 0.01 to 1 part by weight, much more preferably 0.02 to 0.5 part by weight based on 100 parts by weight of the total of the components A and B. When the component D is contained, the melt viscosity stability of the resin composition is enhanced, the decomposition and the reduction of the molecular weight of the resin at the time of molding are suppressed, and the moldability of the resin is improved, thereby making it possible to carry out melt molding advantageously.

Examples of the ester exchange inhibitor (D) include sodium dihydrogen phosphate, potassium acetate, trimethyl phosphate and phenylphosphoric acid.

Orthophosphoric acids represented by the formula $xH_2O.\ yP_2O_5$ and satisfying x/y = 3, polyphosphoric acids called "diphosphoric acid, triphosphoric acid, tetraphosphoric acid and pentaphosphoric acid" according to the degree of condensation and satisfying 2 > x/y > 1 and mixtures thereof are also included. Metaphosphoric acids represented by the formula $xH_2O._yP_2O_5$ and satisfying x/y = 1, especially trimetaphosphoric acid and tetrametaphosphoric acid, and ultraphosphoric acids having a net-like structure with part of the phosphorus pentaoxide structure and satisfying 1 > x/y > 0 (these may be collectively referred to as "metaphosphoric acid-based compounds") are further included. Acid salts and esters of these phosphoric acids are further included. Out of these, cyclic sodium metaphosphate, ultra-region sodium metaphosphate and DHPA are advantageously used.

(crystal nucleating agent: component E)

The resin composition of the present invention preferably contains a crystal nucleating agent (component E) to improve its moldability and heat deformation temperature. The content of the crystal nucleating agent (component E) is preferably 0.01 to 10 parts by weight, more preferably 0.01 to 5 parts by weight, much more preferably 0.02 to 1 part by weight based on 100 parts by weight of the total of the components A and B. When the crystal nucleating agent (component E) is contained, the molding speed of the resin composition can be increased, the crystallizability of the resin composition improves, and the heat resistance and heat deformation temperature of a molded article can be improved. The crystal nucleating agent (component E) may be an inorganic or organic crystal nucleating agent.

Examples of the inorganic crystal nucleating agent include calcium silicate, talc, kaolinite, montmorillonite, synthetic mica, calcium sulfide, boron nitride, barium sulfate, aluminum oxide, neodymium oxide and a metal salt of phenyl phosphonate. These inorganic crystal nucleating agents are preferably modified by an organic material to improve their dispersibility in the composition.

Examples of the organic crystal nucleating agent include organic carboxylic acid metal salts such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluylate, sodium salicylate, potassium salicylate, zinc salicylate, aluminum dibenzoate, potassium dibenzoate, lithium dibenzoate, sodium β-naphthalate and sodium cyclohexane carboxylate; organic sulfonates such as sodium p-toluene sulfonate and sodium sulfoisophthalate; carboxylic acid amides such as stearic acid amide, ethylene bislauric acid amide, palmitic acid amide, hydroxystearic acid amide, erucic acid amide and tris(t-butylamide) trimesate; phosphoric compound metal salts such as benzylidene sorbitol and derivatives thereof, and sodium-2,2'-methylenebis (4,6-di-t-butylphenyl)phosphate; and 2,2-methylbis(4,6-di-t-butylphenyl)sodium.

The inorganic crystal nucleating agent is more preferred than the organic crystal nucleating agent, and a small particle size is preferred from the viewpoint of stability at the time of the melting of the resin composition. For example, when the average primary particle diameter of the crystal nucleating agent is 0.2 to 0.05 μm, it is suitably dispersed into

the resin composition, whereby the heat resistance of the resin composition becomes high.

Out of the inorganic crystal nucleating agents, calcium silicate is preferred. Hexagonal calcium silicate may be used as the calcium silicate. The content of the calcium silicate is preferably 0.01 to 1 part by weight, more preferably 0.05 to 0.5 part by weight based on 100 parts by weight of the total of the components A and B.

(antioxidant: component F)

The resin composition of the present invention preferably contains an antioxidant (component F) to improve oxidation stability, control decomposition deterioration at the time of melt molding and improve residence stability. The content of the antioxidant (component F) is preferably 0.01 to 5 parts by weight, more preferably 0.01 to 2 parts by weight, much more preferably 0.02 to 0.5 part by weight based on 100 parts by weight of the total of the components A and B. The antioxidant (component F) is selected from a hindered phenol-based compound, hindered amine-based compound, phosphite-based compound and thioether-based compound.

Examples of the hindered phenol-based compound include n-octadecyl 3-(3',5'-di-t-butyl-4'-hydroxyphenyl)-propionate, n-octadecyl 3-(3'-methyl-5'-t-butyl-4'-hydroxyphenyl)-propionate, n-tetradecyl 3-(3',5'-di-t-butyl-4'-hydroxyphenyl)-propionate, 1,6-hexanediol bis[3-(3,5-di-t-butyl-4-hydroxphenyl)-propionate], 1,4-butanediol bis[3-(3,5,-di-t-butyl-4-hydroxyphenyl)-propionate], 2,2'-methylene-bis(4-methyl-t-butylphenol), triethylene glycol bis([3-(3-t-butyl-5-methyl-4-hydroxyphenyl)-propionate], tetrakis[methylene-3-(3,',5'-di-t-butyl-4-hydroxyphenyl) propionate]methane, 3,9-bis[2-{3-(3-t-butyl-4-hydroxy-5-methylphenyl)propion yloxy}-1,1-dimethylethyl]2,4,8,10-tetraoxaspiro(5,5)undecane, N,N'-bis-3-(3',5'-di-t-butyl-4'-hydroxyphenyl)propionylh examethylenediamine, N,N'-tetramethylene-bis[3-(3'-methyl-5'-t-butyl-4'-hydro xyphenyl)propionyl]diamine, N,N'-bis[3-(3,5-di-t-butyl-4-hydroxyphenyl)-propionyl]hy drazine, N-salicyloyl-N'-salicylidenehydrazine, 3-(N-salicyloyl) amino-1,2,4-triazole and N,N'-bis[2-{3-(3,5-di-t-butyl-4-hydroxyphenyl)propionylo xy}ethyl]oxyamide.

Triethylene glycol bis[3-(3-t-butyl-5-methyl-4-hydroxyphenyl)-propionate] and tetrakis[methylene-3-(3',5'-di-t-butyl-4-hydroxyphenyl)p ropionate]methane are preferred.

The phosphite-based compound is preferably a compound having at least one P-O bond attached to an aromatic group, as exemplified by tris(2,6-di-t-butylphenyl)phosphite, tetrakis(2,6-di-t-butylphenyl)4,4'-biphenylene phosphite, bis (2,6-di-t-butyl-4-methylphenyl)pentaerythritol-di-pho sphite, 2,2-methylenebis(4,6-di-t-butylphenyl)octylphosphite, 4,4'-butylidene-bis(3-methyl-6-t-butylphenyl-d-tridecyl) phosphite, 1,1,3-tris(2-methyl-4-ditridecylphosphite-5-t-butylpheny l)butane, tris(mixed mono- and di-nonylphenyl)phosphite, and 4,4'-isopropylidenebis(phenyl-dialkylphosphite).

Out of these, tris(2,6-di-t-butylphenyl)phosphite, 2,2-methylenebis(4,6-di-t-butylphenyl)octylphosphite, bis(2,6-di-t-butyl-4-methylphenyl)pentaerythritol-di-pho sphite and tetraphenyl-4,4'-biphenylene phosphite are preferably used.

Examples of the thioether-based compound include dilauryl thiodipropionate, ditridecyl thiodipropionate, dimyristyl thiodipropionate, distearyl thiodipropionate, pentaerythritol tetrakis(3-laurylthiopropionate), pentaerythritol tetrakis (3-dodecylthiopropionate), pentaerythritol tetrakis(3-octadecylthiopropionate), pentaerythritol tetrakis(3-myristylthiopropionate) and pentaerythritol tetrakis(3-stearylthiopropionate). They may be used alone or in combination of two or more.

(polyester elastomer: component G)

The resin composition of the present invention preferably contains a polyester elastomer (component G) to improve the toughness and hinge property of a molded article. The content of the polyester elastomer (component G) is preferably 0.01 to 50 parts by weight, more preferably 0.05 to 30 parts by weight, much more preferably 0.1 to 20 parts by weight based on 100 parts by weight of the total of the components A and B.

The polyester elastomer (component G) is an aromatic polyester having a polybutylene terephthalate skeleton as the main skeleton and copolymerized with a polyalkylene glycol. The content of the polyalkylene glycol is preferably 10 to 70 wt%, more preferably 20 to 60 wt%, much more preferably 25 to 60 wt%.

Examples of the polyalkylene glycol include polyethylene glycol and polytetramethylene glycol. A polyester elastomer (component G) copolymerized with polytetramethylene glycol having a molecular weight of about 500 to 2,000 is preferred because it can maintain the crystallinity and heat resistance of the resin composition advantageously. A resin composition comprising the component G may be advantageously used in car connectors, making use of the above characteristic properties.

(inorganic filler: component H)

The content of the inorganic filler (component H) is preferably 5 to 100 parts by weight, more preferably 10 to 90 parts by weight, much more preferably 20 to 80 parts by weight based on 100 parts by weight of the total of the components A and B. When the inorganic filler (component H) is contained, a good appearance and high dimensional stability as well as heat resistance and stiffness can be provided to the resin composition advantageously.
Examples of the inorganic filler (component H) include powder fillers, lamellar fillers, lamellar fillers and fibrous fillers, out of which fibrous fillers are particularly preferred and glass fibers are preferred.
The powdery and lamellar fillers include glass flakes, metal flakes, mica, talc and kaolin. Out of these, glass flakes, metal flakes, mica and talc are preferred, and glass flakes, mica and talc are most preferred.
The spherical fillers include glass beads, metal beads, silica beads, alumina beads, zirconia beads, silica alumina beads, spherical silica, spherical alumina, spherical zirconia and spherical silica alumina. The average particle diameter of the spherical filler is preferably 10 to 1,000 μm.
The fibrous fillers include glass fibers, glass milled fibers, wollastonite, carbon fibers, metal-based conductive fibers, and whiskers such as potassium titanate whiskers and aluminum borate whiskers. Out of these, glass fibers, wollastonite, carbon fibers and metal-based conductive fibers are preferred, and glass fibers, wollastonite and carbon fibers are most preferred.
When glass fibers are contained, a resin composition having a good appearance is obtained. The glass fibers are not limited to particular glass composition such as A glass, C glass or E glass and may contain a component such as $TiO_2$, $Zr_2O$, BeO, $CeO_2$, $SO_3$ or $P_2O_5$ according to the circumstances. E glass (non-alkali glass) is preferred because it does not have a bad influence upon the resin.
The above glass composition is also applied to glass milled fibers described below. The glass fibers of the present invention are manufactured by quenching molten glass while it is stretched by various methods to have a predetermined fibrous form. The quenching and stretching conditions are not particularly limited.
The sectional form of the fiber may be an ordinary spherical form or an irregular sectional form obtained typically by combining spherical fibers in parallel. Further, glass fibers having a mixture of a spherical sectional form and an irregular sectional form may be used.
The glass fibers have an average fiber diameter of 1 to 25 μm, preferably 5 to 17 μm. When glass fibers having an average fiber diameter smaller than 1 μm are used, moldability is impaired and when glass fibers having an average fiber diameter larger than 25 μm are used, the appearance is impaired and the reinforcing effect becomes unsatisfactory. These fibers can be bundled by a currently known epoxy-based, urethane-based or acrylic compound and are preferably surface treated with a silane coupling agent which will be described hereinafter. The average fiber length in a molded article of these fibers is about 0.01 to 50 mm.
The glass milled fibers used in the present invention have an L/D of 10 or smaller and are obtained by cutting the roving or chopped strand of the glass fibers or grinding it with a ball mill until a predetermined length is obtained. They are preferably used to improve the appearance of a molded article obtained from the composition of the present invention. L indicates the length in the fiber axial direction of the milled fiber and D indicates the diameter of the fiber in a sectional direction. The above glass fibers may be used as the glass fibers. These powders are preferably surface treated with a silane coupling agent like the glass fibers. The glass milled fibers preferably have an average fiber diameter of 6 to 23 μm and an average fiber length of 0.02 to 0.1 mm.
The surfaces of the glass fibers may be coated with a metal to provide conductivity to the glass fibers. The metal coated glass fibers have a diameter of particularly preferably 6 to 20 μm. The metal coated glass fibers are obtained by coating the glass fibers with a metal such as nickel, copper, cobalt, silver, aluminum, iron or alloy thereof by a known plating or deposition process.
One or more metals selected from nickel, copper and cobalt are preferably used from the viewpoints of conductivity, corrosion resistance, productivity and further economy. These fibers can be bundled by a currently known epoxy-based, urethane-based or acrylic compound and are preferably surface treated with a silane coupling agent which will be described hereinafter. The average fiber length in a molded article of these fibers is about 0.02 to 400 μm.
The carbon fibers used in the present invention which are not particularly limited are known carbon fibers such as carbon fibers or graphite fibers manufactured by using polyacrylonitrile, pitch, rayon, lignin or hydrocarbon gas, particularly preferably polyacrylonitrile-based carbon fibers having excellent fiber strength. The surfaces of the carbon fibers can be oxidated by currently known means typified by ozone, plasma, nitric acid and electrolysis, and this oxidation is preferably carried out to increase adhesion to a resin component. The carbon fibers are generally in the form of a chopped strand, roving strand or milled fiber.
To provide conductivity to the carbon fibers, the surfaces of the fibers may be coated with a metal. The metal coated carbon fibers have a diameter of particularly preferably 6 to 20 μm. The metal coated carbon fibers are obtained by coating the carbon fibers with a metal such as nickel, copper, cobalt, silver, aluminum, iron or alloy thereof by the known plating or deposition process. One or more metals selected from nickel, copper and cobalt are preferred from

the viewpoints of conductivity, corrosion resistance, productivity and further economy, and nickel coated carbon fibers are particularly preferred.

These carbon fibers bundled by a sizing agent such as epoxy resin, urethane resin or acrylic resin can be advantageously used, and the epoxy resin and/or the urethane resin are/is preferred.

The metal-based conductive fibers used in the present invention do not need to be particularly limited and refer to metal fibers or metal coated fibers such as stainless fibers, aluminum fibers, copper fibers or brass fibers. They may be used in combination of two or more. The metal fibers have a diameter of preferably 4 to 80 μm, particularly preferably 6 to 60 μm. The conductive fibers may be surface treated with a silane coupling agent, titanate coupling agent or aluminate coupling agent. They may be bundled by an olefin-based resin, styrene-based resin, polyester-based resin, epoxy-based resin or urethane-based resin. These fibrous fillers may be used alone or in combination of two or more.

The fibrous fillers are preferably surface treated with a silane coupling agent. This surface treatment suppresses the decomposition of the aromatic polycarbonate resin and further improves its adhesion, thereby making it possible to further improve moist heat fatigue and surface impact, which is the object of the present invention.

The silane coupling agent is preferably a compound represented by the following formula.

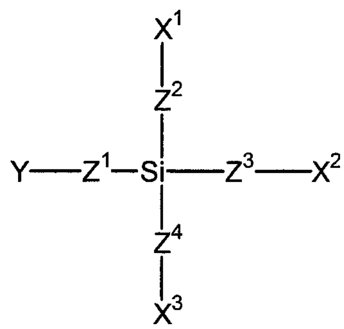

In the above formula, Y is a group having reactivity or affinity for a resin matrix, such as amino group, epoxy group, carboxylic acid group, vinyl group, mercapto group or halogen atom. $Z^1$, $Z^2$, $Z^3$ and $Z^4$ are each independently a single bond or alkylene group having 1 to 7 carbon atoms, and an amide bond, ester bond, ether bond or imino bond may be existent in the alkylene molecular chain. $X^1$, $X^2$ and $X^3$ are each independently an alkoxy group, preferably an alkoxy group having 1 to 4 carbon atoms, or halogen atom.

Examples of the compound represented by the above formula include vinyl trichlorosilane, vinyl triethoxysilane, vinyl trimethoxysilane, γ-methacryloxypropyltrimethoxysilane, β-(3,4-epoxycyclohexyl)ethyltrimethoxysilane, γ-glycidoxypropyltrimethoxysilane, N-β(aminoethyl)γ-aminopropyltrimethoxysilane, γ-aminopropyltriethoxysilane, N-phenyl-γ-aminopropyltrimethoxysilane, γ-mercaptopropyltrimethoxysilane and γ-chloropropyltrimethoxysilane.

The glass flakes and the metal flakes used in the present invention have an average particle size of preferably 10 to 1, 000 μm. When the average particle size is represented by (a) and the thickness is represented by (c), the (a) / (c) ratio is preferably 5 to 500, more preferably 6 to 450, much more preferably 7 to 400. When the average particle size is smaller than 10 μm or the (a) / (c) ratio is lower than 5, stiffness becomes unsatisfactory and when the average particle size is larger than 1,000 μm or the (a)/(c) ratio is higher than 500, the appearance and weld strength of a molded article deteriorate disadvantageously. The average particle size of the glass flakes and the metal flakes is calculated as the median size of a grain size weight distribution obtained by the standard sieve method. Out of the glass flakes and the metal flakes, the glass flakes are particularly preferred.

These glass flakes and the metal flakes can be bundled by a currently known epoxy-based, urethane-based or acrylic compound and are preferably surface treated with a silane coupling agent which will be described hereinafter.

As the glass flakes used in the present invention may be used metal coated glass flakes. The metal to be coated on the glass flakes may be a metal which can be coated on glass, such as gold, silver, nickel or aluminum. The coating technique is not particularly limited, and any technique is employed. For example, electroless plating is preferred, and the thickness of the coating film is generally 0.00001 to 10 μm, the flat faces and preferably end faces of the glass flakes are uniformly coated. The glass flakes coated with the metal may be used directly but may be further coated with a treating agent to prevent oxidation. The mica in the present invention is preferably in a powder form with an average particle diameter of 1 to 80 μm to secure stiffness.

Mica is the ground product of a silicate mineral containing aluminum, potassium, magnesium, sodium, iron, etc. Mica includes white mica, bronze mica, black mica and artificial mica. Although any one of them may be used as the mica of the present invention, bronze mica and black mica are softer than white mica, bronze mica and black mica are blackish themselves because they contain a larger amount of Fe in the main component than white mica, and further

artificial mica is expensive and not suitable for practical use though it is obtained by substituting the OH group of natural bronze mica by F. White mica is preferred. As the grinding technique for the manufacture of mica, there are a dry grinding technique in which a mica ore is ground by a dry grinder and a wet grinding technique in which a mica ore is roughly ground by a dry grinder, water is added to prepare slurry, and the slurry is ground by a wet grinder and then dehydrated and dried. The dry grinding technique is inexpensive and commonly used but it is difficult to grind mica thinly and finely. Therefore, mica manufactured by the wet grinding technique is preferably used in the present invention.

The average particle size of the mica is 10 to 100 μm when measured by a micro-track laser diffraction method. The average particle size is preferably 20 to 50 μm. When the average particle size of the mica is smaller than 10 μm, the effect of improving stiffness is not satisfactory and even when the average particle size is larger than 100 μm, the improvement of stiffness is unsatisfactory and weld strength is also unsatisfactory.

As for the thickness of the mica, mica having a thickness of 0.01 to 1 μm when actually measured by observation through an electron microscope may be used. The thickness of the mica is preferably 0.03 to 0.3 μm. Mica having a thickness of less than 0.01 μm is easily broken in the melt processing step and therefore, the further improvement of stiffness is not observed. When the thickness is larger than 1 μm, the effect of improving stiffness is not satisfactory. The mica may be surface treated with a silane coupling agent and further granulated by a binder to become granular. Examples of the mica include the Mica Powder A-41 of Yamaguchi Mica Kogyosho Co., Ltd. which is easily acquired from the market.

Metal coated mica may be used as the mica used in the present invention. The metal to be coated on the mica may be a metal which can be coated on the mica, such as gold, silver, nickel or aluminum. The coating technique is not particularly limited, and any technique may be employed. For example, electroless plating is preferred, and the thickness of the coating film is generally 0.00001 to 10 μm, and the flat faces and preferably end faces of the mica are uniformly coated. The metal coated mica may be used directly but may be further surface coated with a treating agent for the prevention of its oxidation.

Talc is hydrous magnesium silicate having a lamellar structure and represented by the chemical formula $4SiO_2 \cdot 3MgO \cdot 2H_2O$, generally contains about 63 wt% of $SiO_2$, about 32 % of MgO, about 5 wt% of $H_2O$ and $Fe_2O_3$, $Al_2O_3$, etc. and has a specific gravity of about 2.7. In the present invention, powdery talc having an average particle diameter of 0.01 to 20 μm is preferred to secure stiffness. The average particle diameter of talc is a value measured by the laser diffraction method. In the case of talc, when the average particle diameter falls below the above range, stiffness becomes unsatisfactory and when the average particle diameter exceeds the above range, the appearance of a molded article becomes bad disadvantageously.

Kaolin is hydrous aluminum silicate having a lamellar structure represented by the chemical formula $Al_2Si_2O_5(OH)_4$. In general, naturally produced kaolin is available in three types which are kaolinite, dickite and nacrite, and all of them may be used. In the present invention, powdery kaolin having an average particle diameter of 0.01 to 20 μm is preferred to secure stiffness. The average particle diameter of kaolin is a value measured by the laser diffraction method. In the case of kaolin, when the average particle diameter falls below the above range, its stiffness becomes unsatisfactory and when the average particle diameter exceeds the above range, the appearance of a molded article becomes bad disadvantageously.

The lamellar filler is preferably surface treated with a silane coupling agent or the like. This surface treatment suppresses the decomposition of the aromatic polycarbonate resin and further improves its adhesion, thereby making it possible to further improve moist heat fatigue and weld strength, which is the object of the present invention.

Wollastonite is a fibrous inorganic filler comprising calcium silicate as the main component, which is a natural white mineral having needle-like crystals and substantially represented by the chemical formula $CaSiO_3$. It generally contains about 50 wt% of $SiO_2$, about 47 wt% of CaO and $Fe_2O_3$, $Al_2O_3$, etc. and has a specific gravity of about 2.9. Wollastonite having such a particle size distribution that particles having a diameter of 3 μm or more account for 75 % or more and particles having a diameter of 10 μm or more account for 5 % or less of the total and an aspect ratio L/D of 3 or more, especially 8 or more is preferred as the wollastonite used in the present invention. When particles having a diameter of 3 μm or more account for 75 % or more in the particle size distribution, the reinforcing effect becomes satisfactory and stiffness tends to become higher. When particles having a diameter of 10 μm or more account for 5 % or less, wollastonite has excellent impact strength and the surface appearance of the obtained molded article tends to become better. When the aspect ratio is 8 or more, the reinforcing effect becomes satisfactory and higher stiffness is obtained. In consideration of the work environment, wollastonite having an aspect ratio of 50 or less is more preferred. The wollastonite may be surface treated with an ordinary surface treating agent, for example, a coupling agent such as silane-based coupling agent which will be described hereinafter or titanate-based coupling agent.

Metal coated glass flakes and metal coated mica may be used as the glass flakes and the mica used in the present invention. The metal to be coated on the glass flakes and the mica may be a metal which can be coated on glass, such as gold, silver, nickel or aluminum. The coating technique is not particularly limited, and any technique is employed. For example, electroless plating is preferred, the thickness of the coating film is generally 0.00001 to 10 μm, and the flat faces and preferably end faces of the glass flakes are uniformly coated. The glass flakes coated with the

metal may be used directly but may be further surface coated with a treating agent to prevent oxidation. The mica in the present invention is preferably in a powder form with an average particle diameter of 1 to 80 μm to secure stiffness.

Metal coated mica may be used as the mica. The metal to be coated on the mica may be a metal which can be coated on mica, such as gold, silver, nickel or aluminum. The coating technique is not particularly limited and any technique is employed. For example, electroless plating is preferred, the thickness of the coating film is generally 0.00001 to 10 μm, and the flat faces and preferably end faces of the mica are uniformly coated. The mica coated with the metal may be used directly but may be surface coated with a treating agent for the prevention of its oxidation.

The content of the inorganic filler in the present invention is 5 to 100 parts by weight, preferably 10 to 100 parts by weight based on 100 parts by weight of the total of the components A and B. When the content of the inorganic filler is lower than 5 parts by weight, the stiffness of the composition becomes unsatisfactory and when the content is higher than 200 parts by weight, the extrusion of the obtained composition becomes difficult, which is not practical.

(bromine-based flame retardant: component I)

(antimony-based flame retarding aid: component J)

The resin composition of the present invention preferably contains 5 to 80 parts by weight of a bromine-based flame retardant (component I) and 0 to 30 parts by weight of an antimony-based flame retarding aid (component J) based on 100 parts by weight of the total of the components A and B. The content of the bromine-based flame retardant (component I) is more preferably 10 to 40 parts by weight. The content of the antimony-based flame retarding aid (component J) is more preferably 2 to 10 parts by weight.

When the resin composition of the present invention contains these flame retardants, it can attain V0 in the Subject 94 (UL-94) flame retardancy test of Underwriters Laboratories.

The bromine-based flame retardant (component I) preferably has a bromine content of 20 wt% or more. The bromine-based flame retardant (component I) is selected from a brominated bisphenol A type polycarbonate flame retardant, brominated bisphenol A type epoxy resin, modified product obtained by capping some or all of the terminal glycidyl groups of brominated bisphenol A type epoxy resin, brominated diphenyl ether flame retardant, brominated imide flame retardant and brominated polystyrene flame retardant.

Specific examples of the bromine-based flame retardant include decabromodiphenyl oxide, octabromodiphenyl oxide, tetrabromodiphenyl oxide, tetrabromo phthalic anhydride, hexabromocyclododecane, bis(2,4,6-tribromophenoxy) ethane, ethylenebistetrabromophthalimide, hexabromobenzene, 1,1-sulfonyl[3,5-dibromo-4-(2,3-dibromopropoxy)]benzene, polydibromophenylene oxide, tetrabromobisphenol S, tris(2,3-dibromopropyl-1)isocyanurate, tribromophenol, tribromophenylallyl ether, tribromoneopentyl alcohol, brominated polystyrene, brominated polyethylene, tetrabromobisphenol A, tetrabromobisphenol A derivatives, tetrabromobisphenol A-epoxy oligomer or polymer, tetrabromobisphenol A-carbonate oligomer or polymer, brominated epoxy resins such as brominated phenol novolak epoxy, tetrabromobisphenol A-bis(2-hydroxydiethyl ether), tetrabromobisphenol A-bis(2,3-dibromopropyl ether), tetrabromobisphenol A-bis (allyl ether), tetrabromocyclooctane, ethylenebispentabromodiphenyl, tris(tribromoneopentyl)phosphate, poly(pentabromobenzyl polyacrylate), octabromotrimethylphenyl indane, dibromoneopentyl glycol, pentabromobenzyl polyacrylate, dibromocresyl glycidyl ether and N,N'-ethylene-bis-tetrabromophthalimide. Out of these, tetrabromobisphenol A-epoxy oligomer, tetrabromobisphenol A-carbonate oligomer and brominated epoxy resins are preferred.

The bromine-based flame retardant (component D) is preferably a compound represented by the following formula (i) or (ii).

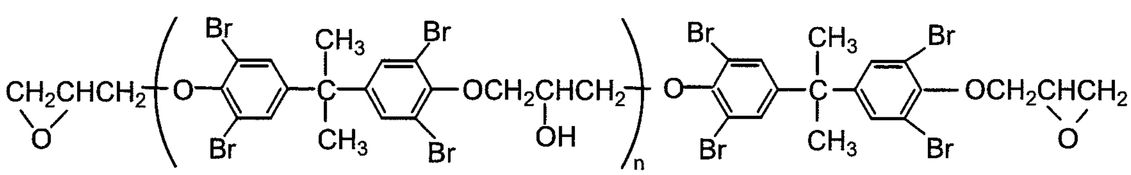

(i)

In the formula (i), n is an integer of 11 to 50.

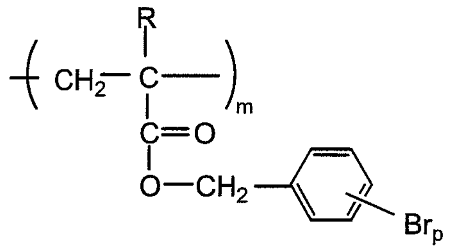

(ii)

In the formula (ii), R is a hydrogen atom or methyl group, p is an integer of 1 to 5, and m is an integer of 0 to 20.

The bromine-based flame retardant (component D) is preferably a compound represented by the following formula (iii) or (iv).

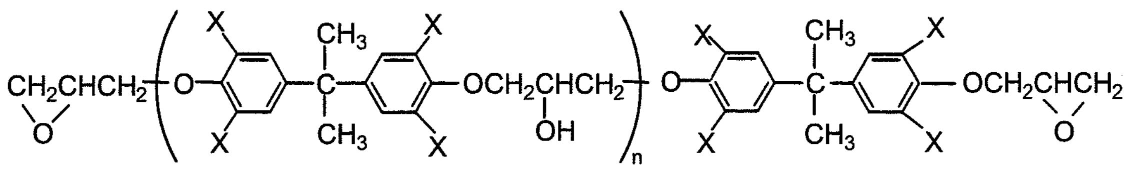

(iii)

In the above formula, X is elemental bromine and/or elemental chlorine. N is an integer of 5 to 20.

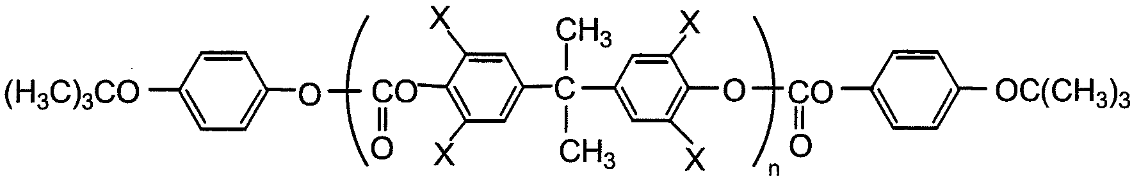

(iv)

In the above formula, X is elemental bromine and/or elemental chlorine. N is an integer of 3 to 12.

Examples of the antimony-based flame retarding aid (component J) include antimony trioxide, antimony tetroxide, antimony pentoxide represented by $(NaO)_p \cdot (Sb_2O_5) \cdot qH_2O$ (p = 0 to 1, q = 0 to 4) or partially Na chlorinated sodium antimonate. When antimony pentoxide represented by $(NaO)_p \cdot (Sb_2O_5) \cdot qH_2O$ (p = 0 to 1, q = 0 to 4) or partially Na chlorinated sodium antimonite is used, metal corrosion resistance is more preferred. Out of these, an ethanol solution of sodium antimonate having a pH of 6 to 9 is more preferably used, because the decomposition of the resin composition rarely occurs. The antimony-based flame retarding aid (component J) preferably has a particle size of 0.02 to 5 μm. It may be surface treated with an epoxy compound, silane compound, isocyanate compound or titanate compound as required. The content of the antimony-based flame retarding aid (component J) is preferably 0 to 25 wt%, more preferably 1 to 15 wt% based on the whole composition.

(dropping inhibitor)

The resin composition of the present invention preferably contains 0.01 to 5 parts by weight of a dropping inhibitor based on 100 parts by weight of the total of the components A and B. The dropping inhibitor is preferably polytetrafluoroethylene (PTFE). Fibrous, particulate and other PTFE's may be used but fibrous PTFE is most suitable.

(amorphous resin: component K)

The resin composition of the present invention preferably contains 1 to 100 parts by weight of an amorphous resin (component K) based on 100 parts by weight of the total of the components A and B. The content of the component D is preferably 2 to 80 parts by weight, more preferably 5 to 70 parts by weight, much more preferably 10 to 60 parts

by weight. When the component K is contained, low warpage and surface appearance can be improved.
Examples of the amorphous resin (component K) include polyolefin-based resins such as polyester resin except polylactic acid, polyamide resin, polyacetal resin, polyethylene resin and polypropylene resin, and thermoplastic resins such as polystyrene resin, acrylic resin, polyurethane resin, chlorinated polyethylene resin, chlorinated polypropylene resin, aromatic and aliphatic polyketone resins, fluororesin, polyphenylene sulfide resin, polyether ketone resin, polyimide resin, thermoplastic starch resin, AS resin, ABS resin, AES resin, ACS resin, polyvinyl chloride-based resin, polyvinylidene chloride resin, vinyl ester-based resin, MS resin, polycarbonate resin, polyarylate resin, polysulfone resin, polyether sulfone resin, phenoxy resin, polyphenylene oxide resin, poly-4-methylpentene-1, polyether imide resin, cellulose acetate resin and polyvinyl alcohol resin. The resin composition preferably contains at least one selected from polyacetal resin, polyester resin except polylactic acid, ABS and polycarbonate resin out of these. When the resin composition contains the above component, a resin composition and a molded article having excellent surface properties, mechanical properties and toughness can be obtained.

(hydrotalcite: component L)

The resin composition of the present invention preferably further contains 0.01 to 5 parts by weight of hydrotalcite (component L) based on 100 parts by weight of the total of the components A and B. The content of the component L is more preferably 0.01 to 2 parts by weight, much more preferably 0.02 to 0.5 part by weight. When the component L is contained, an acidic decomposed product generated from the resin composition and the flame retardant, for example, hydrogen bromide is captured, the stability at the time of the melting of the resin composition is improved, the coloring and deterioration at the time of melt molding and the oxidation deterioration of a molded article are suppressed, and the metal contact contamination of an electric or electronic part can be suppressed.
The hydrotalcite used in the present invention is a basic carbonate compound comprising magnesium and aluminum and represented by $(Mg_x{\cdot}Al_y){\cdot}(OH)_p(CO_3)_q$. P, q, x and y are each a positive number larger than 0, may be the same or different and satisfy $2x + 3y = p + 2q$.
The hydrotalcite is a basic carbonate compound represented by $(N^n{}_a{\cdot}Mg_b{\cdot}Al_c){\cdot}(OH)_p(CO_3)_q$ and obtained by substituting some of magnesium and aluminum atoms by another element. $N^n$ is an n-valent metal, and p, q, a, b and c are each a positive number larger than 0, may be the same or different and satisfyna + 2b + 3c = p + 2q. $N^n$ is, for example, zinc.
Hydrotalcite comprising no other metals except magnesium and aluminum has the large effect of suppressing the metal contact contamination of an electric or electronic part and also has the function of decomposing PBT at the time of melting. In contrast to this, hydrotalcite obtained by substituting some of magnesium and aluminum atoms by another metal, for example, zinc has the large effect of suppressing the metal contact contamination of an electric or electronic part but its function of decomposing PBT at the time of melting is greatly reduced.

(optical stabilizer: component M)

When the resin composition of the present invention contains polylactic acid (component B) and PBT (component A), its optical stability becomes high but the use of an optical stabilizer (component M) is preferred to further enhance optical stability. The content of the optical stabilizer (component M) is 0. to 5 parts by weight, preferably 0.01 to 1 part by weight, more preferably 0.02 to 0.5 part by weight based on 100 parts by weight of the total of the components A and B.
The optical stabilizer (component M) is selected from a benzophenone-based compound, benzotriazole-based compound, aromatic benzoate-based compound, anilide oxalate-based compound, cyanoacrylate-based compound and hindered amine-based compound.
Examples of the benzophenone-based compound include benzophenone, 2,4-dihydroxybenzophenone, 2,2'-dihydroxybenzophenone, 2,2',4,4'-tetrahydroxybenzophenone, 2-hydroxy-4-methoxybenzophenone, 2,2'-dihydroxy-4,4'-dimethoxybenzophenone, 2,2'-dihydroxy-4,4'-dimethoxy-5-sulfobenzophenone, 2-hydroxy-4-octoxybenzophenone, 2-hydroxy-4-dodecyloxybenzophenone, 2-hydroxy-4-octoxybenzophenone, 2-hydroxy-4-methoxy-5-sulfobenzopheonone, 5-chloro-2-hydroxybenzophenone, 2-hydroxy-4-octoxybenzopheonone, 2-hydroxy-4-methoxy-2'-carboxybenzophenone and 2-hydroxy-4-(2-hydroxy-3-methyl-acryloxyisopropoxy)benzo phenone.
Examples of the benzotriazole-based compound include 2-(5-methyl-2-hydroxyphenyl)benzotriazole, 2-(3,5-di-t-butyl-2-hydroxyphenyl)benzotriazole, 2-(3,5-di-t-amyl-2-hydroxyphenyl)benzotriazole, 2-(3',5'-di-t-butyl-4'-methyl-2'-hydroxyphenyl)benzotria zole, 2-(3,5-di-t-amyl-2-hydroxyphenyl)-5-chlorobenzotriazole, 2-(5-t-butyl-2-hydroxyphenyl)benzotriazole, 2-[2'-hydroxy-3',5'-bis(α,α-dimethylbenzyl)phenyl]benzot riazole, 2-[2'-hydroxy-3',5'-bis(α,α-dimethylbenzyl)phenyl]-2H-be nzotriazole and 2-(4'-octoxy-2'-hydroxyphenyl)benzotriazole.
Examples of the aromatic benzoate-based compound include alkylphenyl salicylates such as p-t-butylphenyl salicylate and p-octylphenyl salicylate.
Examples of the anilide oxalate-based compound include 2-ethoxy-2'-ethyloxalic acid bisanilide, 2-ethoxy-5-t-butyl-2'-ethyloxalic acid bisanilide and 2-ethoxy-3'-dodecyloxalic acid bisanilide.

Examples of the cyanoacrylate-based compound include ethyl 2-cyano-3,3'-diphenyl acrylate and 2-ethylhexyl 2-cyano-3,3'-diphenyl acrylate.

Examples of the hindered amine-based compound include 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylacetoxy)-2,2,6,6-tetramethylpiperidine, 4-benzoyloxy-2,2,6,6-tetramethylpiperidine, 4-methoxy-2,2,6,6-tetramethylpiperidine, 4-octadecyloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, 4-(phenylcarbamoyloxy)-2,2,6,6-tetramethylpiperidine, bis(2,2,6,6-tetramethyl-4-piperidyl)carbonate, bis(2,2,6,6-tetramethyl-4-piperidyl)oxalate, bis(2,2,6,6-tetramethyl-4-piperidyl)malonate, bis (2,2,6,6-tetramethyl-4-piperidyl)sebacate, bis(2,2,6,6-tetramethylpi-4-peridyl)adipate, bis(2,2,6,6-tetramethylpi-4-peridyl)terephthalate, 1,2-bis(2,2,6,6-tetramethylpi-4-peridyloxy)-ethane, α,α'-bis(2,2,6,6-tetramethylpi-4-peridyloxy)-p-xylene, bis(2,2,6,6-tetramethyl-4-piperidyl)-tolylene-2,4-dicarb amate, bis(2,2,6,6-tetramethyl-4-piperidyl)-hexamethylene-1,6-d icarbamate, tris (2,2,6,6-tetramethyl-4-piperidyl)-benzene-1,3,5-tricarbo xylate, tris (2,2,6,6-tetramethyl-4-piperidyl)-benzene-1,3,4-tricarbo xylate, 1-[2-{3-(3,5-di-t-butyl-4-hydroxyphenyl)propionyloxy}-2, 2,6,6-tetramethylpiperidine, and condensate of 1,2,3,4-butane tetracarboxylic acid, 1,2,2,6,6-pentamethyl-4-piperidinol and β,β,β',β'-tetramethyl-3,9-[2,4,8,10-tetraoxaspiro (5,5) und ecane]dimethanol.

In the present invention, the above stabilizers may be used alone or in combination of two or more. Hindered phenol-based compounds and benzotriazole-based compounds are preferably used as the stabilizer.

(antistatic agent: component N)

The resin composition of the present invention preferably contains an antistatic agent (component N). The content of the antistatic agent (component N) is preferably 0.01 to 10 parts by weight based on 100 parts by weight of the total of the components A and B.

Examples of the antistatic agent (component N) include low molecular weight antistatic agents such as anionic antistatic agents, cationic antistatic agents, nonionic antistatic agents and amphoteric antistatic agents, and high molecular weight antistatic agents.

The preferred anionic antistatic agents include sodium alkyl sulfonates, sodium alkylbenzene sulfonates and alkyl phosphates. The alkyl group is preferably a linear alkyl group having 4 to 20 carbon atoms.

The preferred cationic antistatic agents include phosphonium alkyl sulfonates, phosphonium alkylbenzene sulfonates and quaternary ammonium salt compounds. The alkyl group is preferably a linear alkyl group having 4 to 20 carbon atoms.

The preferred nonionic antistatic agents include polyoxyethylene derivatives, polyhydric alcohol derivatives and alkyl ethanol amines. Polyethylene glycol having a number average molecular weight of 500 to 100,000 is preferably used as the polyoxyethylene derivative.

The preferred amphoteric antistatic agents include alkyl betains and sulfobetain derivatives. The preferred high molecular weight antistatic agents include polyethylene glycol methacrylate copolymer, polyether amide, polyether ester amide, polyether amide imide, polyalkylene oxide copolymer, polyethylene oxide-epichlorohydrin copolymer and polyether ester. Preferably, a low molecular weight antistatic agent is used alone, or a combination of a low molecular weight antistatic agent and a high molecular weight antistatic agent is used as the antistatic agent (component N) to keep the excellent whiteness of a molded article and maintain the light resistance of the molded article.

The content of an antistatic agent which is a mixture of sodium dodecylbenzene sulfonate and polyethylene glycol is preferably 0.5 to 7.5 parts by weight, more preferably 0.75 to 5 parts by weight based on 100 parts by weight of the total of the components A and B. When the content of the mixture falls within this range, melt stability at the time of molding can be maintained while satisfactory antistatic property is provided.

(other additives)

Although the resin composition of the present invention may be used as it is, it may further contain at least one selected from the group consisting of a release agent, surface lubricating agent, moist heat resistance improving agent, flame retardant, filler, stabilizer, plasticizer, nucleating agent, talc, flake, elastomer, antistatic agent, rubber reinforced styrene-based resin, polyethylene terephthalate and polycarbonate in limits not prejudicial to the object of the present invention.

Examples of the release agent include fatty acids, fatty acid metal salts, oxy fatty acids, paraffin low molecular weight polyolefins, fatty acid amides, alkylene bis(fatty acid) amides, aliphatic ketones, fatty acid partially saponified esters, fatty acid lower alcohol esters, fatty acid polyhydric alcohol esters, fatty acid higher alcohol esters, fatty acid polyhydric alcohol partial esters, fatty acid polyglycol esters and modified silicones. A polylactic acid resin composition

and a molded article having excellent mechanical properties, moldability and heat resistance can be obtained by mixing the release agent.

Fatty acids having 6 to 40 carbon atoms are preferred, as exemplified by oleic acid, stearic acid, lauric acid, hyroxystearic acid, behenic acid, arachidonic acid, linoleic acid, linolenic acid, recinoleic acid, palmitic acid, montanic acid and mixtures thereof. Alkali (earth) metal salts of a fatty acid having 6 to 40 carbon atoms are preferred as the fatty acid metal salts, as exemplified by calcium stearate, sodium montanate and calcium montanate. The oxy fatty acids include 1,2-oxystearic acid. The fatty acid esters include stearic acid esters, oleic acid esters, linoleic acid esters, linolenic acid esters, adipic acid esters, behenic acid esters, arachidonic acid esters, montanic acid esters and isostearic acid esters. The fatty acid partially saponified esters include montanic acid partially saponified esters.

Paraffins having 18 or more carbon atoms are preferred as the paraffins, as exemplified by liquid paraffin, natural paraffin, microcrystalline wax and petrolactam. Low molecular weight polyolefins having a molecular weight of 5,000 or less are preferred, as exemplified by polyethylene wax, maleic acid modified polyethylene wax, oxide type polyethylene wax, chlorinated polyethylene wax and polypropylene wax.

Fatty acid amides having 6 or more carbon atoms are preferred as the fatty acid amides, as exemplified by aleinic acid amide, erucic acid amide and behenic acid amide. Alkylene bis (fatty acid) amides having 6 or more carbon atoms are preferred, as exemplified by methylene bis (stearic acid) amide, ethylene bis(stearic acid) amide and N,N-bis(2-hydroxyethyl)stearic acid amide. Aliphatic ketones having 6 or more carbon atoms are preferred, as exemplified by higher fatty acid ketones. Fatty acid esters having 6 or more carbon atoms are preferred, as exemplified by ethyl stearate, butyl stearate, ethyl behenate, stearyl stearate, stearyl oleate and rice wax.

The fatty acid polyhydric alcohol esters include glycerol tristearate, glycol distearate, glycerol monostearate, pentaerythritol tetrastearate, pentaerythritol tristeareate, pentaerythritol dimyristate, pentaerythritol monostearate, pentaerythritol adipate stearate and sorbitan monobehenate. The fatty acid polyglycol esters include polyethylene glycol fatty acid esters and polypropylene glycol fatty acid esters. The modified silicones include polyether modified silicone, high fatty acid alkoxy modified silicones, higher fatty acid-containing silicones, higher fatty acid ester modified silicones, methacryl modified silicone and fluorine modified silicone.

Vegetable waxes such as carnauba wax and rice wax, animal waxes such as bees wax and lanolin, mineral-based waxes such as montan wax and montanic acid partially saponified ester waxes, petroleum-based waxes such as paraffin wax and polyethylene wax, and fat-based waxes such as castor oil and derivatives thereof, and fatty acids and derivatives thereof are also included.

Out of these, fatty acids, fatty acid metal salts, oxy fatty acids, fatty acid esters, fatty acid partially saponified esters, paraffins, low molecular weight polyolefins, fatty acid amides and alkylene bis (fatty acid) amides are preferred, and fatty acid partially saponified esters and alkylene bis (fatty acid) amides are more preferred. Montanic acid esters, montanic acid partially saponified ester wax, polyethylene wax, acid value polyethylene wax, sorbitan fatty acid esters, erucic acid amide and ethylene bis (stearic acid) amide are preferably used because they are excellent in the effect of improving the molding cycle.

Montanic acid partially saponified ester wax and ethylene bis (stearic acid) amide are particularly preferred. In the present invention, the release agents may be used alone or in combination of two or more. The content of the release agent is preferably 0.01 to 3 parts by weight, more preferably 0.03 to 2 parts by weight based on 100 parts by weight of the polylactic acid (component B).

Any known surface lubricating agent may be used, as exemplified by silicone-based compounds, fluorine-based surfactants and organic surfactants.

Any known flame retardant may be used, as exemplified by chlorine-based flame retardants, phosphorus-based flame retardants, nitrogen compound-based flame retardants, silicone-based flame retardants and other inorganic flame retardants.

The chlorine-based flame retardants include chlorinated paraffin, chlorinated polyethylene, perchlorocyclopentadecane and tetrachlorophthalic anhydride.

The phosphorus-based flame retardants include organic phosphorus-based compounds such as phosphates, condensation phosphates and polyphosphates, and red phosphorus.

Any known stabilizer may be used, as exemplified by metal soap-based stabilizers such as lithium stearate, magnesium stearate, calcium laurate, calcium ricinoleate, calcium stearate, barium laurate, barium ricinoleate, barium stearate, zinc laurate, zinc ricinoleate and zinc stearate, laurate-, maleate and mercapto-based organic tin stabilizers, lead-based stabilizers such as lead stearate and tribasic lead sulfate, epoxy compounds such as epoxylated vegetable oil, phosphite compounds including compounds enumerated for the above ester exchange inhibitor, such as alkyl allyl phosphites and trialkyl phosphites, β-diketone compounds such as dibenzoyl methane and dehydroacetic acid, polyols such as sorbitol, mannitol and pentaerythritol, zeolites such as hydrotalcite, benzotriazole-based ultraviolet absorbents, benzophenone-based ultraviolet absorbents, salicylate-based ultraviolet absorbents, cyanoacrylate-based ultraviolet absorbents, anilide oxalate-based ultraviolet absorbents and hindered amine-based optical stabilizers.

Any known plasticizer may be used, as exemplified by polyester-based plasticizers, glycerin-based plasticizers,

polyvalent carboxylate-based plasticizers, phosphate-based plasticizers, polyalkylene glycol-based plasticizers and epoxy-based plasticizers.

The polyester-based plasticizers include polyesters comprising a dicarboxylic acid component such as adipic acid, sebacic acid, terephthalic acid, isophthalic acid, naphthalenedicarboxylic acid or diphenyldicarboxylic acid and a diol component such as propylene glycol, 1,3-butanediol, 1,4-butanediol, 1,6-hexanediol, ethylene glycol or diethylene glycol, and polyesters comprising a hydroxycarboxylic acid, such as polycaprolactone.

The glycerin-based plasticizers include glycerin monoacetomonolaurate, glycerin diacetomonolaurate, glycerin diacetomonooleate and glycerin monoacetomonomontanate.

The polyvalent carboxylate-based plasticizers include phthalates such as dimethyl phthalate, diethyl phthalate, dibutyl phthalate, dioctyl phthalate and diheptyl phthalates, trimellitates such as tributyl trimellitate, trioctyl trimellitate and trihexyl trimellitate, adipates such as diisodecyl adipate, citrates such as tributyl acetylcitrate, azelates such as di-2-ethylhexyl azelate, sebacates such as di-2-ethylhexyl sebacate, bis(methyldiglycol)succinate, methyldiglycol butyldiglycol succinate, propyldiglycol butyldiglycol succinate, methyldiglycol butyldiglycol succinate, benzyl methyldiglycol succinate, benzyl butyldiglycol succinate, methyldiglycol butyldiglycol adipate, benzyl methyldiglycol adipate, benzyl butyldiglycol adipate, methoxycarbonyl methyldibutyl citrate, ethoxycarbonyl methyldibutyl citrate, butoxycarbonyl methyldibutyl citrate, dimethoxycarbonyl methylmonobutyl citrate, diethoxycarbonyl methylmonobutyl citrate and dibutoxycarbonyl methylmonobutyl citrate.

The phosphate-based plasticizers include tributyl phosphate, tri-2-ethylhexyl phosphate, trioctyl phosphate, triphenyl phosphate, diphenyl-2-ethylhexyl phosphate and tricresyl phosphate.

The polyalkylene glycol-based plasticizers include polyalkylene glycols such as polyethylene glycol, polypropylene glycol, poly(ethylene oxide·propylene oxide) block and/or random copolymer(s), polytetramethylene glycol, ethylene oxide addition polymer of a bisphenol, propylene oxide addition polymer of a bisphenol and tetrahydrofuran addition polymer of a bisphenol, and terminal capped compounds such as terminal epoxy modified compounds, terminal ester modified compounds and terminal ether modified compounds thereof.

The epoxy-based plasticizers include epoxytriglyceride comprising alkyl epoxystearate and soy oil and an epoxy resin obtained mainly from bisphenol A and epichlorohydrin.

Benzoates of an aliphatic polyol such as neopentyl glycol dibenzoate, diethylene glycol dibenzoate and triethylene glycol di-2-ethylbutyrate, fatty acid amides such as stearic acid amide, aliphatic carboxylates such as butyl oleate, and oxyacid esters such as methyl acetylricinoleate and butyl acetylricinoleate, pentaerythritol, sorbitols, polyacrylates, silicone oil and paraffins may also be used.

Any known elastomer may be used, as exemplified by an ethylene-propylene copolymer, ethylene-propylene-nonconjugated diene copolymer, ethylene-butene-1 copolymer, acrylic rubbers, ethylene-acrylic acid copolymer and alkali metal salts thereof (so-called "ionomer"), ethylene-glycidyl (meth)acrylate copolymers, ethylene-alkyl acrylate copolymers (such as ethylene-ethyl acrylate copolymer, ethylene-butyl acrylate copolymer), acid modified ethylene-propylene copolymer, diene rubbers (such as polybutadiene, polyisoprene and polychloroprene), copolymer of a diene and a vinyl monomer (such as styrene-butadiene random copolymer, styrene-butadiene block copolymer, styrene-butadiene-styrene block copolymer, styrene-isoprene random copolymer, styrene-isoprene block copolymer, styrene-isoprene-styrene block copolymer, graft copolymer of polybutadiene and styrene, and butadiene-acrylonitrile copolymer), polyisobutylene, copolymer of isobutylene and butadiene or isoprene, natural rubber, Thiokol rubber, polysulfide rubber, polyurethane rubber, polyether rubber and epichlorohydrin rubber.

Any known rubber reinforced styrene-based resin may be used, as exemplified by impact-resistant polystyrene, ABS resin, AAS resin (acrylonitrile-acrylic rubber-styrene copolymer) and AES resin (acrylonitrile-ethylene propylene rubber-styrene copolymer).

These additives may be used alone or in combination according to properties to be provided. For example, a combination of a stabilizer, a release agent and a filler may be added.

The following resin compositions are given as preferred embodiments of the present invention

(Embodiment 1)

A resin composition comprising an aromatic polyester (component A) having a butylene terephthalate skeleton as the main constituent unit and polylactic acid (component B) having a melting point of 190°C or higher is preferred. A molded article of this resin composition is excellent in heat stability, hydrolysis resistance, impact strength and solvent resistance. The amount of a volatile gas and the amount of a dissolved alkali metal produced from the molded article are small. The molded article may be used as an electronic part such as a relay, switch, relay case, capacitor case, transformer bobbin or connector, a molded article for carrying a silicon wafer, or a loose tube for optical fibers.

The component A is preferably contained in an amount of 5 to 95 parts by weight based on 100 parts by weight of the total of the components A and B. A phosphoric acid metal salt represented by the following formula is preferably contained in an amount of 10 ppm to 2 wt%.

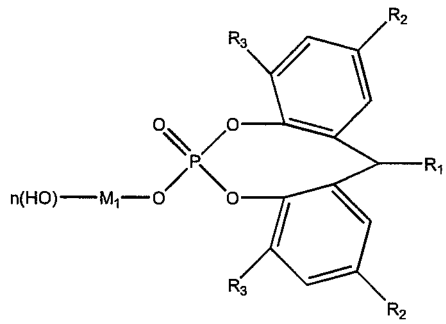

(In the above formula, $R_1$ is a hydrogen atom or alkyl group having 1 to 4 carbon atoms, $R_2$ and $R_3$ may be the same or different and each a hydrogen atom or alkyl group having 1 to 12 carbon atoms, $M_1$ is an alkali metal atom, alkali earth metal atom, zinc atom or aluminum atom, n is 0 when $M_1$ is an alkali metal atom, alkali earth metal atom or zinc atom and 1 or 2 when $M_1$ is an aluminum atom.)

The block forming agent (component C) is preferably contained in an amount of 0.001 to 5 parts by weight based on 100 parts by weight of the component B. The ester exchange inhibitor (component D) is preferably contained in an amount of 0.01 to 5 parts by weight based on 100 parts by weight of the total of the components A and B. The crystal nucleating agent (component E) is preferably contained in an amount of 0.01 to 10 parts by weight based on 100 parts by weight of the total of the components A and B. The antioxidant (component F) is preferably contained in an amount of 0.01 to 5 parts by weight based on 100 parts by weight of the total of the components A and B. The polyester elastomer (component G) is preferably contained in an amount of 0.01 to 50 parts by weight based on 100 parts by weight of the total of the components A and B.

The resin composition preferably has a stereo crystal rate (S) of 90 % or more. The resin composition preferably has a carboxyl group concentration of 15 eq/ton or less. The resin composition preferably has a stereo crystallization ratio (Cr) of 50 % or more. The resin composition preferably has a lactide content of 0 to 600 ppm by weight.

(Embodiment 2)

A resin composition comprising the component A, the component B and the inorganic filler (component C) is preferred. A molded article of this resin composition can be used in electronic parts and home electric appliances. The molded article has a good surface appearance and is excellent in heat resistance (deflection temperature under load), mechanical strength (flexural modulus) and solvent resistance.

The content of the component A is preferably 5 to 95 parts by weight based on 100 parts by weight of the total of the components A and B. The content of the component C is preferably 5 to 100 parts by weight based on 100 parts by weight of the total of the components A and B. The component C is preferably a glass fiber. 5 to 80 parts by weight of the bromine-based flame retardant (component D) and 0 to 30 parts by weight of the antimony-based flame retarding aid (component E) are preferably contained based on 100 parts by weight of the total of the components A and B. The ester exchange inhibitor (component F) is preferably contained in an amount of 0.01 to 5 parts by weight based on 100 parts by weight of the total of the components A and B. The antioxidant (component G) is preferably contained in an amount of 0.01 to 5 parts by weight based on 100 parts by weight of the total of the components A and B. The carbodiimide compound (component H) is preferably contained in an amount of 0.001 to 5 parts by weight based on 100 parts by weight of the total of the components A and B.

The resin composition preferably has a stereo crystal rate (S) of 80 % or more. The resin composition preferably has a stereo crystallization ratio (Cr) of 50 % or more. The resin composition preferably has a stereo crystal rate (S) of 95 % or more and a stereo crystallization ratio (Cr) of 50 0 or more. The resin composition preferably has a carboxyl group concentration of 30 eq/ton or less. The resin composition preferably has a lactide content of 0 to 600 ppm by weight.

(Embodiment 3)

A resin composition comprising the component A, the component B, the inorganic filler (component C) and the amorphous resin (component D) and having a component A content of 5 to 95 parts by weight, a component C content of 5 to 100 parts by weight and a component D content of 1 to 100 parts by weight based on 100 parts by weight of the total of the components A and B is preferred. A molded article of this resin composition may be used in housings for electronic equipment and home electric appliances. The molded article is excellent in glossiness, low warpage, heat resistance (deflection temperature under load) and mechanical strength (flexural modulus).

Preferably, 5 to 80 parts by weight of the bromine-based flame retardant (component E) and 0 to 30 parts by

weight of the antimony-based flame retarding aid (component F) are further contained based on 100 parts by weight of the total of the components A and B. Preferably, the ester exchange inhibitor (component G) is further contained in an amount of 0.01 to 5 parts by weight based on 100 parts by weight of the total of the components A and B. Preferably, the antioxidant (component H) is further contained in an amount of 0.01 to 5 parts by weight based on 100 parts by weight of the total of the components A and B. The carbodiimide compound (component J) is preferably contained in an amount of 0.001 to 5 parts by weight based on 100 parts by weight of the component B.

The resin composition preferably has a stereo crystallization ratio (Cr) of 50 % or more and a stereo crystal rate (S) of 80 % or more. The resin composition preferably has a carboxy group concentration of 30 eq/ton or less.

(Embodiment 4)

A resin composition comprising the component A, the component B, the inorganic filler (component C), the bromine-based flame retardant (component D) and the antimony-based flame retarding aid (component E) and having a component A content of 5 to 95 parts by weight, a component C content of 5 to 100 parts by weight, a component D content of 5 to 80 parts by weight and a component E content of 0 to 30 parts by weight based on 100 parts by weight of the total of the components A and B is preferred. A molded article of this resin composition is excellent in flame retardancy, tracking resistance and heat resistance.

The molded article may be used in housings for electronic equipment and home electric appliances. The housings include auto part cases such as ECU boxes and connector boxes, electronic part cases such as capacitor boxes, relay cases, capacitor cases and transformer bobbins, connectors and metal insert parts.

The inorganic filler (component C) is preferably a glass fiber. The carbodiimide compound (component H) is preferably contained in an amount of 0.001 to 5 parts by weight based on 100 parts by weight of the polylactic acid (component B). The ester exchange inhibitor (component F) is preferably contained in an amount of 0.01 to 5 parts by weight based on 100 parts by weight of the total of the components A and B. The antioxidant (component G) is preferably contained in an amount of 0.01 to 5 parts by weight based on 100 parts by weight of the total of the components A and B.

The resin composition preferably has a stereo crystallization ratio (Cr) of 50 % or more and a stereo crystal rate (S) of 95 % or more. The resin composition preferably has a carboxyl group concentration of 30 eq/ton or less.

(Embodiment 5)

A resin composition comprising the component A, the component B, the inorganic filler (component C), the bromine-based flame retardant (component D) and the antimony-based flame retarding aid (component E) and having (i) a component A content of 5 to 95 parts by weight, a component C content of 5 to 100 parts by weight, a component D content of 5 to 80 parts by weight and a component E content of 0 to 30 parts by weight based on 100 parts by weight of the total of the components A and B and (ii) a carboxyl group concentration of 50 eq/ton or less and a lactide content of 600 ppm or less by weight is preferred. A molded article of this resin composition hardly generates a gas, rarely experiences the dissolution of a metal and is excellent in flame retardancy, heat resistance and mechanical strength. The amount of a gas produced by heating the resin composition at 150˚C for 1 hour is 10 ppm or less. In the present invention, the production of a small amount of the gas in this test is called "low gas property" and an agent having the great ability of providing this low gas property to the composition may be called "low gas property agent". When the resin composition of the present invention has the above low gas property, a trouble at the time of melt molding can be suppressed and a molded article of the resin composition may be used as an electric or electronic part having a contact point.

The bromine-based flame retardant (component D) is preferably a compound represented by the following formula (i) or (ii).

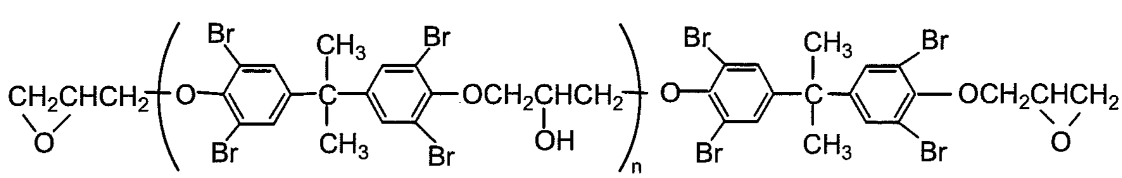

(i)

In the formula (i), n is an integer of 11 to 50.

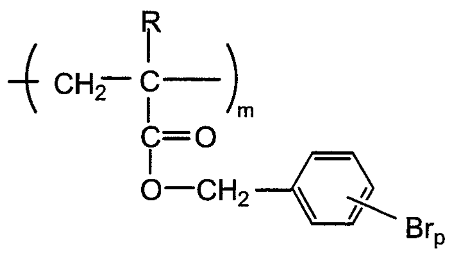

(ii)

In the formula (ii), R is a hydrogen atom or methyl group, p is an integer of 1 to 5, and m is an integer of 0 to 20.

The ester exchange inhibitor (component F) is preferably contained in an amount of 0.01 to 5 parts by weight based on 100 parts by weight of the total of the components A and B. The hydrotalcite (component G) is preferably contained in an amount of 0.01 to 5 parts by weight based on 100 parts by weight of the total of the components A and B. The carbodiimide compound (component H) is preferably contained in an amount of 0.001 to 5 parts by weight based on 100 parts by weight of the polylactic acid (component B).

(Embodiment 6)

A resin composition comprising the component A, the component B, the inorganic filler (component C), the bromine-based flame retardant (component D), the antimony-based flame retarding aid (component E) and the optical stabilizer (component F) and having a component A content of 5 to 95 parts by weight, a component C content of 0 to 150 parts by weight, a component D content of 5 to 80 parts by weight, a component E content of 0 to 30 parts by weight and a component F content of 0 to 5 parts by weight based on 100 parts by weight of the total of the components A and B is preferred. A molded article of this resin composition is excellent in flame retardancy, light resistance and melt stability. It is especially excellent in pin striking strength and tap strength. The molded article may be used in electronic parts, home electric appliances and lighting parts. It is particularly useful for the cap of a fluorescent lamp.

The resin composition preferably has a pin striking strength of 60 kgf or more. The pin striking strength is a value when a jig having a guide portion with a diameter of 1.8 mm and a length of 5 mm and a tapered portion with an inclination of (15.0-1.8)/40.0 continuous to the guide portion is inserted into a pin hole having a diameter of 1.9 mm in the cap of the fluorescent lamp at a rate of 300 mm/min.

The bromine-based flame retardant (component D) is preferably a compound represented by the following formula (iii) or (iv).

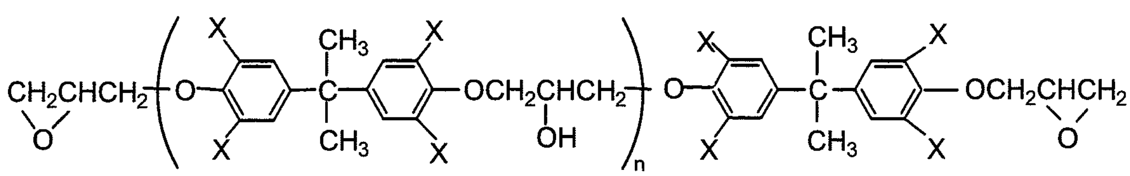

(iii)

In the above formula, X is elemental bromine and/or elemental chlorine.

N is an integer of 5 to 20.

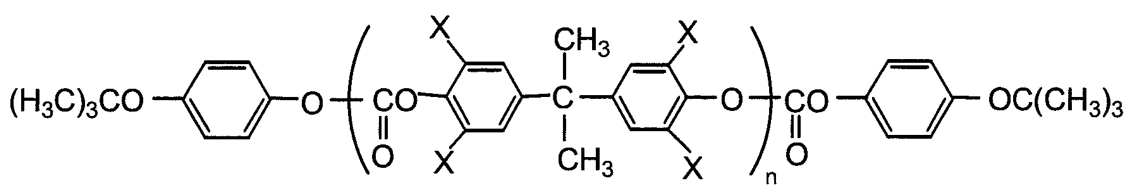

(iv)

In the above formula, X is elemental bromine and/or elemental chlorine.
N is an integer of 3 to 12.
The ester exchange inhibitor (component G) is preferably contained in an amount of 0.01 to 5 parts by weight based on 100 parts by weight of the total of the components A and B. The antioxidant (component H) is preferably contained in an amount of 0.01 to 5 parts by weight based on 100 parts by weight of the total of the components A and B. The antistatic agent (component J) is preferably contained in an amount of 0.01 to 10 parts by weight based on 100 parts by weight of the total of the components A and B. The carbodiimide compound (component K) is preferably contained in an amount of 0.001 to 5 parts by weight based on 100 parts by weight of the polylactic acid (component B).

(method of manufacturing resin composition)

The resin composition of the present invention can be manufactured by mixing together the aromatic polyester (component A) and the polylactic acid (component B) and optionally other components. The carboxyl group concentration of the component B is preferably 15 eq/ton or less. The lactide content of the component B is preferably 0 to 700 ppm by weight.
The components A and B can be mixed together by melt blending or solution blending. They are preferably mixed together in a molten state by kneading in a kneader, single-screw kneader, double-screw kneader or melt reactor.
The kneading temperature may be a temperature at which the both components are molten, preferably 230 to 280˚C, more preferably 230 to 260˚C when the stability of the resin is taken into consideration. Use of a compatibilizing agent at the time of kneading is preferred because the homogeneity of the resin can be improved and the kneading temperature can be reduced.
Examples of the compatibilizing agent include inorganic fillers, polymer compounds obtained by graft- or co-polymerizing a glycidyl compound or acid anhydride, graft polymers having an aromatic polycarbonate chain and organic metal compounds, all of which may be used alone or in combination of two or more.
The amount of the compatibilizing agent is preferably 15 to 1 part by weight, more preferably 10 to 1 part by weight based on 100 parts by weight of the polylactic acid (component B). When the amount of the compatibilizing agent is smaller than 1 part by weight, the effect of the compatibilizing agent is small and when the amount is larger than 15 parts by weight, mechanical properties deteriorate disadvantageously.

(physical properties of resin composition)

The stereo crystal rate (S) of the resin composition of the present invention is preferably 90 % or more, more preferably 95 to 100 %. The stereo crystallization ratio (Cr) of the resin composition of the present invention is preferably 50 % or more, more preferably 60 to 100 %. The carboxyl group concentration of the resin composition of the present invention is preferably 15 eq/ton or less, more preferably 10 eq/ton or less. The lactide content of the resin composition of the present invention is preferably 0 to 600 ppm by weight, more preferably 0 to 300 ppm by weight.

(molded article)

The resin composition obtained by the present invention has excellent moldability and can be molded to obtain various molded articles and sheets. Commonly known melt molding techniques such as one in which the resin composition is molded after it is molten and one in which it is compressed and welded may be employed but injection molding, extrusion molding, blow molding, foam molding and press molding may be advantageously used.

Examples

The following examples are provided for the purpose of further illustrating the present invention but are in no way to be taken as limiting.

1. resin

The Duranex 2002 of Win Tech Polymer Co. , Ltd. was used as PBT.

2. The physical properties of the polylactic acid were measured by the following methods.

(1) melting point (Tm), glass transition point (Tg)

In the present invention, the melting point (Tm) and the glass transition point (Tg) were obtained by measuring the melting peak and the inflection point of heat capacity of the polylactic acid with DSC (TA-2920 of TA Instrument Co., Ltd.) when the polylactic acid was heated at a temperature elevation rate of 20˚C/min.
(2) weight average molecular weight (Mw)
The weight average molecular weight (Mw) was measured by setting the GPC-804L column of Shodex Co., Ltd. in the Allience GPC apparatus of Waters Co., Ltd., dissolving 50 mg of a sample in 5 ml of a mixed solvent of chloroform and HFIP and developing it with chloroform at 40˚C. The weight average molecular weight (Mw) was calculated in terms of polystyrene.
(3) lactide content
The lactide content was measured by setting the GPC-804L column of Shodex Co., Ltd. in the Allience GPC apparatus of Waters Co., Ltd. , dissolving 50 mg of the sample in 5 ml of a mixed solvent of chloroform and HFIP and developing it with chloroform at 40˚C, and the percentage of the area of the lactide component to the total of the area of the polymer component and the area of the lactide component in the obtained chromatogram was obtained.
(4) carboxy group concentration
The sample was dissolved in purified o-cresol in a nitrogen gas stream and titrated with an ethanol solution of 0.05 N potassium hydroxide using Bromocresol Blue as an indicator.
(5) stereo crystal rate (S)
The stereo crystal rate (S) was obtained based on the following equation (1) by measuring the melting enthalpy with DSC (TA-2920 of TA Instrument Co., Ltd.).

$$S\ (\%) = (\Delta Hms/\Delta Hms^0)/(\Delta Hmh/\Delta Hmh^0 + \Delta Hms/\Delta Hms^0) \qquad (1)$$

($\Delta Hms^0$ = 203.4 J/g, $\Delta Hmh^0$ = 142 J/g, ΔHms = melting enthalpy of melting point of stereocomplex and ΔHmh = melting enthalpy of homocrystal)
(6) stereo crystallization ratio (Cr)
The stereocomplex crystallizing ratio (Cr) was obtained based on the following equation (2) from the total $\Sigma I_{SCi}$ of the integral intensities of diffraction peaks derived from the stereocomplex crystal which appeared at 2θ = 12.0˚, 20.7˚ and 24.0˚ and the integral intensity $I_{HM}$ of a diffraction peak derived from a homocrystal which appeared at 2θ = 16.5˚ in a diffraction intensity profile in the equator direction obtained with the ROTA FLEX RU200B type X-ray diffraction apparatus of Rikagaku Denki Co., Ltd.

Measurement conditions
X-ray source: Cu-Kα line (confocal mirror)
Output: 45 kV x 70 mA
Slit: 1 mm to 0.8 mm in diameter
Camera length: 120 mm
Integral time: 10 minutes

$$Cr\ (\%) = \Sigma I_{SCi}/(\Sigma I_{SCi} + I_{HM}) \times 100 \qquad (2)$$

($\Sigma I_{SCi} = I_{SC1} + I_{SC2} + I_{SC3}$, and $I_{SCi}$ (i = 1 to 3) is the integral intensity of a diffraction peak at 2θ = 12.0˚, 20.7˚ or 24.0˚.)

3. The physical properties of the resin composition and the molded article were measured by the following methods.

(1) Stereo crystal rate (S)
This was measured by the same method as that for the polylactic acid.
(2) Stereo crystallization ratio (Cr)
This was measured by the same method as that for the polylactic acid.
(3) Lactide content
This was measured by the same method as that for the polylactic acid.
(4) Chemical resistance of molded article
The molded article was immersed in toluene, dichloromethane, THF, acetone, ethanol, 20 % sulfuric acid and 10

% NaOH and kept at 25˚C for 1 day to check its appearance and weight change for evaluation based on the following criteria. The weight change rate was obtained by measuring the difference from the initial weight after the chemical was lightly wiped off from the extracted molded article.

○: absolute value of weight change rate is 10 % or less and appearance remains unchanged
△: absolute value of weight change rate is 10 % or less and appearance changes
×: absolute value of weight change rate is more than 10 % and appearance greatly changes

(5) carboxyl group concentration

The sample was dissolved in benzyl alcohol and titrated with a 0.01 N NaOH benzyl alcohol using phenolphthalein as an indicator.

(6) deflection temperature under load

The deflection temperature under load was measured in accordance with ASTM-648.

(7) bending strength, flexural modulus

The bending strength and the flexural modulus were measured in accordance with ASTM-790.

(8) surface appearance

The glossiness was measured based on 60˚ specular glossiness in accordance with JISK7105. A sample having a glossiness of less than 90 % was judged as unacceptable and a sample having a glossiness of 90 % or more was judged as acceptable. As for smoothness, a sample whose touch was better than that of a (PBT/glass) molded article was judged as acceptable and a sample whose touch was not better than that of the above molded article was judged as unacceptable.

(9) flame retardancy

This was measured using 5 samples (thickness of 0.8 mm) by the subject 94 (UL-94) method of Underwriters Laboratories.

(10) hydrolysis resistance

As for hydrolysis resistance, a sample having a melt viscosity retention of 80 % or more when it was treated in a pressure cooker at 120˚C and 100 %RH for 2 hours was judged as acceptable (○), a sample having a melt viscosity retention of 85 % or more was judged as excellent (◎) and a sample having a melt viscosity retention of less than 80 % was judged as unacceptable (×).

(11) melt stability

The melt stability is represented by melt viscosity retention after the sample is heated at 260˚C for 10 minutes. A sample having a melt viscosity retention of 80 % or more was judged as acceptable (○). The melt stability is a parameter for the stability of a resin which stays in the apparatus when it is molded. When the melt stability was more than 80 %, it was judged that the sample can be molded without a problem. When the retention was higher than 85 %, the sample was judged as excellent (◎) and when the retention was lower than 80 %, the sample was judged as unacceptable (×).

For the evaluation of the above items (10) and (11), the melt viscosity was measured at 260˚C by the capillograph 10 of Toyo Seiki Co., Ltd. in accordance with JIS K7199.

(12) amount of dissolved alkali metal

The amount of the dissolved alkali metal of the molded article was obtained by measuring the amount of an alkali metal dissolved into super pure water with an atomic absorption photometer after the molded article was ground into 5 $mm^2$ flaky particles and 10 g of the obtained sample was immersed in 80 ml of super pure water at 80˚C for 120 minutes. When the amount of the alkali metal was 50 ppb or less, the sample was judged as acceptable and when the amount was 10 ppb or less, it was judged as excellent. When the amount was more than 50 ppb, it was judged as unacceptable.

(13) amount of volatile gas

The amount of a volatile gas generated from the molded article when 10 g of the sample (5 $mm^2$ flaky ground product of the molded article) was heated at 150˚C for 60 minutes was measured by gas chromatography. When the amount of the volatile gas was 10 ppm or less, the sample was judged as acceptable.

(14) amount of warpage

The amount of warpage of a box type molded article having a length of 200 mm, a width of 130 mm, a height of 50 mm and a thickness of 3 mm was measured to confirm the effect.

(15) tracking resistance

This was evaluated in accordance with IEC Publ. 112 (3$^{rd}$ version)-1979. A test solution A (ammonium chloride) was used. The tracking resistance was expressed by a comparative tracking index (CTI). The measurement sample was a disk-like molded article having a diameter of 50 mm and a thickness of 3 mm.

(16) amount of generated gas

An ASTM tensile test specimen was formed by injection molding under certain conditions and freeze ground to a particle size of 200 μm to prepare a sample. After 0.6 g of the sample was collected and left in a 22 ml head space at 150˚C for 1 hour, the generated gas was measured by gas chromatography. The weight of the generated gas

was expressed in ppm based on the weight of the sample. When the amount of the gas was 100 ppm or less, it was judged as "low gas property".
Measurement conditions:
Apparatus; Perkin Elmer HS-40XL, HP6890
Column; TC1701, 60 mm, IP = 0.25 mm, If = 0.25 μm
Temperature elevation condition; 50˚C (2 minutes) →
10˚C/min → 280˚C (10 minutes)
Detector; FID
(17) metal contamination
After the sample (pellet) was fully dried and 50 g of the pellet was kept airtight in a glass vessel together with a silver plate (15 mm x 20 mm x 0.2 mm) and heated at 200˚C for 200 hours, the change of the color of the silver plate was checked.
(18) light resistance
The sample was illuminated with two fluorescent lamps having an output of 96 W at 80˚C from a distance of 20 cm for 100 hours to measure its ΔE. When ΔE was 5 or less, the sample had high resistance to discoloration without a practical problem and was judged as acceptable.
(19) antistatic property
After the test sample was kept at a temperature of 23 ˚C and a relative humidity of 50 % for 24 hours, it was electrified at an electrode-sample distance of 20 mm and an application voltage of 10 km by using an HONESTMETER (Static H-0110 of Shishido Seidenki Co., Ltd.) under the same conditions as above to measure the time during which the charge voltage became half (half attenuation time). When the half attenuation time was 30 seconds or less, the sample was judged as acceptable.
As the evaluation standard for the adhesion of ordinary dust, right after a disk-like sample was electrified at an electrode-sample distance of 20 mm and an application voltage of 10 kV until it was saturated, it was placed above tobacco ash at a distance of 5 mm to check the adhesion of the tobacco ash. When the above half attenuation time was 30 seconds or less, the adhesion of ash was rarely seen.
(20) Pin striking strength
This is a pin striking strength when a jig having a guide portion with a diameter of 1.8 mm and a length of 5 mm and a tapered portion with an inclination of (15.0-1.8)/40.0 continuous to the guide portion is inserted into a pin hole having a diameter of 1.9 mm in the cap of a fluorescent lamp at a rate of 300 mm/min. It was measured by using the TCM-100 universal tensile tester of Minevea Co. , Ltd. When the pin striking strength was 60 kgf or more, the sample was judged as acceptable.
(21) tap strength
This is resistance to cracking when a tapped screw having a diameter of 4.0 mm is driven into a screw hole having a diameter of 3. 0 mm with a force of 5 kgf. This was evaluated based on the number of samples which did not crack out of 50 samples of the caps for fluorescent lamps. When the number of samples which did not crack was 50, the samples were judged as acceptable.
(21) deformation resistance
This is resistance to cracking when a molded cap for a fluorescent lamp having a halved semicircular section is bent only 3 mm such that it is curved toward a side opposite to the center of the circle. This was evaluated based on the number of samples which did not crack out of 50 samples of the caps for fluorescent lamps. When the number of samples which did not crack was 50, the samples were judged as acceptable.

Production Examples 1 and 2 (manufacture of poly(L-lactic acid): PLLA1 and PLLA2)

0.005 part by weight of tin octylate was added to and reacted with 100 parts by weight of L-lactide (manufactured by Musashino Kagaku Kenkyusho Co., Ltd., optical purity of 100 %) at 180˚C for 2 hours in a nitrogen atmosphere in a reactor having a stirring blade. Thereafter, the residual lactide was removed at 13.3 kPa and the obtained product was formed into a chip to obtain poly(L-lactic acid). The physical properties of the obtained poly (L-lactic acid) are shown in Table 1.

Production Examples 3 and 4 (manufacture of poly(D-lactic acid): PDLA1 and PDLA2)

0.005 part by weight of tin octylate was added to and reacted with 100 parts by weight of D-lactide (manufactured by Musashino Kagaku Kenkyusho Co., Ltd., optical purity of 100 %) at 180˚C for 2 hours in a nitrogen atmosphere in a reactor having a stirring blade. Thereafter, the residual lactide was removed at 13.3 kPa and the obtained product was formed into a chip to obtain poly(D-lactic acid). The physical properties of the obtained poly (D-lactic acid) are shown in Table 1.

Table 1

| Production Example No. | | Production Example 1 | Production Example 2 | Production Example 3 | Production Example 4 |
|---|---|---|---|---|---|
| | | PLLA1 | PLLA2 | PDLA1 | PDLA2 |
| Tm | (˚C) | 176 | 174 | 176 | 175 |
| Tg | (˚C) | 61 | 59 | 61 | 60 |
| Mw | (X $10^4$) | 13.3 | 13.1 | 13.3 | 13 |
| Lactide | (ppm by weight) | 350 | 1600 | 450 | 1500 |

Production Examples 5-1 to 5-4

The poly (L-lactic acid) obtained in each of Production Examples 1 and 2, the poly(D-lactic acid) obtained in each of Production Examples 3 and 4, a phosphoric acid metal salt, a carbodiimide and a crystal nucleating agent shown below were kneaded together in a weight ratio shown in Table 2 to obtain a resin composition.
NA-11: phosphoric acid metal salt (Adekastab NA-11 of ADEKA Co., Ltd. (formerly Asahi Denka Kogyo K.K.))
NA-71: phosphoric acid metal salt (Adekastab NA-71 of ADEKA Co., Ltd. (formerly Asahi Denka Kogyo K.K.))
LA-1: carbodiimide (Carbodilite LA-1 of Nisshinbo Industries, Inc.)

E1: crystal nucleating agent (calcium silicate)
E2: crystal nucleating agent (talc)

To add the crystal nucleating agent, it was supplied from the first feed port of a double-screw kneader. To add the carbodiimide, it was supplied from the second feed port of the double-screw kneader. The above components were melt kneaded together at a cylinder temperature of 230˚C, the kneaded product was extruded into a strand in a water tank, and the strand was cut with a chip cutter to obtain a chip so as to obtain a resin composition. The physical properties of the obtained resin compositions are shown in Table 2.

Table 2 (part 1)

| Production Example No. | | | Production Example 5-1 |
|---|---|---|---|
| scPLA | | name | scPLA1 |
| Composition | Poly(L-lactic acid) | type | PLLA1 |
| | | parts by weight | 50 |
| | Poly(D-lactic acid) | type | PDLA1 |
| | | parts by weight | 50 |
| | Phosphoric acid metal salt | type | - |
| | | parts by weight | - |
| | Carbodiimide | type | LA-1 |
| | | parts by weight | 1 |

(continued)

| Production Example No. | | | Production Example 5-1 |
|---|---|---|---|
| scPLA | | name | scPLA1 |
| Physical properties | Weight average molecular weight (Mw) | ($X10^4$) | 14.6 |
| | Lactide content | (ppm by weight) | 62 |
| | Carboxyl group concentration | (eq/ton) | 1 |
| | Stereo crystal rate (S) | (%) | 85 |
| | Stereo crystallizati on ratio (Cr) | (%) | 60 |
| | Melting point (Tm) | (˚C) | 180/221 |
| LA-1: Carbodilite of Nisshinbo Industries, Inc. | | | |

Table 2 (part 2)

| Production Example No. | | | Production Example 5-2 | Production Example 5-3 | Production Example 5-4 |
|---|---|---|---|---|---|
| scPLA | | name | scPLA2 | scPLA3 | scPLA4 |
| Composition | Poly(L-lactic acid) | type | PLLA1 | PLLA1 | PLLA1 |
| | | pbw | 50 | 50 | 50 |
| | Poly (D-lactic acid) | type | PDLA1 | PDLA1 | PDLA1 |
| | | pbw | 50 | 50 | 50 |
| | Phosphoric acid metal salt | type | NA-11 | NA-71 | NA-71 |
| | | pbw | 0.3 | 0.2 | 0.2 |
| | Carbodiimide | type | LA-1 | LA-1 | LA-1 |
| | | pbw | 1 | 1 | 1 |
| | Crystal nucleating agent | type | - | E1 | E2 |
| | | pbw | - | 0.3 | 1 |
| Physical properties | Weight average molecular weight (Mw) | ($X10^4$) | 14.2 | 14.2 | 14.2 |
| | Lactide content | (ppm by weight) | 62 | 62 | 62 |
| | Carboxyl group concentration | (eq/ton) | 1 | 1 | 1 |
| | Stereo crystal rate (S) | (%) | 100 | 100 | 100 |
| | Stereo crystallization ratio (Cr) | (%) | 100 | 70 | 70 |
| | Melting point (T) | (˚C) | 218 | 218 | 218 |
| pbw: parts by weight<br>A-1: Carbodilite of Nisshinbo Industries, Inc. | | | | | |

Examples 1 to 7

The stereocomplex polylactic acid (component B) obtained in each of Production Examples 5 and PBT resin (Duranex 2002 of Win Tech Polymer Co., Ltd.) (component A) were mixed together in a weight ratio shown in Table 3, dried at 120˚C for 5 hours and kneaded together by means of a double-screw kneader at a cylinder temperature of 250˚C and a feed rate of 2 kg/hr to obtain a resin composition.

The measurement results of the physical properties of the obtained resin compositions are shown in Table 3.

The obtained resin compositions were injection molded at a mold temperature of 110˚C for a clamping time of 2 minutes. The obtained molded articles were white and had a good shape.

Table 3

| Example Numbers | | | Example 1 | Example 2 | Example 3 | Example 4 | Example 5 | Example 6 | Example 7 |
|---|---|---|---|---|---|---|---|---|---|
| Manufacturing conditions | scPLA | type | scPLA1 | scPLA1 | scPLA1 | scPLA1 | scPLA2 | scPLA3 | scPLA4 |
| | A/B ratio | weight ratio | 20/80 | 30/70 | 50/50 | 70/30 | 30/70 | 30/70 | 30/70 |
| Resin composition | Hydrolysis resistance | - | acceptable | acceptable | acceptable | acceptable | acceptable | acceptable | acceptable |
| | Melt stability | - | acceptable | acceptable | acceptable | acceptable | acceptable | acceptable | acceptable |
| | Lactide content | ppm by weight | 50 | 40 | 30 | 20 | 20 | 20 | 20 |
| | Stereo crystallization ratio (Cr) | (%) | 70 | 70 | 70 | 70 | 80 | 85 | 85 |
| | Stereo crystal rate (S) | (%) | 90 | 90 | 90 | 100 | 100 | 100 | 100 |

Examples 8 to 11

The scPLA2 (component B) obtained in each of Production Examples 5, PBT resin (Duranex 2002 of Win Tech Polymer Co., Ltd.) (component A) and an antistatic agent (N) were mixed together in a weight ratio shown in Table 4, dried at 120˚C for 5 hours and introduced into a double-screw kneader from the first feed port. Further, an ester exchange inhibitor (D) was introduced from the second feed port. These components were kneaded together and extruded into a pellet at a cylinder temperature of 250˚C and a feed rate of 2 kg/hr. The physical properties of the obtained pellets are shown in Table 4.

Then, the pellets were injection molded at a molded temperature of 110˚C for a clamping time of 2 minutes to obtain white molded articles having a good shape. The evaluation results of the physical properties of the molded articles are shown in Table 4.

The tensile strengths of the molded articles were 50 to 55 MPa, which proves that the molded articles had sufficiently high strength. The molded articles had excellent hydrolysis resistance, low volatile gas property and low dissolved alkali metal property which are the essential physical properties of a silicon wafer carrier. By using a nonionic polymer antistatic agent such as polyether ester amide, a molded article having antistatic property, low dissolved alkali property and low contamination property can be obtained.

The ester exchange inhibitors and the antistatic agent used are given below.

D1: ester exchange inhibitor (acidic sodium metaphosphate of Rasa Shoei Co., Ltd.)

D2: ester exchange inhibitor (dihexylphosphonoethyl acetate DHPA)

PEEA: antistatic agent (polyether ester amide, Pellestat 6321 of Sanyo Chemical Industries, Ltd.)

Table 4

| Example | | | Ex. 8 | Ex. 9 | Ex. 10 | Ex. 11 |
|---|---|---|---|---|---|---|
| Composition | scPLA | type | scPLA2 | scPLA2 | scPLA2 | scPLA2 |
| | A/B | weight ratio | 30/70 | 30/70 | 30/70 | 30/70 |
| | Ester exchange inhibitor (D) | type | D1 | D2 | - | D1 |
| | | weight ratio (*) | 0.01 | 0.01 | - | 0.01 |
| | Antistatic agent (N) | type | - | - | - | PEEA |
| | | weight ratio(*) | - | - | - | 10 |
| Resin composition | Stereo crystal rate (S) | (%) | 100 | 100 | 100 | 100 |
| | Stereo crystallization ratio (Cr) | (%) | 100 | 100 | 100 | 100 |
| | Carboxyl group concentration | (eq/ton) | 1 | 1 | 1 | 1 |
| | Lactide content | ppm by weight | 24 | 24 | 24 | 24 |
| Molded article | Melt stability | - | ◎ | ◎ | ○ | ◎ |
| | Hydrolysis resistance | - | ◎ | ◎ | ○ | ◎ |
| | Amount of volatile gas | (ppm) | acceptable | acceptable | acceptable | acceptable |
| | Amount of dissolved alkali metal | (ppb) | acceptable | acceptable | acceptable | acceptable |
| * : based on 100 parts by weight of the total of components A and B<br>Ex.: Example | | | | | | |

Examples 12 to 16

70 parts by weight of the scPLA2 (component B) obtained in Production Example 5-2 and 30 parts by weight of PBT resin (component A) (Duranex 2002 of Win Tech Polymer Co., Ltd.) were mixed together and dried at 120˚C for 5 hours, types and amounts (based on 100 parts by weight of the total of the components A and B) shown in Table 5 of an ester exchange inhibitor (D), a crystal nucleating agent (E) and an antioxidant (F) were added from the second feed port, and further montanic acid wax (0.5 part by weight based on 100 parts by weight of the total of the components A and B) was added from the third feed port and kneaded with the above components at a cylinder temperature of 250˚C and a feed rate of 1 kg/hr to obtain a resin composition. The physical properties of the obtained resin compositions are shown in Table 5.

The obtained resin compositions were injection molded at a mold temperature of 110˚C for a clamping time of 1 minute for a composition containing the crystal nucleating agent and for 2 minutes for a composition containing no crystal nucleating agent. The obtained molded articles were white and had a good shape. The physical properties of the obtained molded articles are shown in Table 5. The molded articles were excellent (◎) in melt stability and hydrolysis resistance and had a low-temperature brittle temperature of -30 to 40˚C.

Although they were unreinforced and flame retardant, it was judged that they had preferred physical properties for the molding of electric and electronic parts or optical fiber loose tubes.

The following ester exchange inhibitors, crystal nucleating agents and antioxidant were used.

D1: ester exchange inhibitor (acidic sodium metaphosphate manufactured by Rasa Shoei Co., Ltd.)
D2: ester exchange inhibitor (dihexylphosphonoethyl acetate DHPA)
E1: crystal nucleating agent (calcium silicate manufactured by Nakaraitesk Co., Ltd.)
E2: crystal nucleating agent (talc, P-2 of Nippon Talc Co., Ltd.)
F1: hindered phenol-based antioxidant (n-octadecyl 3-(3',5'-di-t-butyl-4'-hydroxyphenyl)-propionate)

Table 5

| Example Numbers | | | Ex. 12 | Ex. 13 | Ex. 14 | Ex. 15 | Ex. 16 |
|---|---|---|---|---|---|---|---|
| Composition | scPLA | type | scPLA2 | scPLA2 | scPLA2 | scPLA2 | scPLA2 |
| | (A)/(B) | weight ratio | 30/70 | 30/70 | 30/70 | 30/70 | 30/70 |
| | Montanic acid wax | pbw | 0.5 | 0.5 | 0.5 | 0.5 | 0.5 |
| | Ester exchange inhibitor (D) | type | D1 | D1 | D1 | D2 | D2 |
| | | pbw | 0.01 | 0.01 | 0.01 | 0.01 | 0.01 |
| | Antioxidant (F) | type | F1 | F1 | F1 | F1 | F1 |
| | | pbw (*) | 0.5 | 0.5 | 0.5 | 0.5 | 0.5 |
| | Crystal nucleating agent (E) | type | - | E1 | E1/E2 | E1 | E1/E2 |
| | | pbw (*) | - | 0.2 | 0.2/1 | 0.2 | 0.2/1 |
| Resin composition | Stereo crystal rate (S) | (%) | 100 | 100 | 100 | 100 | 100 |
| | Stereo crystallization ratio (Cr) | (%) | 100 | 100 | 100 | 100 | 100 |
| | Carboxyl group concentration | (eq/ton) | 1 | 1 | 1 | 1 | 1 |
| | Lactide content | ppm by weight | 23 | 23 | 22 | 23 | 24 |

(continued)

| Example Numbers | | | Ex. 12 | Ex. 13 | Ex. 14 | Ex. 15 | Ex. 16 |
|---|---|---|---|---|---|---|---|
| Molded article | Melt stability | - | ◎ | ◎ | ◎ | ◎ | ◎ |
| | Hydrolysis resistance | - | ◎ | ◎ | ◎ | ◎ | ◎ |
| | Low-temperature brittle temperature | (˚C) | -40 | -30 | -30 | -30 | -30 |
| | Heat deformation temperature | (˚C) | 150 | 155 | 156 | 155 | 156 |
| | Tensile strength | MPa | 55 | 55 | 53 | 55 | 53 |
| pbw:parts by weight Ex.: Example<br>* : based on 100 parts by weight of the total of components A and B | | | | | | | |

Examples 17 to 20

A polyester elastomer was added in an amount of 5 parts by weight based on 100 parts by weight of the total of the components A and B in place of montanic acid wax in Examples 13 to 16 and treated likewise to obtain a resin composition. The physical properties of the obtained resin compositions are shown in Table 6.

The obtained resin compositions were injection molded at a mold temperature of 110˚C for a clamping time of 1 minute to obtain white molded articles. The physical properties of the obtained molded articles are shown in Table 6. The obtained molded articles were excellent (◎) in melt stability and hydrolysis resistance and had high moldability and impact strength. It was judged that the molded articles were preferred for the molding of car hinged connectors.

The following polyester elastomer (G), ester exchange inhibitors (D), crystal nucleating agents (E) and antioxidant (F) were used.

TR-EL-1: polyester elastomer (TR-EL-1 of Teijin Ltd.)

D1: ester exchange inhibitor (acidic sodium metaphosphate manufactured by Rasa Shoei Co., Ltd.)
D2: ester exchange inhibitor (dihexylphosphonoethyl acetate DHPA)
E1: crystal nucleating agent (calcium silicate manufactured by Nakaraitesk Co., Ltd.)
E2: crystal nucleating agent (talc, P-2 of Nippon Talc Co., Ltd.)
F1: hindered phenol-based antioxidant (n-octadecyl 3-(3',5'-di-t-butyl-4'-hydroxyphenyl)-propionate)

Table 6

| Example Numbers | | | Ex. 17 | Ex. 18 | Ex. 19 | Ex. 20 |
|---|---|---|---|---|---|---|
| Composition | scPLA | type | scPLA2 | scPLA2 | scPLA2 | scPLA2 |
| | (A)/(B) | weight ratio | 30/70 | 30/70 | 30/70 | 30/70 |
| | polyester elastomer (G) | - type | TR-EL-1 | TR-EL-1 | TR-EL-1 | TR-EL-1 |
| | | pbw (*) | 5 | 5 | 5 | 5 |
| | Ester exchange inhibitor (D) | type | D1 | D1 | D2 | D2 |
| | | pbw (*) | 0.01 | 0.01 | 0.01 | 0.01 |
| | Antioxidant (F) | type | F1 | F1 | F1 | F1 |
| | | pbw (*) | 0.5 | 0.5 | 0.5 | 0.5 |
| | Crystal nucleating agent (E) | type | E1 | E1/E2 | E1 | E1/E2 |
| | | pbw (*) | 0.2 | 0.2/1 | 0.2 | 0.2/1 |

(continued)

| Example Numbers | | | Ex. 17 | Ex. 18 | Ex. 19 | Ex. 20 |
|---|---|---|---|---|---|---|
| Resin composition | Stereo crystal rate (S) | (%) | 100 | 100 | 100 | 100 |
| | Stereo crystallization ratio (Cr) | (%) | 100 | 100 | 100 | 100 |
| | Carboxyl group concentration | (eq/ton) | 1 | 1 | 1 | 1 |
| | Lactide content | ppm by weight | 23 | 22 | 23 | 24 |
| Molded article | Melt stability | - | ◎ | ◎ | ◎ | ◎ |
| | Hydrolysis resistance | - | ◎ | ◎ | ◎ | ◎ |
| | Impact strength | (J/m) | 45 | 44 | 44 | 44 |
| | Tensile strength | (MPa) | 55 | 53 | 55 | 53 |
| pbw : parts by weight Ex.: Example<br>* : based on 100 parts by weight of the total of components A and B | | | | | | |

Production Example 6 (manufacture of poly(L-lactic acid))

0.006 part by weight of tin octylate and 0.37 part by weight of octadecyl alcohol were added to and reacted with 100 parts by weight of L-lactide (manufactured by Musashino Kagaku Kenkyusho Co. , Ltd. , optical purity of 100 %) at 190˚C for 2 hours in a nitrogen atmosphere in a reactor having a stirring blade, 0.01 part by weight of an ester exchange inhibitor (dihexylphosphonoethyl acetate DHPA) was added, the residual lactide was removed under reduced pressure, and the obtained product was formed into a chip to obtain poly(L-lactic acid). The obtained poly(L-lactic acid) had a weight average molecular weight of 130,000, a glass transition point (Tg) of 63˚C and a melting point of 180˚C.

Production Example 7 (manufacture of poly(D-lactic acid))

0.006 part by weight of tin octylate and 0.37 part by weight of octadecyl alcohol were added to and reacted with 100 parts by weight of D-lactide (manufactured by Musashino Kagaku Kenkyusho Co. , Ltd. , optical purity of 100 %) at 190˚C for 2 hours in a nitrogen atmosphere in a reactor having a stirring blade, 0.01 part by weight of an ester exchange inhibitor (dihexylphosphonoethyl acetate DHPA) was added, the residual lactide was removed under reduced pressure, and the obtained product was formed into a chip to obtain poly(D-lactic acid). The obtained poly(D-lactic acid) had a weight average molecular weight of 130,000, a glass transition point (Tg) of 63˚C and a melting point of 180˚C.

Production Example 8 (manufacture of stereocomplex polylactic acid)

After 50 parts by weight of the chip of the poly(L-lactic acid) obtained in Production Example 6 and 50 parts by weight of the chip of the poly(D-lactic acid) obtained in Production Example 7 were weighed and well mixed together, the resulting mixture was kneaded and extruded into a strand in a water tank by the Laboplastomill S-15 at a screw temperature of 260˚C, and the strand was taken out from the water tank and formed into a chip with a chip cutter to obtain a stereocomplex resin. The obtained stereocomplex polylactic acid had an Mw of 125, 000, a Tm of 180˚C and 223˚C and a stereo crystal rate (S) of 65 %.

Production Example 9 (manufacture of phosphate-containing sterecomplex polylactic acid)

After 50 parts by weight of the chip of the poly(L-lactic acid) obtained in Production Example 6 and 50 parts by weight of the chip of the poly(D-lactic acid) obtained in Production Example 7 were weighed and well mixed with 0.5 part by weight of a phosphoric acid metal salt (Adekastab NA-11 of ADEKA Co., Ltd. (formerly Asahi Denka Kogyo K.K.), the resulting mixture was kneaded and extruded into a strand in a water tank by the Laboplastomill S-15 at a screw temperature of 260˚C, and the strand was taken out from the water tank and formed into a chip with a chip cutter to obtain stereocomplex polylactic acid. The obtained stereocomplex polylactic acid had an Mw of 125,000, a Tm of 180˚C and 220˚C and a stereo crystal rate (S) of 95 %.

Example 21

50 parts by weight of the stereocomplex polylactic acid obtained in Production Example 8 and 50 parts by weight of PBT resin (Duranex 2002 of Win Tech Polymer Co., Ltd.) were kneaded together by Laboplastomill at 250˚C and a feed rate of 1 kg/hr to obtain a resin composition. The obtained resin had a stereo crystal rate (S) of 92 %. The obtained resin composition was injection molded at a mold temperature of 110˚C for a clamping time of 2 minutes to obtain a molded article. The obtained molded article was white and had a stereo crystal rate (S) of 82 % and a good appearance. The evaluation results of its chemical resistance are shown in Table 7.

Example 22

80 parts by weight of the stereocomplex polylactic acid obtained in Production Example 9 and 20 parts by weight of PBT resin (Duranex 2002 of Win Tech Polymer Co., Ltd.) were kneaded together by Laboplastomill at 250˚C and a feed rate of 1 kg/hr to obtain a resin composition. The obtained resin had a stereo crystal rate (S) of 100 %. The obtained resin composition was injection molded at a mold temperature of 110˚C for a clamping time of 1 minute to obtain a molded article. The obtained molded article was white and had a stereo crystal rate (S) of 100 % and a good appearance. The evaluation results of its chemical resistance are shown in Table 7.

Example 23

60 parts by weight of the stereocomplex polylactic acid obtained in Production Example 9, 40 parts by weight of PBT resin (Duranex 2002 of Win Tech Polymer Co., Ltd.) and 0.2 part by weight of calcium silicate (manufactured by Nakaraitesk Co., Ltd.) were kneaded together by Laboplastomill at 250˚C and a feed rate of 1 kg/hr to obtain a resin composition. The obtained resin had a stereo crystal rate (S) of 100 %. The obtained resin composition was injection molded at a mold temperature of 110˚C for a clamping time of 1 minute to obtain a molded article. The obtained molded article was white and had a stereo crystal rate (S) of 100 % and a good appearance. The evaluation results of its chemical resistance are shown in Table 7.

Comparative Example 1

50 parts by weight of the poly(L-lactic acid) obtained in Production Example 6 and 50 parts by weight of PBT resin (Duranex 2002 of Win Tech Polymer Co., Ltd.) were kneaded together by Laboplastomill at 250˚C and a feed rate of 1 kg/hr to obtain a resin composition. The obtained resin composition was injection molded at a mold temperature of 110˚C for a clamping time of 4 minutes to obtain a molded article. The obtained molded article was white and had a good appearance. The evaluation results of its chemical resistance are shown in Table 7.

Table 7

| Chemical | Example 21 | | Example 22 | | Example 23 | | Comparative Example 1 | |
|---|---|---|---|---|---|---|---|---|
| | weight change rate (%) | decision | weight change rate (%) | decision | weight change rate (%) | decision | weight change rate (%) | decision |
| Toluene | 5 | ○ | 4 | ○ | 3 | ○ | 6 | ○ |
| Dichloromethane | 9 | △ | 7 | △ | 6 | ○ | 15 | × |
| THF | 4 | ○ | 3 | ○ | 2 | ○ | 8 | △ - × |
| Acetone | 4 | △ | 2 | ○ | 2 | ○ | 6 | △ |
| Hexane | 1 | ○ | 1 | ○ | 1 | ○ | 2 | ○ |
| Ethanol | 1 | ○ | 1 | ○ | 1 | ○ | 1 | ○ |
| 20 % Sulfuric acid | 0 | ○ | 0 | 0 | 0 | ○ | 0 | ○ |
| 10%NaOH | -15 | × | -10 | △ | -8 | △ | -30 | × |

Example 24

60 parts by weight of the stereocomplex polylactic acid obtained in Production Example 9, 40 parts by weight of PBT resin (Duranex 2002 of Win Tech Polymer Co. , Ltd.), 0.2 part by weight of calcium silicate (manufactured by Nakaraitesk Co., Ltd.), 1 part by weight of talc (P-2 of Nippon Talc Co., Ltd.), 0.5 part by weight of Irganox 1010 and 0.5 part by weight of montanic acid wax (Ricowax E: Clariant International, Ltd.) were kneaded together by Laboplastomill at 250˚C and a feed rate of 1 kg/hr to obtain a resin composition. The obtained resin composition was injection molded at a mold temperature of 110˚C for a clamping time of 1 minute to obtain a molded article. The obtained molded article was white and had a good appearance. The evaluation results of its chemical resistance are shown in Table 8.

Example 25

60 parts by weight of the stereocomplex polylactic acid obtained in Production Example 9, 40 parts by weight of PBT resin (Duranex 2002 of Win Tech Polymer Co. , Ltd.), 0.2 part by weight of calcium silicate (manufactured by Nakaraitesk Co., Ltd.), 30 parts by weight of a glass chopped strand (manufactured by Asahi Fiber Glass Co., Ltd.), 10 parts by weight of Fire Guard 7500 (of Teijin Chemicals Ltd.), 0.5 part by weight of Irganox 1010 and 0.5 part by weight of montanic acid wax (Ricowax E: Clariant International, Ltd.) were kneaded together by Laboplastomill at 250˚C and a feed rate of 1 kg/hr to obtain a resin composition. The obtained resin composition was injection molded at a mold temperature of 110˚C for a clamping time of 2 minutes to obtain a molded article. The obtained molded article was white and had a good appearance. The result of a flame retardancy test on the molded article was UL-V1. The evaluation results of its chemical resistance are shown in Table 8.

Example 26

60 parts by weight of the stereocomplex polylactic acid obtained in Production Example 9, 40 parts by weight of PBT resin (Duranex 2002 of Win Tech Polymer Co. , Ltd.), 0.2 part by weight of calcium silicate (manufactured by Nakaraitesk Co., Ltd.), 30 parts by weight of a glass chopped strand (manufactured by Asahi Fiber Glass Co., Ltd.), 1 part by weight of Carbodilite LA-1 (of Nisshinbo Industries, Inc.), 0.5 part by weight of Irganox 1010 and 0.5 part by weight of montanic acid wax were kneaded together by Laboplastomill at 250˚C and a feed rate of 1 kg/hr to obtain a resin composition. The obtained resin composition was injection molded at a mold temperature of 110˚C for a clamping time of 2 minutes to obtain a molded article. The obtained molded article was white and had a good appearance. The evaluation results of its chemical resistance are shown in Table 7.

Example 27

60 parts by weight of the stereocomplex polylactic acid obtained in Production Example 9, 40 parts by weight of PBT resin (Duranex 2002 of Win Tech Polymer Co. , Ltd.), 0.2 part by weight of calcium silicate (manufactured by Nakaraitesk Co., Ltd.), 30 parts by weight of a glass chopped strand (manufactured by Asahi Fiber Glass Co., Ltd.), 5 parts by weight of a thermoplastic elastomer (Modiper A5300 of NOF Corporation), 1 part by weight of Carbodilite LA-1 (of Nisshinbo Industries, Inc.), 0.5 part by weight of Irganox 1010 and 0.5 part by weight of montanic acid wax (Ricowax E: Clariant International, Ltd.) were kneaded together by Laboplastomill at 250˚C and a feed rate of 1 kg/hr to obtain a resin composition. The obtained resin composition was injection molded at a mold temperature of 110˚C for a clamping time of 2 minutes to obtain a molded article. The obtained molded article was white and had a good appearance. The obtained molded article had excellent toughness and improved impact strength. The evaluation results of its chemical resistance are shown in Table 8.

Table 8

| Chemical | Example 24 | | Example 25 | | Example 26 | | Example 27 | |
|---|---|---|---|---|---|---|---|---|
| | weight change rate (%) | decision | weight change rate (%) | decision | weight change rate (%) | decision | weight change rate (%) | decision |
| Toluene | 2 | ○ | 3 | ○ | 3 | ○ | 5 | ○ |
| Dichloromethane | 5 | ○ | 5 | ○ | 5 | ○ | 10 | × |
| THF | 1 | ○ | 2 | ○ | 2 | ○ | 5 | △ |
| Acetone | 2 | ○ | 2 | ○ | 2 | ○ | 2 | △ |

(continued)

| Chemical | Example 24 | | Example 25 | | Example 26 | | Example 27 | |
|---|---|---|---|---|---|---|---|---|
| | weight change rate (%) | decision | weight change rate (%) | decision | weight change rate (%) | decision | weight change rate (%) | decision |
| Hexane | 0 | ○ | 0 | ○ | 0 | ○ | 1 | ○ |
| Ethanol | 0 | ○ | 1 | ○ | 1 | ○ | 1 | ○ |
| 20 % sulfuric acid | 0 | ○ | 0 | ○ | 0 | ○ | 0 | ○ |
| 10 % NaOH | -10 | △ | -8 | △ | -8 | △ | -8 | × |

Example 28

60 parts by weight of the stereocomplex polylactic acid obtained in Production Example 9, 40 parts by weight of PBT resin (Duranex 2002 of Win Tech Polymer Co., Ltd.), 0.2 part by weight of calcium silicate (manufactured by Nakaraitesk Co., Ltd.), an antistatic agent (mixture of sodium dodecylbenzenesulfonate and a polyoxyethylene derivative: manufactured by Takemoto Yushi Co., Ltd., trade name of TPL-456), 0.5 part by weight of Irganox 1010 and 0.5 part by weight of montanic acid wax (Ricowax E: Clariant International, Ltd.) were kneaded together by Laboplastomill at 250˚C and a feed rate of 1 kg/hr to obtain a resin composition. The obtained resin composition was injection molded at a mold temperature of 110˚C for a clamping time of 2 minutes to obtain a molded article. The obtained molded article was white and had a good appearance. The surface resistance of the obtained molded article degraded.

Table 9

| Chemical | Example 28 | |
|---|---|---|
| | weight change rate (%) | decision |
| Toluene | 1 | ○ |
| Dichloromethane | 5 | ○ |
| THF | 2 | ○ |
| Acetone | 2 | ○ |
| Hexane | 0 | ○ |
| Ethanol | 0 | ○ |
| 20 % sulfuric acid | 0 | ○ |
| 10 % NaOH | -7 | △ |

Example 29

The resin of Example 11 was injection molded under conditions including an injection pressure of 750 $kg/cm^2$, an injection rate of 70 $cm^3/sec$, a cooling time of 60 seconds and a total molding cycle of 75 seconds to obtain a silicon wafer carrier having a diameter of 12 inches. The obtained product had satisfactory properties as a silicon wafer carrier.

Example 30

The resin of Example 17 was injection molded under conditions including an injection pressure of 750 $kg/cm^2$, an injection rate of 70 $cm^3/sec$, a cooling time of 60 seconds and a total molding cycle of 75 seconds to obtain a harness connector. The obtained product had a good appearance and satisfactory properties as a harness connector.

Example 31

The resin of Example 17 was molded by an extrusion molding machine for manufacturing a 40 mm-diameter tube under conditions including a cylinder temperature of 250˚C, a dice temperature of 240˚C, a cooling bath water temperature of 20˚C and a take-up speed of 250 m/min to obtain an optical fiber loose tube (outer diameter of 3 mm,

inner diameter of 2 mm). The obtained loose tube had no abnormal shape and could be put to practical use.

Examples 32 to 37

The stereocomplex polylactic acid (component B) obtained in Production Example 5 and PBT (Duranex 2002 of Win Tech Polymer Co., Ltd.) (component A) were mixed together in a weight ratio shown in Table 10 and dried at 120˚C for 5 hours. Thereafter, an inorganic filler (H), an ester exchange inhibitor (D) and an antioxidant (F) were mixed in a weight ratio shown in Table 10 and kneaded with the above mixture by a double-screw kneader at a cylinder temperature of 250˚C and a feed rate of 2 kg/hr to obtain a resin composition. The measurement results of the physical properties of the obtained resin compositions are shown in Table 10.

The obtained resin compositions were injection molded at a mold temperature of 110˚C for a clamping time of 2 minutes to obtain molded articles. The molded articles were white and had a good shape. The measurement results of the physical properties of the molded articles are shown in Table 10. As obvious from Table 10, the molded articles of the present invention had an excellent surface appearance and the same deflection temperature under load and flexural modulus as those of a molded article comprising PBT as the sole resin component.

Comparative Examples 2 and 3

The type and amount of the polylactic acid in Example 32 were changed as shown in Table 10, PBT (Duranex 2002 of Win Tech Polymer Co., Ltd.) (A) was mixed with the above polylactic acid in a weight ratio shown in Table 10, and the obtained mixture was dried at 120˚C for 5 hours. Thereafter, a glass fiber (H), an ester exchange inhibitor (D) and an antioxidant (F) were mixed in a weight ratio shown in Table 10 and kneaded with the above mixture by a double-screw kneader at a cylinder temperature of 250˚C and a feed rate of 2 kg/hr to obtain a resin composition. The measurement results of the physical properties of the obtained resin compositions are shown in Table 10.

The obtained resin compositions were injection molded at a mold temperature of 110˚C for a clamping time of 4 minutes (2 minutes when PBT was used as the sole resin component) to obtain molded articles. The obtained molded articles had a glossiness of 90 % or less and their surface properties were judged as unacceptable. As obvious from Table 10, the resin compositions of the present invention had high stiffness and heat resistance.

Table 10

| Examples | | | Example 32 | Example 33 | Example 34 | Comparative Example 2 |
|---|---|---|---|---|---|---|
| Composition | Polylactic acid | type | scPLA1 | scPLA1 | scPLA1 | - |
| | Component A/ Comonent B | weight ratio | 30/70 | 50/50 | 70/30 | 100/0 |
| | Inorganic filler (H) | type | H1 | H1 | H1 | H1 |
| | | parts by weight (*) | 15 | 15 | 15 | 15 |
| | Ester exchange inhibitor (D) | type | D1 | D1 | D1 | D1 |
| | | parts by weight (*) | 0.01 | 0.01 | 0.01 | 0.01 |
| | Antioxidant (F) | type | F1 | F1 | F1 | F1 |
| | | parts by weight (*) | 0.2 | 0.2 | 0.2 | 0.2 |
| Physical properties of composition | Lactide content | (ppm) | 100 | 120 | 200 | 200 |
| | Carboxyl group concentration | (eq/ton) | 0 | 0 | 0 | 10 |
| | Stereo crystal rate (S) | (%) | 90 | 90 | 90 | - |
| | Stereo crystallization ratio (Cr) | (%) | 70 | 70 | 70 | - |
| Physical properties of molded article | Surface appearance | smoothness | acceptable | acceptable | acceptable | unacceptable |
| | | glossiness | acceptable | acceptable | acceptable | unacceptable |
| | Deflection temperature under load (1.82MPa) | (°C) | 200 or more | 200 or more | 200 or more | 200 or more |
| | Flexural modulus | (MPa) | 4900 | 5000 | 5100 | 5500 |

(Note) based on 100 parts by weight of the total of components A and B

Table 10 (continued)

| Examples | | | Comparative Example 3 | Example 35 | Example 36 | Example 37 |
|---|---|---|---|---|---|---|
| Composition | Polylactic acid | type | PLLA1 | scPLA2 | scPLA3 | scPLA4 |
| | Component A/ Comonent B | weight ratio | 50/50 | 30/70 | 30/70 | 30/70 |
| | Inorganic filler (H) | type | H1 | H1 | H1 | H1 |
| | | parts by weight (*) | 15 | 15 | 15 | 15 |
| | Ester exchange inhibitor (D) | type | D1 | D1 | D1 | D2 |
| | | parts by weight (*) | 0.01 | 0.01 | 0.01 | 0.01 |
| | Antioxidant (F) | type | F1 | F1 | F1 | F2 |
| | | parts by weight (*) | 0.2 | 0.2 | 0.2 | 0.2 |
| Physical properties of composition | Lactide content | (ppm) | 150 | 200 | 220 | 200 |
| | Carboxyl group concentration | (eq/ton) | 50 | 0 | 0 | 0 |
| | Stereo crystal rate (S) | (%) | - | 100 | 100 | 100 |
| | Stereo crystallization ratio (Cr) | (%) | - | 80 | 85 | 85 |
| Physical properties of molded article | Surface appearance | smoothness | unaccept-able | acceptable | acceptable | acceptable |
| | | glossiness | unaccept-able | acceptable | acceptable | acceptable |
| | Deflection temperature under load (1.82MPa) | (°C) | 130 | 200 or more | 200 or more | 200 or more |
| | Flexural modulus | (MPa) | 4900 | 5100 | 5000 | 5200 |

(Note) based on 100 parts by weight of the total of components A and B

The abbreviations in Table 10 denote the following.

H1: glass fiber (5 mm chopped strand having a diameter of 13 μm: Nippon Electric Glass Co., Ltd.)
D1: acidic sodium metaphosphate manufactured by Rasa Shoei Co., Ltd.
D2: DHPA
F1: n-octadecyl
3-(3',5'-di-t-butyl-4'-hydroxyphenyl)-propionate) F2:
tetrakis[methylene-3-(3',5'-di-t-butyl-4-hydroxyphenyl)p ropionate]methane

Examples 38 to 43

The stereocomplex polylactic acid (component B) obtained in each of Production Examples 5 and PBT (Duranex 2002 of Win Tech Polymer Co., Ltd.) (component A) were mixed together in a weight ratio shown in Table 11 and dried at 120˚C for 5 hours. Thereafter, an inorganic filler (H), a bromine-based flame retardant (I), an antimony-based flame retarding aid (J), an ester exchange inhibitor (D), an antioxidant (F), a crystal nucleating agent (E1: calcium silicate, E2: talc) and fibrous PTFE as a dropping inhibitor were mixed in a weight ratio shown in Table 11 and kneaded with the above mixture by a double-screw kneader at a cylinder temperature of 250˚C and a feed rate of 2 kg/hr to obtain a resin composition. The measurement results of the physical properties of the obtained resin compositions are shown in Table 11.

The obtained resin compositions were injection molded at a mold temperature of 110˚C for a clamping time of 2 minutes to obtain molded articles. The obtained molded articles were white and had a good shape. The evaluation results of the physical properties of the molded articles are shown in Table 11.

Comparative Examples 4 and 5

The type and amount of the polylactic acid in Example 32 were changed as shown in Table 11, PBT resin (Duranex 2002 of Win Tech Polymer Co., Ltd.) (component A) was mixed with the polylactic acid in a weight ratio shown in Table 11, and the obtained mixture was dried at 120˚C for 5 hours. Thereafter, an inorganic filler (H), a bromine-based flame retardant (I), an antimony-based flame retarding aid (J), an ester exchange inhibitor (D), an antioxidant (F) and fibrous PTFE as a dropping inhibitor were mixed in a weight ratio shown in Table 11 and kneaded with the above mixture by a double-screw kneader at a cylinder temperature of 250˚C and a feed rate of 2 kg/hr to obtain a resin composition. The measurement results of the physical properties of the obtained resin compositions are shown in Table 11.

The obtained resin compositions were injection molded at a mold temperature of 110˚C for a clamping time of 4 minutes (2 minutes when PBT was used as the sole resin component) to obtain molded articles. The evaluation results of the physical properties of the molded articles are shown in Table 11. As shown in Table 11, the surface appearances of the molded articles were unacceptable.

Table 11

| Examples | | | Example 38 | Example 39 | Example 40 | Comparative Example 4 |
|---|---|---|---|---|---|---|
| Composition | Polylactic acid | type | ScPLA2 | ScPLA2 | ScPLA2 | - |
| | A/B | weight ratio | 30/70 | 50/50 | 70/30 | 100/0 |
| | Inorganic filler (H) | type | H1 | H1 | H1 | H1 |
| | | pbw (*) | 15 | 15 | 15 | 15 |
| | Bromine-based flame retardant (I) | type | I1 | I1 | I1 | I1 |
| | | pbw (*) | 20 | 20 | 20 | 20 |
| | Antimony-based flame retarding aid (J) | type | J1 | J1 | J1 | J1 |
| | | pbw (*) | 5 | 5 | 5 | 5 |
| | Ester exchange inhibitor (D) | type | D1 | D1 | D1 | D1 |
| | | parts by weight (*) | 0.01 | 0.01 | 0.01 | 0.01 |
| | Antioxidant (F) | type | F1 | F1 | F1 | F1 |
| | | pbw (*) | 0.2 | 0.2 | 0.2 | 0.2 |
| | Crystal nucleating agent (E) | type | - | - | - | - |
| | | pbw (*) | - | - | - | - |
| | Dropping inhibitor | type | PTFE | PTFE | PTFE | PTFE |
| | | pbw (*) | 0.5 | 0.5 | 0.5 | 0.5 |
| Physical properties of composition | Lactide content | (ppm) | 220 | 160 | 60 | 0 |
| | Carboxyl group concentration | (eq/ton) | 0 | 0 | 0 | 10 |
| | Stereo crystal rate | (%) | 90 | 90 | 90 | - |
| | Stereo crystallization ratio | (%) | 70 | 70 | 70 | - |
| Physical properties of molded article | Flame retardancy | — | V0 | V0 | V0 | V0 |
| | Surface appearance | smoothness | acceptable | acceptable | acceptable | unacceptable |
| | | glossiness | acceptable | acceptable | acceptable | unacceptable |
| | Deflection temperature under load (1.82MPa) | (°C) | 200 or more | 200 or more | 200 or more | 200 or more |
| | Flexural modulus | (MPa) | 4900 | 4900 | 4900 | 5300 |

pbw: parts by weight

(Note) based on 100 parts by weight of the total of components A and B

Table 11 (continued)

| Examples | | | Comparative Example 5 | Example 41 | Example 42 | Example 43 |
|---|---|---|---|---|---|---|
| Composition | Polylactic acid | type | PLLA1 | scPLA1 | scPLA1 | scPLA2 |
| | A/B | weight ratio | 70/30 | 30/70 | 30/70 | 70/30 |
| | Inorganic filler (H) | type | H1 | H1 | H1 | H1 |
| | | pbw (*) | 15 | 15 | 15 | 30 |
| | Bromine-based flame retardant (I) | type | I1 | I1 | I1 | I1 |
| | | pbw (*) | 20 | 20 | 20 | 20 |
| | Antimony-based flame retarding aid (J) | type | J1 | J1 | J1 | J1 |
| | | pbw (*) | 5 | 5 | 5 | 5 |
| | Ester exchange inhibitor (D) | type | D1 | D1 | D1 | D2 |
| | | parts by weight (*) | 0.01 | 0.01 | 0.01 | 0.01 |
| | Antioxidant (F) | type | F1 | F1 | F1 | F2 |
| | | pbw (*) | 0.2 | 0.2 | 0.2 | 0.2 |
| | Crystal nucleating agent (E) | type | - | E1 | E2 | — |
| | | pbw (*) | - | 0.3 | 1 | — |
| | Dropping inhibitor | type | PTFE | PTFE | PTFE | PTFE |
| | | pbw (*) | 0.5 | 0.5 | 0.5 | 0.5 |
| Physical properties of composition | Lactide content | (ppm) | 60 | 180 | 200 | 220 |
| | Carboxyl group concentration | (eq/ton) | 60 | 0 | 0 | 0 |
| | Stereo crystal rate | (%) | 0 | 100 | 100 | 100 |
| | Stereo crystallization ratio | (%) | 0 | 85 | 85 | 85 |
| Physical properties of molded article | Flame retardancy | — | V0 | V0 | V0 | V0 |
| | Surface appearance | smoothness | unacceptable | acceptable | acceptable | acceptable |
| | | glossiness | unacceptable | acceptable | acceptable | acceptable |
| | Deflection temperature under load (1.82MPa) | (°C) | 127 | 200 or more | 200 or more | 200 or more |
| | Flexural modulus | (MPa) | 4700 | 5000 | 4900 | 5100 |

pbw: parts by weight

(Note) based on 100 parts by weight of the total of components A and B

The abbreviations in Table 11 denote the following.

H1: glass fiber (5 mm chopped strand having a diameter of 13 μm: Nippon Electric Glass Co., Ltd.)
I1: Fire Guard 7500 of Teijin Chemicals Ltd., polymerization degree n of about 5
J1: antimony trioxide (PATOX-M: Nippon Seiko Co., Ltd.)
D1: acidic sodium metaphosphate manufactured by Rasa Shoei Co., Ltd.
D2: DHPA
F1: n-octadecyl-(3',5'-di-t-butyl-4'-hydroxyphenyl)-propiona te
F2:
tetrakis[methylene-3-(3',5'-di-t-butyl-4-hydroxypyenyl)p ropionate]methane
E1: calcium silicate
E2: talc
PTFE: fibrous PTFE

The chemical resistances of the molded articles obtained in Examples 35 to 39 are shown in Table 12.

Table 12 (part 1)

| Chemical | Example 35 | | Example 36 | | Example 37 | | Example 38 | |
|---|---|---|---|---|---|---|---|---|
| | Weight change rate (%) | Decision | Weight change rate (%) | Decision | Weight change rate (%) | Decision | Weight change rate (%) | Decision |
| Toluene | 2 | ○ | 3 | ○ | 3 | ○ | 5 | ○ |
| Dichloromethane | 14 | × | 15 | × | 15 | × | 10 | × |
| THF | 1 | ○ | 2 | ○ | 2 | ○ | 5 | △ |
| Acetone | 5 | △ | 5 | △ | 5 | △ | 2 | △ |
| Hexane | 0 | ○ | 0 | ○ | 0 | ○ | 1 | ○ |
| Ethanol | 0 | ○ | 1 | ○ | 1 | ○ | 1 | ○ |
| 20 % sulfuric acid | 0 | ○ | 0 | ○ | 0 | ○ | 0 | ○ |
| 10 % NaOH | -10 | △ | -8 | △ | -8 | △ | -8 | × |

Table 12 (part 2)

| Chemical | Example 39 | |
|---|---|---|
| | Weight change rate (%) | Decision |
| Toluene | 1 | ○ |
| Dichloromethane | 9 | △ |
| THF | 2 | ○ |
| Acetone | 2 | ○ |
| Hexane | 0 | ○ |
| Ethanol | 0 | ○ |
| 20 % sulfuric acid | 0 | ○ |
| 10 % NaOH | -7 | △ |

Examples 44 to 51

The stereocomplex polylactic acid (component B) obtained in each of Production Examples 5 and PBT resin (Duranex 2002 of Win Tech Polymer Co., Ltd.) (component A) were mixed together in a weight ratio shown in Table 13 and dried at 120°C for 5 hours. Thereafter, an amorphous resin (K), an inorganic filler (H), an ester exchange inhibitor

(D) and an antioxidant (F) were mixed in a weight ratio shown in Table 13 and kneaded with the above mixture by a double-screw kneader at a cylinder temperature of 250˚C and a feed rate of 2 kg/hr to obtain a resin composition. The physical properties of the obtained resin compositions are shown in Table 13.

The obtained resin compositions were injection molded at a mold temperature of 110˚C for a clamping time of 2 minutes to obtain molded articles. The obtained molded articles were white and had a good shape. The qualities of the molded articles are shown in Table 13.

It is understood that the molded articles of the present invention have a high deflection temperature under load, small warpage and excellent dimensional stability. The resin compositions of the present invention provide molded articles having excellent surface properties, dimensional stability and heat resistance. Therefore, the resin compositions of the present invention are advantageous for the molding of housings such as ECU boxes, auto part cases such as connector boxes, car electric parts, electronic part cases such as capacitor boxes and metal insert parts.

Comparative Examples 6 and 7

The operation of Example 44 was repeated except that the types and amounts of the components were changed as shown in Table 13 to obtain resin compositions. The physical properties of the obtained resin compositions are shown in Table 13. The obtained resin compositions were injection molded under the same conditions as in Example 1 to obtain molded articles. The qualities of the obtained molded articles are shown in Table 13.

Table 13 (part 1)

| Example Number | | | Example 44 | Example 45 | Example 46 | C. Ex. 6 | C. Ex. 7 |
|---|---|---|---|---|---|---|---|
| Composition | Polylactic acid (B) | type | scPLA1 | scPLA1 | scPLA1 | - | PLLA1 |
| | (A)/(B) weight ratio | - | 30/70 | 50/50 | 70/30 | 100/0 | 60/40 |
| | Amorphous resin (K) | type | K1 | K1 | K1 | K1 | K1 |
| | | pbw(*) | 20 | 20 | 20 | 20 | 20 |
| | Inorganic filler (H) | type | H1 | H1 | H1 | H1 | H1/H2 |
| | | pbw(*) | 15 | 15 | 15 | 15 | 15/0.3 |
| | Ester exchange inhibitor(D) | type | D1 | D1 | D1 | D1 | D1 |
| | | pbw(*) | 0.01 | 0.01 | 0.01 | 0.01 | 0.01 |
| | Antioxidant(F) | type | F1 | F1 | F1 | F1 | F1 |
| | | pbw(*) | 0.2 | 0.2 | 0.2 | 0.2 | 0.2 |
| Physical properties of composition | Stereo crystal rate (S) | (%) | 90 | 90 | 90 | - | 0 |
| | Stereo crystallization ratio (Cr) | (%) | 70 | 70 | 70 | - | 0 |
| Quality of molded article | Glossiness | | acceptable | acceptable | acceptable | unacceptable | unacceptable |
| | warpage | (mm) | 1 | 1.1 | 1 | 3.4 | 1.6 |
| | Deflection temperature under load (1.82MPa) | (˚C) | 200 or more | 201 or more | 202 or more | 204 or more | 130 |
| | Flexural modulus | (MPa) | 5000 | 5100 | 4800 | 5300 | 4800 |

C.Ex.: Comparative Example pbw: parts by weight
*based on 100 parts by weight of the total of components A and B

Table 13 (part 2)

| Example Number | | | Example 47 | Example 48 | Example 49 | Example 50 | Example 51 |
|---|---|---|---|---|---|---|---|
| Composition | Polylacticacid (component B) | type | scPLA2 | scPLA2 | scPLA2 | scPLA3 | scPLA4 |
| | (A)/(B) weight ratio | - | 40/60 | 40/60 | 40/60 | 40/60 | 40/60 |
| | Amorphous resin (K) | type | K1 | K1 | K2 | K2 | K2 |
| | | pbw(*) | 20 | 20 | 20 | 20 | 20 |
| | Inorganic filler (H) | type | H1/H3 | H1 | H1 | H1 | H1 |
| | | pbw(*) | 15/1 | 15 | 15 | 15 | 15 |
| | Ester exchange inhibitor(D) | type | D1 | D1 | D1 | D1 | D2 |
| | | pbw(*) | 0.01 | 0.01 | 0.01 | 0.01 | 0.01 |
| | Antioxidant (F) | type | F1 | F1 | F1 | F1 | F2 |
| | | pbw(*) | 0.2 | 0.2 | 0.2 | 0.2 | 0.2 |
| Physical properties of composition | Stereo crystal rate | (%) | 100 | 100 | 100 | 100 | 100 |
| | Stereo crystallization ratio (Cr) | (%) | 85 | 85 | 80 | 85 | 85 |
| Quality of molded article | Glossiness | | acceptable | acceptable | acceptable | acceptable | acceptable |
| | warpage | (mm) | 1 | 1 | 1.1 | 1.1 | 1.1 |
| | Deflection temperature under load (1.82MPa) | (˚C) | 200 or more | 201 or more | 202 or more | 203 or more | 200 or more |
| | Flexural modulus | (MPa) | 5200 | 5200 | 5100 | 5000 | 5100 |
| pbw: parts by weight<br>*based on 100 parts by weight of the total of components A and B | | | | | | | |

The abbreviations in Table 13 denote the following.

K1: L1225 polycarbonate of Teijin Chemicals Ltd.
K2: styrene-butadiene-acrylonitrile copolymer manufactured by Mitsui Chemical Co., Ltd.: Suntac UT-61
H1: glass fiber (5 mm chopped strand having a diameter of 13 μm: Nippon Electric Glass Co., Ltd.)
H2: calcium silicate (manufactured by Nakaraitesk Co., Ltd.)
H3: talc (P2 of Nippon Talc Co., Ltd.)
D1: acidic sodium metaphosphate manufactured by Rasa Shoei Co., Ltd.
D2: DHPA
F1: n-octadecyl
3-(3',5'-di-t-butyl-4'-hydroxyphenyl)-propionate
F2: tetrakis[methylene-3-(3',5'-di-t-butyl-4-hydroxypyenyl)p ropionate]methane

Examples 52 to 56, Comparative Examples 8 to 10

The stereocomplex polylactic acid (component B) obtained in each of Production Examples 5-1 and 5-2 and

PBT resin (Duranex 2002 of Win Tech Polymer Co., Ltd.) (component A) were mixed together in a weight ratio shown in Table 14 and dried at 120˚C for 5 hours. Thereafter, the types and amounts shown in Table 14 of an amorphous resin (K), an inorganic filler (H), flame retardants (I, J), an ester exchange inhibitor (D) and an antioxidant (F) were mixed with the above mixture. Further, fibrous PTFE as a dropping inhibitor was added in an amount of 1 part by weight based on 100 parts by weight of the total of the components A and B. The resulting mixture was kneaded by a double-screw kneader at a cylinder temperature of 250˚C and a feed rate of 2 kg/hr to obtain a resin composition. The physical properties of the obtained resin compositions are shown in Table 14.

The obtained resin compositions were injection molded at a mold temperature of 110˚C for a clamping time of 2 minutes (2 minutes when PBT was used as the sole resin component and 4 minutes for others) to obtain molded articles. The obtained molded articles were white and had a good shape. The qualities of the molded articles are shown in Table 14. The molded articles were excellent in flame retardancy, surface appearance (glossiness), heat resistance (heat deformation temperature) and dimensional stability (low warpage).

Table 14 (part 1)

| Example Number | | | Example 52 | Example 53 | Comparative Example 8 | Comparative Example 9 | Comparative Example 10 |
|---|---|---|---|---|---|---|---|
| Composition | Polylactic acid (component B) | type | scPLA1 | scPLA1 | - | - | PLLA1 |
| | (A)/(B) | weight ratio | 30/70 | 70/30 | 100/0 | 100/0 | 60/40 |
| | Amorphous resin (K) | type | K1 | K1 | - | K1 | K1 |
| | | pbw(*) | 10 | 10 | - | 10 | 10 |
| | Inorganic filler (H) | type | H1 | H1/H2 | H1 | H1 | H1 |
| | | pbw(*) | 15 | 15/0.3 | 15 | 15 | 15 |
| | Bromine-based flame retardant (I) | type | I1 | I1 | I1 | I1 | I1 |
| | | pbw (*) | 20 | 20 | 20 | 20 | 20 |
| | Antimony-based flame retarding aid (J) | type | J1 | J1 | J1 | J1 | J1 |
| | | pbw(*) | 5 | 5 | 5 | 5 | 5 |
| | Ester exchange inhibitor (D) | type | D1 | D1 | D1 | D1 | D1 |
| | | pbw(*) | 0.01 | 0.01 | 0.01 | 0.01 | 0.01 |
| | Antioxidant (F) | type | F1 | F1 | F1 | F1 | F1 |
| | | pbw(*) | 0.2 | 0.2 | 0.2 | 0.2 | 0.2 |
| Physical properties of composition | Stereo crystal rate (S) | (%) | 90 | 100 | - | - | 0 |
| | Stereo crystallization ratio (Cr) | (%) | 85 | 85 | - | - | 0 |

(continued)

| Example Number | | | Example 52 | Example 53 | Comparative Example 8 | Comparative Example 9 | Comparative Example 10 |
|---|---|---|---|---|---|---|---|
| Quality of molded article | flame retardancy | | V0 | V0 | V0 | V0 | V0 |
| | Glossiness | | acceptable | acceptable | acceptable | acceptable | unacceptable |
| | warpage | (mm) | 1 | 1 | 0.1 | 0.5 | 1.4 |
| | Deflection temperature under load (1.82MPa) | (˚C) | 200 or more | 200 or more | 200 or more | 200 or more | 130 |
| | Flexural modulus | (MPa) | 4900 | 5000 | 5300 | 5300 | 4800 |

Pbw: parts by weight
*based on 100 parts by weight of the total of components A and B

Table 14 (part 2)

| Example Number | | | Example 54 | Example 55 | Example 56 |
|---|---|---|---|---|---|
| Composition | Polylactic acid (component B) | type | scPLA2 | scPLA3 | scPLA4 |
| | (A)/(B) | weight ratio | 70/30 | 30/70 | 70/30 |
| | Amorphous resin (K) | type | K1 | K1 | K2 |
| | | pbw(*) | 10 | 10 | 10 |
| | Inorganic filler (H) | type | H1 | H1 | H1 |
| | | pbw(*) | 15 | 15 | 30 |
| | Bromine-based flame retardant (I) | type | I1 | I1 | I1 |
| | | pbw(*) | 20 | 20 | 20 |
| | Antimony-based flame retarding aid (J) | type | J1 | J1 | J1 |
| | | pbw(*) | 5 | 5 | 5 |
| | Ester exchange inhibitor (D) | type | D1 | D1 | D2 |
| | | pbw(*) | 0.01 | 0.01 | 0.01 |
| | Antioxidant (F) | type | F1 | F2 | F1 |
| | | pbw(*) | 0.2 | 0.2 | 0.2 |
| Physical properties of composition | Stereo crystal rate (S) | (%) | 100 | 100 | 100 |
| | Stereo crystallization ratio (Cr) | (%) | 85 | 85 | 85 |
| Quality of molded article | flame retardancy | - | V0 | V0 | V0 |
| | Glossiness | - | acceptable | acceptable | acceptable |
| | Warpage | (mm) | 1.1 | 1.1 | 1.2 |
| | Deflection temperature under load (1.82MPa) | (˚C) | 200 or more | 200 or more | 200 or more |
| | Flexural modulus | (MPa) | 5100 | 5000 | 5300 |
| pbw: parts by weight<br>*based on 100 parts by weight of the total of components A and B | | | | | |

The abbreviations in Table 14 denote the following.

H1: glass fiber (5 mm chopped strand having a diameter of 13 μm: Nippon Electric Glass Co., Ltd.)
H2: calcium silicate (manufactured by Nakaraitesk Co., Ltd.) H3: talc (P2 of Nippon Talc Co., Ltd.)
K1: L1225 polycarbonate of Teijin Chemicals Ltd.
K2: styrene-butadiene-acrylonitrile copolymer manufactured by Mitsui Chemical Co., Ltd.; Suntac UT-61
I1: Fire Guard 7500 of Teijin Chemicals Ltd. , polymerization degree n of about 5
J1: antimony trioxide (PATOX-M: Nippon Seiko Co., Ltd.)
D1: acidic sodium metaphosphate manufactured by Rasa Shoei Co., Ltd.
D2: DHPA
F1: n-octadecyl
3-(3',5'-di-t-butyl-4'-hydroxyphenyl)-propionate
F2: tetrakis[methylene-3-(3',5'-di-t-butyl-4-hydroxypyenyl)p ropionate]methane

Examples 57 to 59, Comparative Examples 11 to 13

The stereocomplex polylactic acid (component B) obtained in each of Production Examples 5 and PBT resin

(Duranex 2002 of Win Tech Polymer Co., Ltd.) (component A) were mixed together in a weight ratio shown in Table 15 and dried at 120 ˚C for 5 hours. Thereafter, the types and amounts shown in Table 15 of an amorphous resin (K), an inorganic filler (H), a bromine-based flame retardant (I), an antimony-based flame retarding aid (J), an ester exchange inhibitor (D) and an antioxidant (F) were mixed in a weight ratio shown in Table 15 and kneaded with the above mixture by a double-screw kneader at a cylinder temperature of 250 ˚C and a feed rate of 2 kg/hr to obtain a resin composition. The physical properties of the obtained resin compositions are shown in Table 15.

The obtained resin compositions were injection molded at a mold temperature of 110˚C for a clamping time of 2 minutes to obtain molded articles. The obtained molded articles were white and had a good shape. In Comparative Examples, the resin compositions were injection molded at a mold temperature of 110˚C for a clamping time of 4 minutes (2 minutes when PBT was used as the sole resin component) . The qualities of the molded articles are shown in Table 15. It is understood that the molded articles of the present invention are excellent in flame retardancy, surface appearance (glossiness), heat resistance (heat deformation temperature) and dimensional stability (low warpage).

Table 15

| Example | | | C.Ex. 11 | C.Ex.12 | C.Ex.13 | Example 57 | Example 58 | Example 59 |
|---|---|---|---|---|---|---|---|---|
| Composition | Polylactic acid | type | - | - | PLLA1 | scPLA1 | scPLA1 | scPLA2 |
| | (A)/(B) | Weight ratio | 100/0 | 100/0 | 60/40 | 40/60 | 40/60 | 40/60 |
| | Amorphous resin (K) | type | - | - | - | K2 | K2 | K2 |
| | | pbw (*) | - | - | - | 10 | 10 | 10 |
| | Inorganic filler (H) | type | H2 | H2 | H2 | H2/H3 | H1/H2 | H1/H2 |
| | | pbw (*) | 0.5 | 0.5 | 0.5 | 1/1 | 15/0.5 | 15/0.5 |
| | Bromine-based flame retardant (I) | type | - | I1 | - | - | I1 | I1 |
| | | pbw (*) | - | 20 | - | - | 20 | 20 |
| | Antimony-based flame retarding aid (J) | type | - | J1 | - | - | J1 | J1 |
| | | pbw (*) | - | 5 | - | - | 5 | 5 |
| | Ester exchange inhibitor (D) | type | D1 | D1 | D1 | D1 | D1 | D1 |
| | | pbw (*) | 0.01 | 0.01 | 0.01 | 0.01 | 0.01 | 0.01 |
| | Antioxidant (F) | type pbw (*) | F1 | F1 | F1 | F2 | F2 | F2 |
| | | | 0.2 | 0.2 | 0.2 | 0.2 | 0.2 | 0.2 |
| Physical properties of composition | Stereo crystal rate (S) | (%) | - | - | 0 | 100 | 100 | 100 |
| | Stereo crystallization ratio (Cr) | (%) | - | - | 0 | 85 | 85 | 85 |
| Quality of molded article | Flame retardancy | - | - | V0 | - | - | V0 | V0 |
| | Glossiness | | unacceptable | unacceptable | acceptable | acceptable | acceptable | acceptable |
| | Warpage | (mm) | 3.5 | 3.6 | 1.4 | 1 | 1 | 1 |
| | Deflection temperature under load (1.82MPa) | (˚C) | 200 or more | 200 or more | 129 | 200 or more | 201 or more | 200 or more |
| | Flexural modulus | (MPa) | 5200 | 5200 | 4700 | 4900 | 5000 | 5000 |

C.Ex.: Comparative Example pbw: parts by weight
*based on 100 parts by weight of the total of components A and B

The abbreviations in Table 15 denote the following.

H1: glass fiber (5 mm chopped strand having a diameter of 13 μm: Nippon Electric Glass Co., Ltd.)
H2: calcium silicate (manufactured by Nakaraitesk Co., Ltd.) H3: talc (P2 of Nippon Talc Co., Ltd.)
K1: L1225 polycarbonate of Teijin Chemicals Ltd.
K2: styrene-butadiene-acrylonitrile copolymer manufactured by Mitsui Chemical Co., Ltd.; Suntac
I1: Fire Guard 7500 of Teij in Chemicals Ltd. , polymerization degree n = about 5
J1: antimony trioxide (PATOX-M of Nippon Seiko Co., Ltd.)
D1: acidic sodium metaphosphate manufactured by Rasa Shoei Co., Ltd.
D2: DHPA
F1: n-octadecyl
3-(3',5'-di-t-butyl-4'-hydroxyphenyl)-propionate
F2: tetrakis[methylene-3-(3',5'-di-t-butyl-4-hydroxypyenyl)p ropionate]methane

Examples 60 to 69

The stereocomplex polylactic acid (component B) obtained in each of Production Examples 5 and PBT resin (Duranex 2002 of Win Tech Polymer Co., Ltd.) (component A) were mixed together in a weight ratio shown in Table 16 and dried at 120°C for 5 hours. Thereafter, an inorganic filler (H), flame retardants (I, J), an ester exchange inhibitor (D) and an antioxidant (F) were mixed with the above mixture in a weight ratio shown in Table 16. Further, fibrous PTFE as a dropping inhibitor was added in an amount of 0.5 part by weight based on 100 parts by weight of the total of the components A and B. Montanic acid wax as a release agent was also added in an amount of 0.5 part by weight based on 100 parts by weight of the total of the components A and B. The resulting mixture was kneaded by a double-screw kneader at a cylinder temperature of 250°C and a feed rate of 2 kg/hr to obtain a resin composition. The physical properties of the obtained resin compositions are shown in Table 16.

The obtained resin compositions were injection molded at a mold temperature of 110 °C for a clamping time of 1 minute to obtain molded articles. The obtained molded articles were white and had a good shape. The qualities of the molded articles are shown in Table 16.

It is understood that the resin compositions of the present invention are excellent in heat resistance (deflection temperature under load) and tracking resistance. They also have a short molding cycle. The resin compositions of the present invention provide a PBT/glass fiber-containing molded article having high stiffness as well as biodegradability and heat resistance when they contain a glass fiber. Since the resin compositions of the present invention form a stereocomplex phase fully, they have high heat resistance.

Comparative Examples 14 and 15

The operation of Example 60 was repeated except that the type and amount of the polylactic acid were changed as shown in Table 16 to obtain a resin composition. The physical properties of the obtained resin compositions are shown in Table 16. The obtained resin compositions were injection molded at a mold temperature of 110°C for a clamping time of 1 minute to obtain molded articles. The qualities of the molded articles are shown in Table 16.

Table 16 (part 1)

| Example | | | Example 60 | Example 61 | Example 62 | Comparative Example 14 | Comparative Example 15 |
|---|---|---|---|---|---|---|---|
| Composition | Polylactic acid | type | scPLA1 | scPLA1 | scPLA1 | - | PLLA1 |
| | (A)/(B) | weight ratio | 30/70 | 50/50 | 70/30 | 100/0 | 70/30 |
| | Inorganic filler (H) | type | H1 | H1 | H1 | H1 | H1 |
| | | pbw (*) | 30 | 30 | 30 | 30 | 30 |
| | Bromine-based flame retardant (I) | type | I1 | I1 | I1 | I1 | I1 |
| | | pbw (*) | 15 | 15 | 15 | 15 | 15 |
| | Antimony-based flame retarding aid (J) | type | J1 | J1 | J1 | J1 | J1 |
| | | pbw (*) | 5 | 5 | 5 | 5 | 5 |
| | Ester exchange inhibitor (D) | type | D1 | D1 | D1 | D1 | D1 |
| | | pbw (*) | 0.1 | 0.1 | 0.1 | 0.1 | 0.1 |
| | Antioxidant (F) | type | F1 | F1 | F1 | F1 | F1 |
| | | pbw (*) | 0.2 | 0.2 | 0.2 | 0.2 | 0.2 |
| Physical properties of composition | Stereo crystal rate (S) | (%) | 90 | 90 | 90 | - | 0 |
| | Stereo crystallization ratio (Cr) | (%) | 70 | 70 | 70 | - | 0 |
| Quality of molded article | Flame retardancy | | V0 | V0 | V0 | V0 | NotHB |
| | CTI | (V) | 375 | 375 | 375 | 250 | 370 |
| | Deflection temperature under load (1.82MPa) | (˚C) | 200 or more | 200 or more | 200 or more | 200 or more | 130 |
| | Flexural modulus | (MPa) | 4900 | 5000 | 5100 | 5500 | 4900 |
| pbw: parts by weight<br>*based on 100 parts by weight of the total of components A and B | | | | | | | |

Table 16 (part 2)

| Example | | | Ex. 63 | Ex. 64 | Ex. 65 | Ex. 66 | Ex.67 | Ex.68 | Ex. 69 |
|---|---|---|---|---|---|---|---|---|---|
| Composition | Polylactic acid | type | scPLA1 | scPLA1 | scPLA2 | scPLA2 | scPLA2 | scPLA3 | scPLA4 |
| | (A)/(B) | weight ratio | 30/70 | 30/70 | 30/70 | 30/70 | 30/70 | 30/70 | 30/70 |
| | Inorganic filler (H) | type | H1/H2 | H1/H3 | H1/H3 | H1/H2/H3 | H1/H3 | H1 | H1 |
| | | pbw (*) | 20/5 | 20/5 | 20/5 | 20/5 | 20/5 | 30 | 30 |
| | Bromine-based flame retardant (I) | type | I1 | I1 | I1 | I1 | I1 | I1 | I1 |
| | | pbw (*) | 15 | 15 | 15 | 15 | 15 | 15 | 15 |
| | Antimony-based flame retarding aid (J) | type | J1 | J1 | J1 | J1 | J1 | J1 | J1 |
| | | pbw (*) | 5 | 5 | 5 | 5 | 5 | 5 | 5 |
| | Ester exchange inhibitor D) | type | D1 | D1 | D1 | D1 | D1 | D1 | D1 |
| | | pbw (*) | 0.1 | 0.1 | 0.1 | 0.1 | 0.1 | 0.1 | 0.1 |
| | Antioxidant (F) | type | F1 | F1 | F1 | F1 | F1 | F1 | F1 |
| | | pbw (*) | 0.2 | 0.2 | 0.2 | 0.2 | 0.2 | 0.2 | 0.2 |
| Physical properties of composition | Stereo crystal rate (S) | (%) | 100 | 100 | 100 | 100 | 100 | 100 | 100 |
| | Stereo crystallization ratio (Cr) | (%) | 80 | 80 | 80 | 85 | 86 | 87 | 88 |
| Quality of molded article | Flame retardancy | - | V0 | V0 | V0 | V0 | V0 | V0 | V0 |
| | CTI | (V) | 375 | 375 | 370 | 380 | 390 | 370 | 370 |
| | Deflection temperature under load (1.82MPa) | (˚C) | 200 or more | 200 or more | 200 or more | 200 or more | 200 or more | 200 or more | 200 or more |
| | Flexural modulus | (MPa) | 5100 | 5100 | 5200 | 5200 | 5200 | 5100 | 5100 |

Ex.: Example pbw: parts by weight
*based on 100 parts by weight of the total of components A and B

The abbreviations in Table 16 denote the following.

H1 (inorganic filler): glass fiber (5 mm chopped strand having a diameter of 13 μm: Nippon Electric Glass Co., Ltd.)
H2 (inorganic filler): calcium silicate (manufactured by Nakaraitesk Co., Ltd.)
H3 (inorganic filler): talc (P2 of Nippon Talc Co., Ltd.)
I1 (bromine-based flame retardant): (Fire Guard 7500 of Teijin Chemicals Ltd., polymerization degree n = about 5)
J1 (antimony-based flame retarding aid) : antimony trioxide (PATOX-M of Nippon Seiko Co., Ltd.)
D1 (ester exchange inhibitor): tris(2,6-di-t-butylphenyl)phosphite
D2 (ester exchange inhibitor): tetraphenyl-4,4'-biphenylene phosphite
F1 (antioxidant): n-octadecyl 3-(3',5'-di-t-butyl-4'-hydroxyphenyl)-propionate
F2 (antioxidant): tetrakis[methylene-3-(3',5'-di-t-butyl-4-hydroxyphenyl)p ropionate]methane

Examples 70 to 72

The stereocomplex polylactic acid (component B) obtained in each of Production Examples 5 and PBT resin (Duranex 2002 of Win Tech Polymer Co., Ltd.) (component A) were mixed together in a weight ratio shown in Table 17 and dried at 120˚C for 5 hours. Thereafter, an inorganic filler (H), a flame retardant (I), a flame retarding aid (J) and an ester exchange inhibitor (D) were mixed with the obtained mixture in a weight ratio shown in Table 17. Further, fibrous PTFE (FA100 of Daikin Industries, Ltd.) as a dropping inhibitor was added in an amount of 0.5 part by weight based on 100 parts by weight of the total of the components A and B, and montanic acid wax as a release agent was also added in an amount of 0.5 part by weight based on the same standard. Thereafter, the resulting mixture was kneaded by a double-screw kneader at a cylinder temperature of 250˚C and a feed rate of 2 kg/hr to obtain a resin composition. The physical properties of the obtained resin compositions are shown in Table 17.

The obtained resin compositions were injection molded at a mold temperature of 110˚C for a clamping time of 1 minute to obtain molded articles. The obtained molded articles were white and had a good shape. The qualities of the molded articles are shown in Table 17.

Comparative Examples 16 and 17

Resin compositions and molded articles were manufactured in the same manner as in Example 70 except that the type and amount of the polylactic acid were changed as shown in Table 17. The physical properties of the resin compositions and the molded articles are shown in Table 17. The resin compositions of the present invention had excellent solvent resistance and flame retardancy (V-0). The resin compositions of the present invention were excellent in heat resistance (heat deformation temperature) and melt viscosity stability. They rarely contaminated a metal and had low gas property.

Table 17

| Example | | | Example 70 | Example 71 | Example 72 | C. Ex.16 | C.Ex.17 |
|---|---|---|---|---|---|---|---|
| Composition | Polylactic acid | Type | scPLA1 | scPLA1 | scPLA1 | - | PLLA1 |
| | (A)/(B) | Weight ratio | 30/70 | 50/50 | 70/30 | 100/0 | 50/50 |
| | Inorganic filler (H) | Type | H1 | H1 | H1 | H1 | H1 |
| | | pbw (*) | 30 | 30 | 30 | 30 | 30 |
| | Bromine-based flame retardant (I) | Type | I1 | I1 | I1 | I1 | I1 |
| | | pbw (*) | 15 | 15 | 15 | 15 | 15 |
| | Antimony-based flame retarding aid (J) | Type | J1 | J1 | J1 | J1 | J1 |
| | | pbw (*) | 5 | 5 | 5 | 5 | 5 |
| | Ester exchange inhibitor (D) | Type | D1 | D1 | D1 | D1 | D1 |
| | | pbw (*) | 0.1 | 0.1 | 0.1 | 0.1 | 0.1 |

(continued)

| Example | | | Example 70 | Example 71 | Example 72 | C. Ex.16 | C.Ex.17 |
|---|---|---|---|---|---|---|---|
| Physical properties of composition | Carboxyl group concentration | eq/ton | 20 | 20 | 40 | 50 | - |
| | Lactide content | wtppm | 50 | 40 | 30 | 0 | - |
| | Stereo crystal rate (S) | (%) | 90 | 90 | 90 | - | 0 |
| | Stereo crystallization ratio (Cr) | (%) | 70 | 70 | 70 | - | 0 |
| | Melt viscosity stability | - | ○ | ○ | ○ | × | × |
| Quality of molded articles | Flame retardancy | - | V0 | V0 | V0 | V0 | V0 |
| | Amount of generated gas | ppm | 70 | 70 | 70 | 130 | 70 |
| | Metal contamination | Checked by naked eye | Extremely small change | small change | Extremely small change | Color changed | Extremely small change |
| | Deflection temperature under load (1.82MPa) | (˚C) | 200 or more | 200 or more | 200 or more | 200 or more | 127 |
| | Flexural modulus | (MPa) | 4900 | 4900 | 4900 | 5300 | 4700 |
| pbw: parts by weight C.Ex.: Comparative Example<br>*based on 100 parts by weight of the total of components A and B | | | | | | | |

The abbreviations in Table 17 denote the following.

H1 (inorganic filler): glass fiber (5 mm chopped strand having a diameter of 13 μm: Nippon Electric Glass Co., Ltd.)
I1 (brominated polycarbonate-based flame retardant): (Fire Guard 7500 of Teijin Chemicals Ltd., polymerization degree n = about 5
J1 (antimony-based flame retarding aid): antimony trioxide (PATOX-M of Nippon Seiko Co., Ltd.)
D1 (ester exchange inhibitor):
tris(2,6-di-t-butylphenyl)phosphite

Examples 73 to 79

Resin compositions and molded articles were manufactured in the same manner as in Example 70 except that the types and amounts of the polylactic acid and the additives were changed as shown in Table 18. The physical properties of the resin compositions and molded articles are shown in Table 18. It is understood that the resin compositions of the present invention are excellent in melt viscosity stability and low gas property.

Table 18

| Example | | | Ex. 73 | Ex. 74 | Ex.75 | Ex.76 |
|---|---|---|---|---|---|---|
| Composition | Polylactic acid | Type | scPLA1 | scPLA1 | scPLA1 | scPLA1 |
| | (A)/(B) | Weight ratio | 30/70 | 30/70 | 30/70 | 70/30 |
| | Inorganic filler (H) | Type | H1 | H1 | H1 | H1/H2 |
| | | pbw(*) | 30 | 30 | 30 | 20/0.3 |
| | Bromine-based flame retardant(I) | Type | I2 | I3 | I2/I3 | I4 |
| | | pbw (*) | 15 | 15 | 10/5 | 15 |
| | Antimony-based flame retarding aid (J) | Type | J1 | J1 | J1 | J1 |
| | | pbw (*) | 5 | 5 | 5 | 5 |
| | Ester exchange inhibitor (D) | Type | D1 | D1 | D1 | D1 |
| | | pbw (*) | 0.1 | 0.1 | 0.1 | 0.1 |
| | Hydrotalcite (L) | Type | - | - | - | - |
| | | pbw (*) | - | | - | - |
| Physical properties of composition | Carboxyl group concentration | eq/ton | 20 | 20 | 20 | 20 |
| | Lactide content | ppm by weight | 40 | 40 | 40 | 40 |
| | Stereo crystal rate (S) | | 95 | 95 | 95 | 100 |
| | Stereo crystallization ratio (Cr) | (%) | 85 | 85 | 85 | 90 |
| | Melt viscosity stability | - | ◎ | ◎ | ◎ | ◎ |
| Quality of molded articles | Flame retardancy | - | V0 | V0 | V0 | V0 |
| | Amount of generated gas | wtppm | 50 | 50 | 40 | 50 |
| | Metal contamination | Checked by naked eye | Extremely small change | Extremely small change | Extremely small change | Extremely small change |
| | Deflection temperature under load (1.82MPa) | (°C) | 200 or more | 200 or more | 200 or more | 200 or more |
| | Flexural modulus | (MPa) | 490 | 4900 | 4900 | 5000 |

Ex.: Example
*based on 100 parts by weight of the total of components A and B

Table 18 (continued)

| Example | | | Ex. 77 | Ex. 78 | Ex. 79 |
|---|---|---|---|---|---|
| Composition | Polylactic acid | Type | scPLA2 | scPLA2 | scPLA2 |
| | (A)/(B) | Weight ratio | 70/30 | 30/70 | 30/70 |
| | Inorganic filler (H) | Type | H1/H3 | H1/H2/H3 | H1/H2/H3 |
| | | pbw(*) | 20/5 | 20/0.3/5 | 20/0.3/5 |
| | Bromine-based flame retardant (I) | Type | I2/I3 | I1 | I1 |
| | | pbw (*) | 10/5 | 15 | 15 |
| | Antimony-based flame retarding aid (J) | Type | J1 | J1 | J1 |
| | | pbw (*) | 5 | 5 | 5 |
| | Ester exchange inhibitor (D) | Type | D1 | D1 | D1 |
| | | pbw (*) | 0.1 | 0.1 | 0.1 |
| | Hydrotalcite (L) | Type | - | L1 | L2 |
| | | pbw (*) | - | 1 | 1 |
| Physical properties of composition | Carboxyl group concentration | eq/ton | 20 | 20 | 20 |
| | Lactide content | ppm by weight | 40 | 40 | 40 |
| | Stereo crystal rate (S) | | 95 | 100 | 100 |
| | Stereo crystallization ratio (Cr) | (%) | 85 | 90 | 90 |
| | Melt viscosity stability | - | ◎ | ◎ | ◎ |
| Quality of molded articles | Flame retardancy | - | V0 | V0 | V0 |
| | Amount of generated gas | ppm by weight | 50 | 30 | 30 |
| | Metal contamination | Checked by naked eye | Extremely small change | Extremely small change | Extremely small change |
| | Deflection temperature under load (1.82MPa) | (°C) | 200 or more | 200 or more | 200 or more |
| | Flexural modulus | (MPa) | 5000 | 5000 | 5000 |

Ex.: Example
*based on 100 parts by weight of the total of components A and B

The abbreviations in Table 18 denote the following.

H1 (inorganic filler): glass fiber (5 mm chopped strand having a diameter of 13 μm: Nippon Electric Glass Co., Ltd.)

H2 (inorganic filler): calcium silicate (manufactured by Nakaraitesk Co., Ltd.)
H3 (inorganic filler): talc (P2 of Nippon Talc Co., Ltd.)
I1 (brominated polycarbonate-based flame retardant): (Fire Guard 7500 of Teijin Chemicals Ltd., polymerization degree n = about 5
I2 (brominated epoxy-based flame retardant) : Plasarme EP100 of Dainippon Ink and Chemicals Inc., polymerization degree n = about 16
I3 (brominated polyacrylate): polypentabromobenzyl acrylate manufactured by Dead Sea Bromine Co., Ltd. of Israel; FR1025: molecular weight of about 34,000, polymerization degree = about 60
I4 (brominated polystyrene): Pyrocheck 68PB of Ferro Co., Ltd. of the U.S.
J1 (antimony-based flame retarding aid) : antimony trioxide (PATOX-M of Nippon Seiko Co., Ltd.)
D1 (ester exchange inhibitor): tris(2,6-di-t-butylphenyl)phosphite
D2 (ester exchange inhibitor): tetraphenyl-4,4'-biphenylene phosphite
L1 (hydrotalcite): basic carbonate compound of Mg and Al: DHT-4A·2 of Kyowa Chemical Industries, Co., Ltd.
L2: (hydrotalcite): basic carbonate compound of Zn, Mg and Al (ZHT-4A of Kyowa Chemical Industries, Co., Ltd.)

Examples 80 to 85

The stereocomplex polylactic acid (component B) obtained in each of Production Examples 5 and PBT resin (Duranex 2002 of Win Tech Polymer Co., Ltd.) (component A) were mixed together in a weight ratio shown in Table 19 and dried at 120°C for 5 hours. Thereafter, flame retardants (I, J), an ester exchange inhibitor (D) and an antioxidant (F) shown in Table 19 were mixed in a weight ratio shown in Table 19 and kneaded with the above mixture by a double-screw kneader at a cylinder temperature of 250°C and a feed rate of 2 kg/hr to obtain a resin composition. The physical properties of the obtained resin compositions are shown in Table 19.
The obtained resin compositions were injection molded at a mold temperature of 110°C for a clamping time of 2 minutes to obtain molded articles. The obtained molded articles were white and had a good shape. The qualities of the molded articles are shown in Table 19. As for surface appearance, a molded article which was accepted in terms of glossiness and smoothness was judged as acceptable.
It is understood that the molded articles of the present invention have excellent flame retardancy, light resistance and melt stability and satisfactory surface properties. It is also understood that the antistatic property and light resistance can be further improved by blending an antistatic agent and an optical stabilizer. It is also seen that the resin compositions of the present invention have a short molding cycle.

Comparative Examples 18 and 19

Resin compositions were obtained in the same manner as in Example 1 except that the type and amount of the polylactic acid were changed as shown in Table 19. The physical properties of the obtained resin compositions are shown in Table 19.
The obtained resin compositions were injection molded in the same manner as in Example 1 to obtain molded articles. The qualities of the molded articles are shown in Table 19. The obtained molded articles had a glossiness of 90 % or less and were judged as unacceptable in terms of surface properties.

Table 19 (part 1)

| Example | | | Ex. 80 | Ex. 81 | Ex. 82 | C.Ex.18 | C.Ex.19 | Ex. 83 | Ex. 84 | Ex. 85 |
|---|---|---|---|---|---|---|---|---|---|---|
| composition | Used polylactic acid | type | scPLA1 | scPLA1 | scPLA1 | - | PLLA1 | scPLA1 | scPLA1 | scPLA1 |
| | (A)/(B) | weight ratio | 30/70 | 50/50 | 70/30 | 100/0 | 70/30 | 30/70 | 30/70 | 30/70 |
| | Inorganic filler (H) | type | - | - | - | - | - | - | - | - |
| | | pbw(*) | - | - | - | - | - | - | - | - |
| | Bromine-based flame retardant (I) | type | I1 | I1 | I1 | I1 | I1 | I2 | I2 | I2 |
| | | pbw(*) | 15 | 15 | 15 | 15 | 15 | 15 | 15 | 15 |
| | Antimony-based flame retarding aid (J) | type | J1 | J1 | J1 | J1 | J1 | J2 | J2 | J2 |
| | | pbw(*) | 5 | 5 | 5 | 5 | 5 | 5 | 5 | 5 |
| | Ester exchange inhibitor (D) | type | D1 | D1 | D1 | D1 | D1 | D1 | D1 | D1 |
| | | pbw(*) | 0.1 | 0.1 | 0.1 | 0.1 | 0.1 | 0.1 | 0.1 | 0.1 |
| | Antioxidant (F) | type | F1 | F1 | F1 | F1 | F1 | F1 | F1 | F1 |
| | | pbw(*) | 0.1 | 0.1 | 0.1 | 0.1 | 0.1 | 0.1 | 0.1 | 0.1 |
| | Optical stabilizer (M) | type | - | - | - | - | - | M2 | M1 | M2 |
| | | pbw(*) | - | - | - | - | - | 0.003 | 0.004 | 0.003 |
| | Antistatic agent (N) | type | - | - | - | - | - | N1 | N1 | N2 |
| | | pbw(*) | - | - | - | - | - | 3 | 3 | 3 |
| | Colorant | type | - | - | - | - | - | - | - | titanium oxide |
| | | pbw | - | - | - | - | - | - | - | 1 |

Ex.: Example C.Ex.: Comparative Example
*based on 100 parts by weight of the total of components A and B

Table 19 (part 2)

| | Example | | Ex. 80 | Ex. 81 | Ex. 82 | C.Ex.18 | C.Ex.19 | Ex. 83 | Ex. 84 | Ex. 85 |
|---|---|---|---|---|---|---|---|---|---|---|
| Physical properties of composition | Stereo crystal rate (S) | (%) | 90 | 90 | 90 | - | 0 | 90 | 90 | 90 |
| | Stereo crystallization ratio (Cr) | (%) | 70 | 70 | 70 | - | 0 | 70 | 70 | 70 |
| | Melt stability | - | ◎ | ◎ | ◎ | × | × | ◎ | ◎ | ◎ |
| Quality of article | Light resistance | △E | acceptable | acceptable | acceptable | unacceptable | unacceptable | acceptable | acceptable | acceptable |
| | Antistatic property | - | | | | | | acceptable | acceptable | acceptable |
| | Surface appearance | - | accept -able | acceptable | acceptable | acceptable | acceptable | acceptable | acceptable | acceptable |
| | Flame retardancy | - | V0 | V0 | V0 | V0 | V0 | V0 | V0 | V0 |
| | Flexural modulus | (MPa) | 4900 | 5000 | 5100 | 5500 | 4900 | 5000 | 5000 | 5000 |
| Ex.: Example C.Ex.: Comparative Example | | | | | | | | | | |

The abbreviations in Table 19 denote the following.

I1 (flame retardant): Fire Guard 7500 of Teijin Chemicals Ltd., polymerization degree n = about 5
I2 (flame retardant): EP100 of Dainippon Ink and Chemicals Inc.
J1 (antimony-based flame retarding aid) : antimony trioxide (PATOX-M of Nippon Seiko Co., Ltd.)
J2 (antimony-based flame retarding aid) : antimony pentaoxide (NA1030 of Nissan Chemical Co., Ltd.)
M1 (optical stabilizer) : triazole-based (LA-31 of ADEKA Co., Ltd.)
M2 (optical stabilizer): benzoate-based (Sumisobe 400 of Sumitomo Chemical Co., Ltd.)
N1 (antistatic agent): manufactured by Takemoto Yushi Co., Ltd., sodium dodecylbenzensulfonate mixture, TPL456
N2 (antistatic agent): manufactured by Takemoto Yushi Co., Ltd., tetrabutylphosphonium dodecylbenzensulfonate/PEG mixture, TPL416
D1 (ester exchange inhibitor): tris(2,6-di-t-butylphenyl)phosphite
D2: (ester exchange inhibitor): tetraphenyl-4,4'-biphenylene phosphite
F1 (antioxidant): n-octadecyl
3-(3',5'-di-t-butyl-4'-hydroxyphenyl)-propionate
F2 (antioxidant):
tetrakis[methylene-3-(3',5'-di-t-butyl-4-hydroxypyenyl)p ropionate]methane
Titanium oxide: colorant

Examples 86 to 91

The stereocomplex polylactic acid (component B) obtained in each of Production Examples 5 and PBT resin (Duranex 2002 of Win Tech Polymer Co., Ltd.) (component A) were mixed together in a weight ratio shown in Table 20 and dried at 120°C for 5 hours. Thereafter, an inorganic filler (H), a bromine-based flame retardant (I), an antimony-based flame retarding aid (J), an ester exchange inhibitor (D) and an antioxidant (F) were mixed with the above mixture in a weight ratio shown in Table 20. Further, fibrous PTFE as a dropping inhibitor was added in an amount of 0.5 part by weight based on 100 parts by weight of the total of the components A and B. The resulting mixture was kneaded by a double-screw kneader at a cylinder temperature of 250°C and a feed rate of 2 kg/hr to obtain a resin composition. The physical properties of the obtained resin compositions are shown in Table 20.

The obtained resin compositions were injection molded at a mold temperature of 110°C for a clamping time of 2 minutes to obtain molded articles. The obtained molded articles were white and had a good shape. The evaluation results of the qualities of the molded articles are shown in Table 20. As for surface appearance, a molded article which was accepted in terms of glossiness and smoothness was judged as acceptable.

It has been described in the test item that the compositions of the present invention have excellent solvent resistance. It is understood that, by blending a flame retardant and an inorganic filler, the flame retardancy and light resistance of the composition can be improved, the heat resistance, that is, heat deformation temperature becomes the same level as that of (PBT/glass), the surface appearance is greatly improved, and the molding cycle becomes short. Further, it is easily understood that antistatic property can be provided and light resistance can be further improved by blending an antistatic agent and an optical stabilizer.

Comparative Examples 20 and 21

The polylactic acid and PBT resin (Duranex 2002 of Win Tech Polymer Co., Ltd.) (component A) were mixed together in a weight ratio shown in Table 20 and dried at 120°C for 5 hours like Example 86. Thereafter, an inorganic filler (H), a bromine-based flame retardant (I), an antimony-based flame retarding aid (J), an ester exchange inhibitor (D) and an antioxidant (F) were mixed with the obtained mixture in a weight ratio shown in Table 20. Further, fibrous PTFE as a dropping inhibitor was added in an amount of 0.5 part by weight based on 100 parts by weight of the total of the components A and B, and the resulting mixture was kneaded by a double-screw kneader at a cylinder temperature of 250°C and a feed rate of 2 kg/hr to obtain a resin composition. The physical properties of the obtained resin compositions are shown in Table 20.

The obtained resin compositions were injection molded at a mold temperature of 110°C for a clamping time of 4 minutes (2 minutes when PBT was used as the sole resin component) to obtain molded articles. The physical properties of the obtained molded articles are shown in Table 20.

Table 20 (part 1)

| Example | | | Ex.86 | Ex.87 | Ex.88 | C.Ex. 20 | C.Ex. 21 | Ex.89 | Ex.90 | Ex.91 |
|---|---|---|---|---|---|---|---|---|---|---|
| composition | Used polylactic acid | type | scPLA2 | scPLA2 | | | | scPLA2 | scPLA2 | scPLA2 |
| | (A)/(B) | weight ratio | 30/70 | 50/50 | 70/30 | 100/0 | 50/50 | 30/70 | 30/70 | 30/70 |
| | Inorganic filler (H) | type | H1 | H1 | H1 | H1 | H1 | H1/H3 | H1/H3 | H1/H2/H3 |
| | | pbw(*) | 30 | 30 | 30 | 30 | 30 | 20/5 | 20/5 | 20/0.3/5 |
| | Bromine-based flame retardant (I) | type | I1 | I1 | I1 | I1 | I1 | I2 | I2 | I2 |
| | | pbw(*) | 15 | 15 | 15 | 15 | 15 | 15 | 15 | 15 |
| | Antimony-based flame retarding aid (J) | type | J1 | J1 | J1 | J1 | J1 | J2 | J2 | J2 |
| | | pbw(*) | 5 | 5 | 5 | 5 | 5 | 5 | 5 | 5 |
| | Ester exchange inhibitor (D) | type | D1 | D1 | D1 | D1 | D1 | D1 | D1 | D1 |
| | | pbw(*) | 0.1 | 0.1 | 0.1 | 0.1 | 0.1 | 0.1 | 0.1 | 0.1 |
| | Antioxidant (F) | type F1 | F1 | F1 | F1 | F1 | F1 | F1 | F1 | F1 |
| | | pbw(*) | 0.1 | 0.1 | 0.1 | 0.1 | 0.1 | 0.1 | 0.1 | 0.1 |
| | Optical stabilizer (M) | type | - | - | - | - | - | M2 | M1 | M2 |
| | | pbw(*) | - | - | - | - | - | 0.003 | 0.004 | 0.003 |
| | Antistatic agent (N) | type | - | - | - | - | - | N1 | N1 | N2 |
| | | pbw(*) | - | - | - | - | - | 3 | 3 | 3 |
| | Colorant | type | - | - | - | - | - | - | - | titanium oxid |
| | | pbw | - | - | - | - | - | - | - | 1 |

Ex.: Example C.Ex.: Comparative Example
*based on 100 parts by weight of the total of components A and B

Table 20 (part 2)

| Example | | | Ex.86 | Ex.87 | Ex.88 | C.Ex. 20 | C.Ex. 21 | Ex.89 | Ex.90 | Ex.91 |
|---|---|---|---|---|---|---|---|---|---|---|
| Physical properties of composition | Stereo (S) crystal | (%) | 100 | 100 | 100 | - | 0 | 100 | 100 | 100 |
| | Stereo crystallization ratio (Cr) | (%) | 85 | 85 | 85 | - | 0 | 90 | 90 | 90 |
| | Melt stability | - | ◎ | ◎ | ◎ | × | × | ◎ | ◎ | ◎ |
| Quality of molded articles | Light resistance | ΔE | acceptable | acceptable | acceptable | unacceptable | unacceptable | acceptable | acceptable | acceptable |
| | Antistatic property | - | - | - | - | - | - | acceptable | acceptable | acceptable |
| | Surface appearance | - | acceptable | acceptable | acceptable | acceptable | acceptable | acceptable | acceptable | acceptable |
| | Flame retardancy | | V0 | V0 | V0 | V0 | V0 | V0 | V0 | V0 |
| | Deflection temperature under load (1.82MPa) | (°C) | 200 or more | 200 or more | 200 or more | 200 or more | 130 | 200 or more | 200 or more | 20 or more |
| | Flexural modulus | (MPa) | 4900 | 5000 | 5100 | 5500 | 4900 | 5000 | 5000 | 5000 |

Ex.: Example C.Ex.: Comparative Example

The abbreviations in Table 20 denote the following.

H1 (inorganic filler): glass fiber (5 mm chopped strand having a diameter of 13 μm: Nippon Electric Glass Co., Ltd.)
H2 (inorganic filler): calcium silicate (manufactured by Nakaraitesk Co., Ltd.)
H3: talc (P2 of Nippon Talc Co., Ltd.)
I1 (flame retardant): Fire Guard 7500 of Teijin Chemicals Ltd., polymerization degree n = about 5
I2 (flame retardant): EP100 of Dainippon Ink and Chemicals Inc.
J1 (antimony-based flame retarding aid) : antimony trioxide (PATOX-M of Nippon Seiko Co., Ltd.)
J2 (antimony-based flame retarding aid) : antimony pentaoxide (NA1030 of Nissan Chemical Co., Ltd.)
M1 (optical stabilizer) : triazole-based (LA-31 of ADEKA Co. , Ltd.)
M2 (optical stabilizer): benzoate-based (Sumisobe 400 of Sumitomo Chemical Co., Ltd.)
N1 (antistatic agent): manufactured by Takemoto Yushi Co., Ltd., sodium dodecylbenzensulfonate mixture, TPL456
N2 (antistatic agent) : manufactured by Takemoto Yushi Co., Ltd., tetrabutylphosphonium dodecylbenzensulfonate/PEG mixture, TPL416
D1 (ester exchange inhibitor): tris(2,6-di-t-butylphenyl)phosphite
D2 (ester exchange inhibitor): tetraphenyl-4,4'-biphenylene phosphite
F1 (antioxidant): n-octadecyl
3-(3',5'-di-t-butyl-4'-hydroxyphenyl)-propionate
F2 (antioxidant):
tetrakis[methylene-3-(3',5'-di-t-butyl-4-hydroxypyenyl)p ropionate]methane

Example 92

The pellet obtained in Example 91 was molded by a hot runner injection molding machine at a cylinder temperature of 250 to 265˚C to obtain a fluorescent lamp cap (section diameter of 30 mm, circumference of a center portion of 48 mm) sample and evaluate the properties thereof. The pin hole was 16 mm away from the periphery of the sample and the screw hole was 21 mm away from the periphery of the sample. It has been described that the molded article of the present invention is excellent in flame retardancy, light resistance and melt stability. However, as for the properties of the fluorescent lamp cap, the pin striking strength was 77 kgf, and the tap strength and the deformation resistance were both satisfactory at 50/50.

Effect of the Invention

Since the resin composition of the present invention contains polylactic acid which is a bio-based polymer, its environmental load is small. The resin composition of the present invention has excellent heat resistance with a high melting point. The resin composition of the present invention is excellent in melt stability and hydrolysis resistance. The molded article of the present invention is excellent in mechanical strength, hydrolysis resistance and chemical resistance.

Industrial Applicability

The resin composition of the present invention has excellent heat resistance and hydrolysis resistance and can be used in electronic parts and electric parts.

## Claims

1. A resin composition comprising an aromatic polyester (component A) having a butylene terephthalate skeleton as the main constituent unit and polylactic acid (component B) having a melting point of 190˚C or higher.

2. The resin composition according to claim 1 which comprises 5 to 95 parts by weight of the component A based on 100 parts by weight of the total of the component A and the component B.

3. The resin composition according to claim 1 which comprises a phosphoric acid metal salt represented by the following formula in an amount of 10 ppm to 2 wt%:

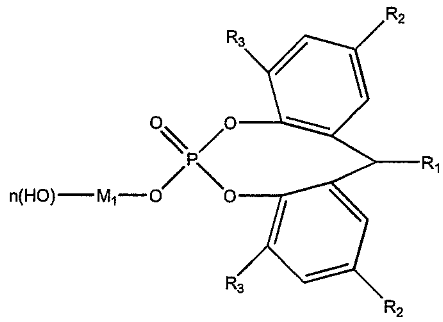

wherein $R_1$ is a hydrogen atom or alkyl group having 1 to 4 carbon atoms, $R_2$ and $R_3$ may be the same or different and each a hydrogen atom or alkyl group having 1 to 12 carbon atoms, $M_1$ is an alkali metal atom, alkali earth metal atom, zinc atom or aluminum atom, n is 0 when $M_1$ is an alkali metal atom, alkali earth metal atom or zinc atom and 1 or 2 when $M_1$ is an aluminum atom.

**4.** The resin composition according to claim 1 which comprises 0.001 to 5 parts by weight of a block forming agent (component C) based on 100 parts by weight of the component B.

**5.** The resin composition according to claim 1 which comprises 0.01 to 5 parts by weight of an ester exchange inhibitor (component D) based on 100 parts by weight of the total of the component A and the component B.

**6.** The resin composition according to claim 1 which comprises 0.01 to 10 parts by weight of a crystal nucleating agent (component E) based on 100 parts by weight of the total of the component A and the component B.

**7.** The resin composition according to claim 1 which comprises 0.01 to 5 parts by weight of an antioxidant (component F) based on 100 parts by weight of the total of the component A and the component B.

**8.** The resin composition according to claim 1 which comprises 0.01 to 50 parts by weight of a polyester elastomer (component G) based on 100 parts by weight of the total of the component A and the component B.

**9.** The resin composition according to claim 1 which comprises 5 to 100 parts by weight of an inorganic filler (component H) based on 100 parts by weight of the total of the component A and the component B.

**10.** The resin composition according to claim 1 which comprises 5 to 80 parts by weight of a bromine-based flame retardant (component I) and 0 to 30 parts by weight of an antimony-based flame retarding aid (component J) based on 100 parts by weight of the total of the component A and the component B.

**11.** The resin composition according to claim 1 which comprises 1 to 100 parts by weight of an amorphous resin (component K) based on 100 parts by weight of the total of the component A and the component B.

**12.** The resin composition according to claim 1 which comprises 0.01 to 5 parts by weight of hydrotalcite (component L) based on 100 parts by weight of the total of the component A and the component B.

**13.** The resin composition according to claim 1 which comprises 0 to 5 parts by weight of an optical stabilizer (component M) based on 100 parts by weight of the total of the component A and the component B.

**14.** The resin composition according to claim 1 which comprises 0.01 to 10 parts by weight of an antistatic agent (component N) based on 100 parts by weight of the total of the component A and the component B.

**15.** The resin composition according to claim 1 which has a stereo crystal rate (S) of 90 % or more, wherein the stereo crystal rate (S) is represented by the following equation (1):

$$S\ (\%) = [(\Delta Hms/\Delta Hms^0)/(\Delta Hmh/\Delta Hmh^0 + \Delta Hms/\Delta Hms^0)] \quad (1)$$

wherein $\Delta Hms^0$ = 203.4 J/g, $\Delta Hmh^0$ = 142 J/g, ΔHms represents the melting enthalpy of the melting point of a stereocomplex and ΔHmh represents the melting enthalpy of a homocrystal.

**16.** The resin composition according to claim 1 which has a stereo crystallization ratio (Cr) of 50 % or more, wherein the stereo crystallization ratio (Cr) is represented by the following equation (2):

$$Cr\ (\%) = \Sigma I_{SCi}/(\Sigma I_{SCi} + I_{HM}) \times 100 \quad (2)$$

wherein $\Sigma I_{SCi}$ and $I_{HM}$ are the intensities of diffraction peaks in the XRD measurement, $\Sigma I_{SCi} = I_{SC1} + I_{SC2} + I_{SC3}$ is the total of integral intensities of diffraction peaks derived from the stereocomplex crystal, $I_{SCi}$ (i = 1 to 3) is the integral intensity of a diffraction peak at 2θ = 12.0˚, 20.7˚ or 24.0˚, and $I_{HM}$ is the integral intensity of a diffraction peak derived from the homocrystal.

**17.** The resin composition according to claim 1 which has a carboxyl group concentration of 15 eq/ton or less.

**18.** The resin composition according to claim 1 which has a lactide content of 0 to 600 ppm by weight.

**19.** A molded article of the resin composition of any one of claims 1 to 18.

**20.** A method of manufacturing a resin composition by mixing an aromatic polyester (component A) having a butylene terephthalate skeleton as the main constituent unit and polylactic acid (component B) having a melting point of 190˚C or higher.

**21.** The manufacturing method according to claim 20,
wherein the component B has a carboxyl group concentration of 15 eq/ton or less.

**22.** The manufacturing method according to claim 20,
wherein the component B has a lactide content of 0 to 700 ppm by weight.

**INTERNATIONAL SEARCH REPORT**

International application No.
PCT/JP2007/065116

A. CLASSIFICATION OF SUBJECT MATTER
*C08L67/04*(2006.01)i, *C08K3/34*(2006.01)i, *C08K5/315*(2006.01)i, *C08K5/51*(2006.01)i, *C08K5/527*(2006.01)i, *C08L67/02*(2006.01)i, *C08L101/16*(2006.01)n

According to International Patent Classification (IPC) or to both national classification and IPC

B. FIELDS SEARCHED

Minimum documentation searched (classification system followed by classification symbols)
C08G63/00-64/42, C08K3/00-13/08, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-63199 A (Mitsubishi Engineering-Plastics Corp.), 09 March, 2006 (09.03.06), Claims 1 to 3; Par. Nos. [0009], [0033] to [0036], [0037], [0039] (Family: none) | 1-22 |
| Y | JP 4-501109 A (E.I. Du Pont De Nemours & Co.), 27 February, 1992 (27.02.92), Claims 1 to 13; examples 1 to 4; tables I to V & WO 1990/003783 A1 & US 4902515 A | 1-22 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 October, 2007 (20.10.07) | 06 November, 2007 (06.11.07) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2007/065116

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-192884 A (Asahi Denka Kogyo Kabushiki Kaisha), 09 July, 2003 (09.07.03), Claims 1 to 10; Par. Nos. [0062], [0069], [0075] & WO 2003/057781 A1 & EP 1460107 A1 & US 2005/1358 A1 | 3,6,12 |
| Y | JP 2002-30208 A (Toray Industries, Inc.), 31 January, 2002 (31.01.02), Claims 1 to 12; Par. No. [0011]; table 1 (Family: none) | 4 |
| Y | JP 2000-336258 A (Polyplastics Co., Ltd.), 05 December, 2000 (05.12.00), Claims 1 to 5, 7; Par. Nos. [0008], [0026] & US 2002/77399 A1 | 8 |
| Y | JP 2003-301096 A (Toyo Seikan Kaisha, Ltd.), 21 October, 2003 (21.10.03), Claims 1 to 12; Par. Nos. [0021] to [0025] (Family: none) | 8 |
| Y | JP 2001-522412 A (Cargil Inc.), 13 November, 2001 (13.11.01), Page 14, line 18 to the last line & WO 1998/050611 A1 & US 6506873 B1 | 17-18,21-22 |
| E,X | JP 2007-191630 A (Teijin Ltd.), 02 August, 2007 (02.08.07), Claims 1 to 13; Par. Nos. [0029], [0037], [0064], [0062], [0075], [0078], [0085], [0088], [0112] to [0113] (Family: none) | 1-4,6-11, 13-16,18-20, 22 |
| E,X | WO 2007/083820 A1 (Teijin Chemicals Ltd.), 26 July, 2007 (26.07.07), Claims 1 to 3, 5 to 28; page 25, line 23 to the last line; page 28, lines 11 to 20; page 29, lines 6 to 14; page 39, lines 14 to 26; page 46, lines 6 to 20; page 49, lines 1 to 12; preparation example 7; example 16 (Family: none) | 1-2,4,6-11, 13-16,19,20 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8104797 A
- JP 2006036818 A
- JP 2003342459 A


### Non-patent literature cited in the description


- *Macromolecules,* 1987, vol. 20, 904-906